# EUROPEAN PATENT APPLICATION

(11) **EP 4 846 840 A1**
(43) Date of publication of application: **02.12.2026**
(21) Application number: 25745222.7
(22) Date of filing: 23.01.2025
(51) Int. Cl.: A01K 1/02, B62B 7/14, A47D 13/02, B62B 9/12

(54) **PET CARRIER, ANCHORING STRUCTURE, SUPPORTING ASSEMBLY AND WHEELED MOVING DEVICE**

(30) Priority: 24.01.2024 CN 202410103529; 18.03.2024 CN 202410311912; 01.04.2024 CN 202410390079; 06.06.2024 US 202463656945 P; 25.07.2024 US 202463675397 P; 20.01.2025 CN 202510088092
(71) Applicant: Jani International Pte. Ltd., Singapore 569874 (SG)
(72) Inventor: CHEN, Yingzhong, Singapore 569874 (SG); GUO, Zhengwen, Singapore 569874 (SG); YUAN, Jialiang, Singapore 569874 (SG); ZHU, Wanquan, Singapore 569874 (SG); LIU, Kwanghao, Singapore 569874 (SG)
(74) Representative: Pfenning, Meinig & Partner mbB
(86) International application number: PCT/SG2025/050053
(87) International publication number: WO 2025/159696

(57) **Abstract**

The present invention relates to a pet carrier, an anchoring structure, a supporting assembly and a wheeled moving device. The anchoring structure is used for the pet carrier. The pet carrier comprises a base and a body arranged on the base. The anchoring structure comprises a connecting assembly and a locking mechanism. The connecting assembly is movably connected to the base and has different locking positions. The locking mechanism is connected to the connecting assembly. The locking mechanism is adapted to mate with the different locking positions to lock the connecting assembly at one of a folded position and an unfolded position.

## Description

### RELATED APPLICATIONS

This application claims priority to Chinese patent application No. 202410103529X, titled "ANIMAL CARRYING DEVICE AND ANCHORING STRUCTURE THEREOF", filed on January 24, 2024, Chinese patent application No. 2024103119124, titled WHEELED MOBILE DEVICE AND SUPPORT ASSEMBLY THEREOF", filed on March 18, 2024, Chinese patent application No. 2024103900797, titled "CARRYING APPARATUS AND STORAGE DEVICE THEREOF", filed on April 1, 2024, Chinese patent application No. 2025100880921, titled "ANIMAL CARRYING DEVICE, ANCHORING STRUCTURE, SUPPORT ASSEMBLY, AND WHEELED MOBILE DEVICE" , filed on January 20, 2025, U.S. patent application No. 63/656,945, filed on June 6, 2024, and U.S. patent application No. 63/675,397, filed on July 25, 2024. The contents of the above identified applications are hereby incorporated herein in their entireties by reference.

### TECHNICAL FIELD

The present application relates to a carrying device, and particularly to an animal carrying device and its anchoring structure, a wheeled mobile device and its support assembly, a carrying apparatus and its storage device, and a transportation system.

### BACKGROUND

The carrying device such as a transportation box can be used for carrying pets. A carry cot can be placed on a vehicle seat for use to facilitate carrying during travel. The anchoring connection assembly (such as an ISOFIX connection assembly) equipped in the existing carry cot generally requires manual folding and unfolding, resulting in inconvenient folding and unfolding operations that significantly degrade the operational experience of the user when using the carry cot.

### SUMMARY

The present disclosure provides an animal carrying device and its anchoring structure. When an operation member of the anchoring structure is operated, a connection assembly of the anchoring structure can be automatically unfolded from a folded position to an unfolded position, significantly improving the convenience for using the animal carrying device equipped with the anchoring structure.

According to an aspect of the present disclosure, an anchoring structure is provided. The anchoring structure is used for an animal carrying device. The animal carrying device includes a base and a body disposed on the base. The anchoring structure includes a connection assembly and a locking mechanism. The connection assembly is movably connected to the base and has different locking portions. The locking mechanism is connected to the connection assembly and is configured to be engaged with the different locking portions, so that the connection assembly is locked in one of a folded position and an unfolded position.

In an embodiment, the anchoring structure further includes a first reset member. The first reset member connects the connection assembly and the base and is configured to switch the connection assembly to the unfolded position. When the locking mechanism is operated, the connection assembly is switched from the folded position to the unfolded position under an action of the first reset member.

In an embodiment, the connection assembly is rotatably connected to the base, and an angle between a rotation axis of the connection assembly around which the connection assembly rotates relative to the base and the base is an acute angle or a right angle.

In an embodiment, the angle between the rotation axis of the connection assembly and the base is an acute angle, and when the connection assembly is at the unfolded position, the connection assembly is inclined downward with respect to the base.

In an embodiment, the different locking portions include a first locking portion and a second locking portion, and the locking mechanism includes a locking component and an operation member. The locking component is movably disposed on the base and is configured to be engaged with either the first locking portion or the second locking portion. The operation member is disposed on the base and connected to the locking component. The operation member can drive the locking component to move. When the connection assembly is locked at the folded position, the operation member can be operated to move the locking component, so that the locking component is disengaged from the first locking portion and is engaged with the second locking portion of the connection assembly to lock the connection assembly at the unfolded position.

In an embodiment, the connection assembly includes an engaging hook and an engagement reset member. The engaging hook is pivotable between a locking position and an unlocking position. The engagement reset member is configured to hold the engaging hook in the unlocking position. When the connection assembly is locked at the unfolded position and the engaging hook is at the locking position, the operation member can be operated to switch the engaging hook to the unlocking position under an action of the engagement reset member.

In an embodiment, the locking component is provided with a locking protrusion, and the first locking portion is a first locking recess provided on the connection assembly. When the connection assembly is at the folded position, the locking protrusion is engaged with the first locking recess to lock the connection assembly at the folded position.

In an embodiment, the second locking portion is a second locking recess provided on the connection assembly. When the connection assembly is at the unfolded position, the locking protrusion is configured to be engaged with the second locking recess for limiting in position, and an external force applied to the connection assembly causes the locking protrusion to disengage from the second locking recess.

In an embodiment, the base has an accommodation space, a folding space, and a through hole in communication with both the accommodation space and the folding space. The locking component is movably disposed in the accommodation space, and the connection assembly is pivotally connected to the base. When the connection assembly is at the unfolded position, the connection assembly is accommodated within the folding space and the locking protrusion passes through the through hole and is engaged with the second locking recess. When the connection assembly is at the folded position, the connection assembly is accommodated in the folding space, and the locking protrusion passes through the through hole and is engaged with the first locking recess.

In an embodiment, the operation member is slidably disposed in the base, and the locking mechanism further includes a linkage member and a first traction assembly. The linkage member is movably connected to the base. The linkage member is movably connected to the operation member and connected to the locking component via the first traction assembly. When the operation member moves relative to the base, the operation member drives the linkage member to move, and the linkage member drives the movement of the locking component through the first traction assembly.

In an embodiment, the linkage member includes a connection arm, a traction arm, and a pivot portion located between the connection arm and the traction arm. The pivot portion is pivotally connected to the base, the connection arm is movably connected to the operation member, and the traction arm is connected to the first traction assembly. An extension direction of the connection arm is not parallel to an extension direction of the traction arm.

In an embodiment, one of the operation member and the linkage member is provided with a connection protrusion, and the other of the operation member and the linkage member is provided with a connection groove. An extension direction of the connection groove is not parallel to an extension direction of the operation member. The connection protrusion passes through the connection groove and is movable in an extension direction of the connection groove.

In an embodiment, the first traction assembly includes a first traction member and a first sheath sleeved on the first traction member. The first traction member has an end connected to the linkage member, and another end connected to the locking component. The base is provided with a guide structure, and at least a portion of the first traction assembly is arranged along the guide structure to change movement directions of both ends of the first traction member.

In an embodiment, the locking component is movable between a locking position and an unlocking position. When the locking component is at the locking position, the locking component is engaged with the first locking portion to lock the connection assembly at the folded position; or when the locking component is at the locking position, the locking component is engaged with the second locking portion to lock the connection assembly at the unfolded position.

In an embodiment, the locking mechanism further includes a second reset member and a third reset member. The second reset member abuts against the locking component to move the locking component toward the locking position. The third reset member is connected between the operation member and the base, and provides an elastic restoring force for the operation member to allow the operation member to return to an initial position.

In an embodiment, the connection assembly is connected to the operation member via a second traction assembly. The connection assembly has a locked state in which the connection assembly can be locked with an anchor bar provided in a vehicle seat and an unlocked state in which the connection assembly is separable from the anchor bar. When the connection assembly is in the locked state, the operation member can drive the connection assembly to switch from the locked state to the unlocked state through the second traction assembly.

In an embodiment, the locking mechanism further includes a linkage member pivotally connected to the base. The linkage member is movably connected to the operation member. The second traction assembly includes a second traction member and a second sheath sleeved on the second traction member. The second traction member has an end detachably connected to the linkage member, and another end connected to the connection assembly.

In an embodiment, the locking component is provided with a limiting channel for the second traction member to pass through. The limiting channel extends through the locking component in a movement direction of the locking component. The second traction member passes through the limiting channel and the through hole of the base and extends into the folding space of the base, thereby connecting to the connection assembly.

In an embodiment, the connection assembly includes a housing, an engaging hook, an engagement reset member, and a release component. The housing is movably disposed on the base. The engaging hook is pivotally connected inside the housing and has a locking position and an unlocking position. The engagement reset member abuts against the engaging hook to pivot the engaging hook toward the unlocking position. The release component is configured to be engaged with the engaging hook to limit the engaging hook at the locking position. The release component is movably disposed in the housing and connected to the second traction assembly, such that the release component is driven by the second traction assembly to disengage from the engaging hook, thereby allowing the engaging hook to pivot to the unlocking position under the action of the engagement reset member.

In an embodiment, the engaging hook is provided with an abutting portion, and the release component includes a release block and a limiting rod disposed on the release block. The release block is slidably disposed in the housing and drives the limiting rod to move. The limiting rod is configured to abut against the abutting portion to limit the engaging hook at the locking position.

In an embodiment, the release block is movable between a first position and a second position. When the release block is at the first position, the limiting rod abuts against the abutting portion; and when the release block is at the second position, the limiting rod disengages from the abutting portion, and the release block is abutted against the abutting portion and is held at the second position.

In an embodiment, the release block is slidably connected to the housing via a sliding pin. The release block is provided with a sliding groove for the sliding pin to pass through. The sliding groove extends in a straight line, and both ends of the sliding pin are fixedly connected to the housing.

In an embodiment, the release block is slidably connected to the housing via the sliding pin, and a release reset member is further disposed between the release block and the sliding pin. The release reset member is configured to bias the release block to move the release block toward the engaging hook.

According to another aspect of the present disclosure, an anchoring structure is provided. The anchoring structure is configured for an animal carrying device. The animal carrying device includes a base and a body disposed on the base. The anchoring structure includes a connection assembly and a locking mechanism. The connection assembly is movably connected to the base and can be switched between different positions. The locking mechanism is connected to the connection assembly and has an operation member. When the operation member is operated, the connection assembly makes different action responses corresponding to different positions of the connection assembly.

In an embodiment, the different positions include a folded position and an unfolded position. The connection assembly has a locked state in which the connection assembly can be locked with an anchor bar provided in a vehicle seat and an unlocked state in which the connection assembly is separable from the anchor bar. Upon the operation member is operated when the connection assembly is at the folded position, the connection assembly is switched from the folded position to the unfolded position. Upon the operation member is operated when the connection assembly is at the unfolded position, the connection assembly is switched from the locked state to the unlocked state or is kept in the unlocked state.

According to yet another aspect of the present disclosure, an animal carrying device is provided. The animal carrying device includes a base, a body, and the anchoring structure according to any of the preceding embodiments. The body is disposed on the base and forms a carrying space together with the base.

In the aforementioned animal carrying device and its anchoring structure, the locking mechanism is engaged with different locking portions of the connection assembly to lock the connection assembly in different positions. This enables simpler and faster use of the anchoring structure, thereby significantly improving the convenience for using the anchoring structure and the animal carrying device.

The present disclosure provides a wheeled mobile device and its support assembly. The support assembly can be configured for various carriers, allowing for quick mounting of various carriers onto or removal from a frame.

According to an aspect of the present disclosure, a support assembly is provided for mounting on a frame. The support assembly includes a support frame and an engagement member. The support frame is configured to support a carrier and is provided with a connection groove. The connection groove is configured to be inserted by an anchoring assembly of a carrier. The engagement member is disposed on the support frame and at least partially received within the connection groove. The engagement member is configured to be engaged with the anchoring assembly, so as to at least partially lock the anchoring assembly within the connection groove.

In an embodiment, the engagement member is an engagement pin, and the engagement pin passes through the support frame. The anchoring assembly is provided with an engaging hook configured to be engaged with the engagement pin. An extension direction of the engagement pin is perpendicular to an insertion direction in which the anchoring assembly is inserted into the connection groove.

In an embodiment, the support frame has a support plane, and an angle between the support plane and an insertion direction in which the anchoring assembly is inserted into the connection groove is an obtuse angle.

According to another aspect of the present disclosure, a support assembly is provided for mounting on a frame. The frame is provided with a connection base, and the support assembly includes a support frame and a locking mechanism. The support frame is provided with a mounting base configured to be engaged with the connection base. The locking mechanism includes a locking member. The locking member is movably disposed on one of the mounting base and the connection base and is movable relative thereto in a first direction, so as to allow the locking member to switch between a locking position and an unlocking position. When the locking member is at the locking position, the locking member is engaged with the other of the mounting base and the connection base to restrict the mounting base from being separated from the connection base. The engagement direction in which the mounting base engages with the connection base is not parallel to the first direction.

In an embodiment, the locking member is provided with a locking member and a limiting protrusion portion. The other of the mounting base and the connection base is provided with a locking hole. When the locking member is at the locking position, the locking portion is configured to pass through a pass-through channel provided on the mounting base and at least partially extend into the locking hole. When the locking member is at the unlocking position, the locking portion retracts from the locking hole. The limiting protrusion portion is limited within the mounting base and is provided with a sliding groove, and the mounting base is provided with a guide protrusion that is slidably fitted with the sliding groove.

In an embodiment, the locking mechanism includes a first locking mechanism and a second locking mechanism. The locking member of the first locking mechanism is movably disposed on the mounting base, and the locking member of the second locking mechanism is movably disposed on the connection base.

In an embodiment, the locking mechanism further includes a release member, which can be operated and is movable relative to the mounting base in a second direction. One of the release member and the locking member is provided with a driving pin, and the other of the release member and the locking member is provided with a driving inclined slot. The driving pin passes through the driving inclined slot and can move in an extension direction of the driving inclined slot. The extension direction of the driving inclined slot is not parallel to both the first direction and the second direction, and the first direction is not parallel to the second direction.

In an embodiment, the release member is provided with an accommodation groove, and the locking mechanism further includes a reset member. The reset member is disposed within the accommodation groove, and has an end abutting against the locking member and another end abutting against a bottom of the accommodation groove. The reset member constantly urges the release member to return to an initial position, thereby driving the locking member toward the locking position by the release member.

In an embodiment, one of the connection base and the mounting base is provided with a mounting groove. The mounting groove has a lower end forming an opening for the other of the connection base and the mounting base to be inserted into the mounting groove. The other of the connection base and the mounting base is provided with an abutting protrusion. When the connection base is engaged with the mounting base, the abutting protrusion abuts against the opening of the mounting groove.

According to yet another aspect of the present disclosure, a wheeled mobile device is provided. The wheeled mobile device includes a frame and the support assembly according to any of the preceding embodiments.

By providing the connection groove configured to be inserted by an anchoring assembly of a carrier and the engagement member, the wheeled mobile device and its support assembly provided according to the embodiments of the present disclosure enable a user to quickly mount the carrier on the frame or remove the carrier from the frame as needed. This not only enhances convenience for a user, but also expands the usage modes of the carrier, thereby increasing the versatility of carriers in application.

Furthermore, the support assembly can be configured for different types of carriers. By changing the types of carriers, various requirements by users can be met, increasing the versatility of the wheeled mobile device.

The present application provides a carrying apparatus and a storage device thereof. The storage device can enhance the convenience for using the carrying apparatus, thereby meeting pet owners' expectations for practicality and ease of use.

The present application provides a storage device mounted on a carrying apparatus body. The storage device includes a first storage rack configured to be connected to the carrying apparatus body. The first storage rack includes a first storage member and a cover. The first storage member is hollow for storing a to-be-taken object and is provided with a first opening and a second opening. The cover is movably disposed at the first opening, such that the cover has a first use position and a second use position. When the cover is in the first use position, the cover covers the first opening; when the cover is at the second use position, the first opening is exposed, allowing a user to place the to-be-taken object inside. The second opening is configured for a portion of an edge of the to-be-taken object to extend therethrough, so as to facilitate being pulled by the user.

In the aforementioned storage device, the first storage member is designed to be hollow and is provided with a first opening. This allows users to place the to-be-taken object inside the first storage member through the first opening. Additionally, the first storage member is provided with a second opening, which allows a portion of an edge of the to-be-taken object to extend therethrough, and enables users to easily pull the to-be-taken object from the second opening as needed. For example, when the to-be-taken object is a roll of garbage bags, its end can extend through the second opening, allowing users to directly tear off the garbage bags from the second opening. Furthermore, since the cover is movably provided at the first opening, the cover can be switched between a first use position and a second use position. When the cover is at the first use position, it can cover the first opening. Therefore, after the to-be-taken object is stored in the first storage member, the cover can be kept at the first use position. When the user pulls the to-be-taken object downward through the second opening at any time, the cover can effectively prevent the to-be-taken object from being popped off due to uneven pulling force, thereby avoiding separation of the to-be-taken object from the first storage member. In summary, the design of the storage device fully considers both the convenience for storing and accessing the to-be-taken object, and also ensures the stability of the to-be-taken object during use, preventing the to-be-taken object from falling off due to improper operation, and improving convenience for using the carrying apparatus.

In an embodiment, a side wall of the first storage member is provided with a first engagement portion. The cover includes a pivot portion and a second engagement portion and is pivotally connected to the first storage rack via the pivot portion. When the cover is pivoted to the first use position, the second engagement portion is engaged with the first engagement portion, restricting the cover from switching to the second use position.

In an embodiment, one of the first engagement portion and the second engagement portion is an elastic arm, and the other is an engagement opening. The elastic arm is provided with a limiting protrusion that is engaged with the engagement opening.

In an embodiment, a side of the cover facing away from the first opening is provided with an operation member. When the cover is at the first use position, the operation member protrudes from a surface of the cover.

In an embodiment, the first engagement portion is the engagement opening, and a side wall of the first storage member on which the engagement opening is provided is referred to as a mating wall. The operation member includes an operation side wall with a notch, and the second engagement portion is the elastic arm disposed at the notch. The elastic arm has an operation end and a locking end, with the limiting protrusion located at the locking end. When the cover is at the first use position, the operation side wall is arranged opposite to the mating wall, the operation end at least partially protrudes beyond the first opening, and the locking end extends into the first opening to be engaged with the engagement opening.

In an embodiment, the first opening and the second opening are arranged opposite to each other, with the second opening facing ground.

In an embodiment, the first storage rack further includes a second storage member, which is hollow and has a third opening. An edge of a wall of the third opening is provided with a first limiting baffle.

In an embodiment, the storage device further includes a second storage rack configured to be connected to the carrying apparatus. The second storage rack has a third storage member, which is hollow and has a fourth opening. An edge of a wall of the fourth opening is provided with a second limiting baffle.

In an embodiment, the storage device further includes a supporting member. The first storage rack and the second storage rack are connected to two pushing rods of the carrying apparatus body respectively, and the supporting member is connected between the first storage rack and the second storage rack.

The present application also provides a carrying apparatus, including a carrying apparatus body and the aforementioned storage device. The storage device is connected to a pushing rod of the carrying apparatus body.

The present application further provides a transportation system for carrying a pet carrier. The transportation system includes a frame having a first rod; and a carrying assembly including a supporting member, a first connecting part, a second connecting part, and a locking device. The supporting member is configured to support the pet carrier. The first connecting part is connected to the second connecting part and is slidably connected to the frame. The second connecting part is configured to be connected to the pet carrier. The locking device is disposed on the first connecting part and can lock or unlock with the frame. The carrying assembly is movable along the first rod.

In an embodiment, the first rod has a plurality of holes configured to receive the locking device when the first connecting part moves along the first rod.

In an embodiment, the second connecting part has a connection groove configured to receive an anchor of the pet carrier.

In an embodiment, the locking device further includes a first actuating part on a first side of the first connecting part, a second actuating part on a second side of the first connecting part, each of the first actuating part and the second actuating part including a protruding part; and a resilient member positioned between the first actuating part and the second actuating part. The first actuating part is pivotable and movable about a first axis, and the second actuating part is pivotable and movable about a second axis. The protruding parts of the first actuating part and the protruding part of the second actuating part are each receivable in the plurality of holes of the first rod to lock the locking device on the frame.

In an embodiment, the supporting member of the carrying assembly is detachable.

In an embodiment, the first connecting part further includes a first sliding base and a second sliding base, and the second connecting part further includes a first connecting base and a second connecting base. The first sliding base and the second sliding base are connected to the first connecting base and the second connecting base, respectively, and are independently movable along the frame.

In an embodiment, the first connecting part and the second connecting part of the carrying assembly are detachably connected.

In an embodiment, the first connecting part has a connector protruding inwardly, and the second connecting part has a mounting groove. The connector is configured to be connected with the mounting groove.

The present application further provides a transportation system for carrying a pet carrier. The transportation system includes a frame, and a seat assembly including a supporting member and a connecting part. The supporting member is movably connected to the connecting part and is switchable between a use position and a storage position. the connecting part is connected to the frame. When the supporting member is at the use position, the supporting member is configured to support a pet carrier.

In an embodiment, the frame has a first rod, and the supporting member is a pivotable supporting frame capable of pivotally moving relative to the connecting part. When the supporting member is at the storage position, the supporting member can be received in a recess provided on the first rod.

In an embodiment, the carrying assembly includes a limiting member disposed on the connecting part and switchable between a closed position and an open position. When the limiting member is at the closed position, the limiting member holds the supporting member stationary.

### BRIEF DESCRIPTION OF THE DRAWINGS

The accompanying drawings, which constitute a part of the present application, are provided to further illustrate the present application. The schematic embodiments of the present application and description for the embodiments are intended to explain the present application and shall not be construed as unduly limiting the present application.

In order to illustrate the technical solutions in the embodiments of the present disclosure more clearly, the drawings used in the embodiments will be described briefly. Apparently, the following described drawings are merely for the embodiments of the present disclosure, and other drawings can be derived from these drawings by those of ordinary skill in the art without any creative effort.

Furthermore, the drawings are not drawn to a 1:1 scale, and the relative dimensions of each component in the drawings are depicted only exemplarily, not necessarily according to their actual proportions. In the drawings:
Figure 1 shows a perspective view of an animal carrying device according to an embodiment of the present disclosure, with a connection assembly at a folded position.
Figure 2 shows a perspective view of the animal carrying device in Figure 1, with the connection assembly at an unfolded position.
Figure 3 shows a perspective view of a base and an anchoring structure of the animal carrying device in Figure 1, with the connection assembly at the unfolded position.
Figure 4 shows a perspective view of the base configured with the anchoring structure in Figure 3 after removal of a first cover, with an operation member at an initial position.
Figure 5 shows a perspective view of the base configured with the anchoring structure in Figure 3 after removal of a first cover, with the operation member at a driving position.
Figure 6 shows a bottom view and a partial enlarged view of the base configured with the anchoring structure in Figure 3 after removal of a second cover, with the operation member at the initial position and the connection assembly at the folded position.
Figure 7 shows a section view and a partial enlarged view of the base configured with the anchoring structure in Figure 3.
Figure 8 shows a section view and a partial enlarged view of the base configured with the anchoring structure in Figure 7 when the connection assembly is at the folded position.
Figure 9 shows a section view and a partial enlarged view of the base configured with the anchoring structure in Figure 3 taken along line U1-U1, with the connection assembly in a locked state.
Figure 10 shows a section view and a partial enlarged view of the base configured with the anchoring structure in Figure 3 taken along line U1-U1, with the connection assembly in an unlocked state.
Figure 11 shows a perspective view of a connection assembly according to an embodiment of the present disclosure.
Figure 12 shows a perspective view of a limiting member according to an embodiment of the present disclosure.
Figure 13 shows a rear view of the limiting member in Figure 12.
Figure 14 shows a perspective view of a release block according to an embodiment of the present disclosure.
Figure 15 shows a perspective view of the release block in Figure 14 from another viewing angle.

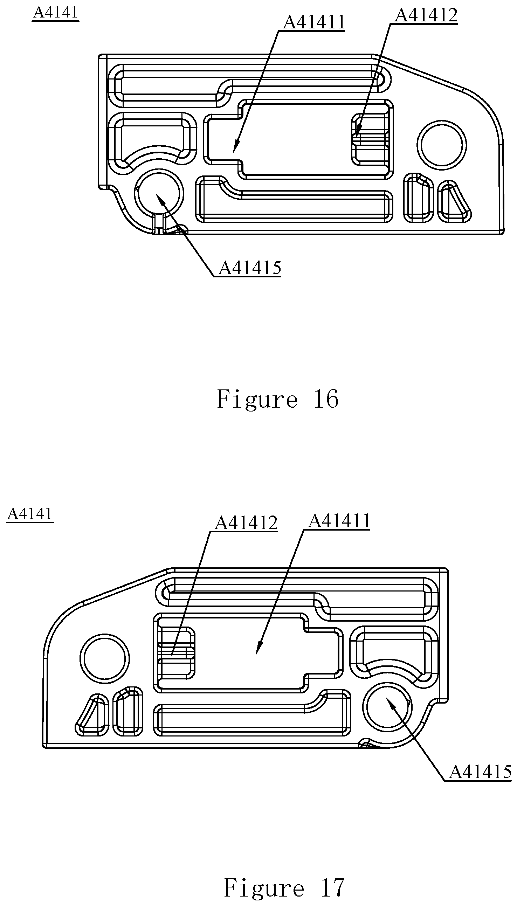

Figure 16 shows a front view of the release block in Figure 14.
Figure 17 shows a rear view of the release block in Figure 14.
Figure 18 shows an enlarged view of the portion S1 in Figure 4.
Figure 19 shows an enlarged view of the portion S2 in Figure 5.
Figure 20 shows a perspective view of a wheeled mobile device according to a first embodiment of the present disclosure.
Figure 21 shows a perspective view of the wheeled mobile device in Figure 20 after removal of a carrier.
Figure 22 shows an exploded view of the wheeled mobile device in Figure 21.
Figure 23 shows a perspective view of a carrier according to a first embodiment of the present disclosure.
Figure 24 shows a section view of the carrier according to the first embodiment of the present disclosure during mounting onto a support assembly.
Figure 25 shows a section view of the carrier of the wheeled mobile device in Figure 24 after mounting onto the support assembly.
Figure 26 shows an exploded view of the wheeled mobile device according to a second embodiment of the present disclosure after removal of the carrier.
Figure 27 shows an exploded view of a support assembly according to the second embodiment of the present disclosure.
Figure 28 shows an exploded view of a locking member and a connection base of the support assembly in Figure 27 from another viewing angle.
Figure 29 shows a perspective view of a wheeled mobile device according to a third embodiment of the present disclosure, with the wheeled mobile device being configured with two different carriers in different ways.
Figure 30 shows a side view of the wheeled mobile device according to a third embodiment, with the wheeled mobile device being configured with two identical carriers in the same way.
Figure 31 shows a side view of the wheeled mobile device according to a third embodiment of the present disclosure, with the wheeled mobile device being configured with two different carriers in different ways.
Figure 32 shows a perspective view of the wheeled mobile device in Figure 31 after removal of one of the carriers.
Figure 33 shows an exploded view of the wheeled mobile device in Figure 32.
Figure 34 shows a schematic structural view of the wheeled mobile device in Figure 32 after the support assembly is sectioned along line U2-U2.
Figure 35 shows a perspective view of a frame according to a third embodiment of the present disclosure.
Figure 36 shows a perspective view of a support assembly according to a third embodiment of the present disclosure.
Figure 37 shows a perspective view of the support assembly in Figure 36 from another viewing angle, with an upper housing being removed.
Figure 38 shows an enlarged view of the portion A in Figure 34.
Figure 39 shows a perspective view of a carrying apparatus according to an embodiment of the present application, with the cover at a first use position.
Figure 40 shows an enlarged schematic structural view of the circled portion B in Figure 39.
Figure 41 shows a perspective view of a carrying apparatus according to an embodiment of the present application, with the cover at a second use position.
Figure 42 shows an enlarged schematic structural view of the circled portion C in Figure 40.
Figure 43 shows a perspective view of a carrying apparatus according to an embodiment of the present application from another viewing angle, with the cover at the second use position.
Figure 44 shows an enlarged schematic structural view of the circled portion D in Figure 43.
Figure 45 shows a bottom view of a carrying apparatus according to an embodiment of the present application.
Figure 46 shows an exploded perspective view of a transportation system including a pet carrier and a stroller according to an embodiment.
Figure 47 shows a perspective view of a stroller according to an embodiment.
Figure 48A shows an enlarged section view of a locking device of the stroller in Figure 47 in a locked state, taken along line U3-U3.
Figure 48B shows an enlarged section view of the locking device of the stroller in Figure 47 in an unlocked state, taken along line U3-U3.
Figure 49 shows a side view of the stroller in Figure 47 including the pet carrier, taken along line U4-U4.
Figure 50 shows a side view of a stroller according to an embodiment.
Figure 51 shows a perspective view of a stroller according to an embodiment.
Figure 52 shows an exploded perspective view of the stroller in Figure 51 according to an embodiment.
Figure 53 shows a perspective view of a stroller according to an embodiment.
Figure 54 shows an exploded perspective view of the stroller in Figure 53 according to an embodiment.
Figure 55 shows a perspective view of a stroller according to an embodiment.
Figure 56 shows an exploded perspective view of the stroller in Figure 55 according to an embodiment.
Figure 57 shows a perspective view of the stroller in Figure 55 at an upwardly pivoted position according to an embodiment.
Figure 58 shows a partial enlarged view of the circled portion E in the stroller of Figure 57 according to an embodiment.
Figure 59 shows a perspective view of the stroller in Figure 55 at a downwardly pivoted position according to an embodiment.
Figure 60 shows a perspective view of the stroller in Figure 55 at a use position according to an embodiment.
Figure 61 shows a perspective view of the stroller in Figure 55 including a pet carrier according to an embodiment.
Figure 62 shows a perspective view of the stroller in Figure 55 at a stored position according to an embodiment.

### List of Reference Signs:

A1000, animal carrying device; A100, body; A120, left side portion; A130, right side portion; A140, front side portion; A160, rear side portion; A170, top portion; A180, carry handle; A200, base; A201, first limiting groove; A202, second limiting groove; A203, accommodation space; A204, through hole; A205, engagement opening; A206, locking pin; A207, pivot shaft; A208, second hook portion; A210, first cover; A220, second cover; A221, operation port; A222, operation recess; A260, folding space; A270, guide structure; A271, first guide portion; A272, second guide portion; A273, guide groove; A274, guide protrusion; A280, pivot limiting portion; A400, anchoring structure; A410, connection assembly; A411, housing; A4111, first locking recess;
A4112, a second locking recess; A41111, abutting wall; A41112, bottom wall of the first locking recess;
A41121, guide wall; A41122, pushing wall; A4113, pivot end; A4114, receive groove; A4115, fixed protrusion;
A4117, limiting groove; A412, engaging hook; A4121, abutting portion; A4122, engaging groove; A4123, locking wall surface; A4124, pushing wall surface; A4125, engaged opening; A413, engagement reset member;
A414, release component; A4141, release block; A41411, sliding groove; A41412, second protrusion; 41413, first groove; A41414, second groove; A41415, second connection hole; A4142, limiting rod; A415, sliding pin;
A416, release reset member; A417, pivot pin; A430, locking mechanism; A431, locking component; A4311, locking protrusion; A43111, first portion; A43112, second portion; A43113, stepped surface; A43114, abutting surface; A4312, locking groove; A4313, accommodation groove; A4314, first protrusion; A4315, first connection hole; A4316, limiting channel; A4317, first recess; A4318, second recess; A4319, communication opening; A432, operation member; A4321, connection groove; A4322, operation portion; A4323, operation connection portion; A4324, first hook portion; A434, linkage member; A4341, traction arm; A43411, first traction hole; A43412, first slot; A43413, second traction hole; A43414, second slot; A4342, connection arm;
A43421, connection protrusion; A4343, pivot portion; A435, first traction assembly; A4351, first traction member; A4352, first end fitting of the first traction member; A4353, second end fitting of the first traction member; A4354, first sheath; A436, reset member; A437, reset member; A438, second traction assembly;
A4381, second traction member; A4382, first end fitting of the second traction member; A4383, second end fitting of the second traction member; A4384, second sheath; A440, reset member; X1, rotation axis; B1000, wheeled mobile device; B100, frame; B110, front support rod; B112, front cross rod; B118, connection part; B120, rear support rod; B122, rear cross rod; B130, upper support rod; B140, handle; B151, front wheel;
B152, rear wheel; B190, connection base; B191, abutting protrusion; B192, connection protrusion; B190A, first connection base; B190B, second connection base; B200, support assembly; B210, support frame; B21A, first support; B21B, second support; B211, support housing; B211A, upper housing; B211B, lower housing;
B213, support plane; B212, connection groove; B2121, first groove section; B2122, second groove section;
B2123, lower side wall of the first groove section; B2124, lower side wall of the second groove section; B214, accommodation protrusion; B22, engagement member; B220, engagement pin; B230, mounting base; B231, first base; B2311, guide protrusion; B2312, guide groove; B2313, abutting surface; B232, second base; B233, first pivot base; B234, second pivot base; B235, mounting groove; B239, pass-through channel; B240, locking mechanism; B241, locking member; B2411, locking portion; B2412, limiting protrusion portion; B2413, sliding groove; B2414, guide rib; B2415A, wedge surface; B2415B, wedge surface; B2416, receiving groove;
B2419, driving pin; B242, release member; B2421, driving inclined slot; B2422, accommodation groove;
B243, reset member; B244, locking hole; B240A, first locking mechanism; B241A, locking member; B243A, reset member; B244A, locking hole; B240B, second locking mechanism; B241B, locking member; B244B, locking hole; B250, engagement channel; B25A, first engagement channel; B25B, second engagement channel; B261, locking component; B261A, first locking component; B261B, second locking component;
B300, carrier; B301, folding space; B302, carrying space; B310, body; B320, base; B330, anchoring assembly;
B331, housing; B3311, receive groove; B332, engaging hook; B3321, hook portion; B3322, pushing portion;
B3323, engaging groove; B333, retaining assembly; B334, operation member; B335, reset member; B339, engagement rod; W1, insertion direction; W2, engagement direction; D1, first direction; D2, second direction; θ3, angle; X2, rotation axis;
C1000, carrying apparatus; C100, carrying apparatus body; C110, handle frame; C111, pushing rod; C112, handrail rod; C113, special-shaped engaged groove; C120, front wheel frame; C121, front rod; C122, front crossbar; C130, rear wheel frame; C131, rear rod; C132, rear crossbar; C140, connection base; C200, storage device; C210, first storage rack; C211, first storage member; C2111, first opening; C2112, second opening;
C212, cover; C2121, pivot portion; C2122, second engagement portion; C21221, operation end; C21222, locking end; C2123, limiting protrusion; C21231, guiding slope; C213, operation member; C2131, operation side wall; C3132, notch; C214, second storage member; C2141, third opening; C215, first limiting baffle;
C2151, first through-hole; C216, engaging portion; C220, second storage rack; C221, third storage member;
C2211, fourth opening; C222, second limiting baffle; C2221, second through-hole; C230, supporting member;
C300, to-be-taken object; C301, a roll of garbage bags; F1, first direction;
D1000, transportation system; D100, stroller; D100a, frame; D110, handle; D110a, left handle; D110b, right handle; D111, first rod; D1111, handle rod; D1112, sleeve rod; D11121, hole; D11122, groove; D120, front leg rod; D130, rear leg rod; D140, carrying assembly; D141, supporting member; D1411, side rod; D1412, connecting rod; D142, first connecting part; D142a, first sliding base; D142b, second sliding base; D1421, connector; D143, second connecting part; D143a, first connecting base; D143b, second connecting base;
D1431, connection groove; D1432, engagement member; D1433, mounting groove; D144, locking device;
D1441, actuating part; D14411, protruding part; D14412, finger; D1441a, first actuating part; D1441b, second actuating part; D1442, resilient member; D145, connecting part; D1451, base body; D146, limiting member;
D200, pet carrier; D210, anchor.

### DETAILED DESCRIPTION

To make the objectives, technical solutions, and advantages of the present disclosure clearer and more comprehensible, the present disclosure will now be further described in detail with reference to the accompanying drawings and specific embodiments. It should be understood that the specific embodiments described herein are merely illustrative of the present disclosure and do not limit the scope of protection of the present disclosure.

It should be noted that when an element is referred to as being "fixed to" another element, it can be directly on the other element or an intervening element may be present. When an element is considered to be "connected" to another element, it can be directly connected to the other element or an intervening element may be further present. The terms "perpendicular", "horizontal", "left", "right", and similar expressions used herein are for illustrative purposes only and do not represent the only embodiments.

Unless otherwise defined, all technical and scientific terms used herein have the same meaning as commonly understood by those skilled in the art to which the present application pertains. The terms used in the specification of the present application are merely for the purpose of describing specific embodiments and are not intended to limit the present application. The term "and/or" used herein includes any and all combinations of one or more of the associated listed items.

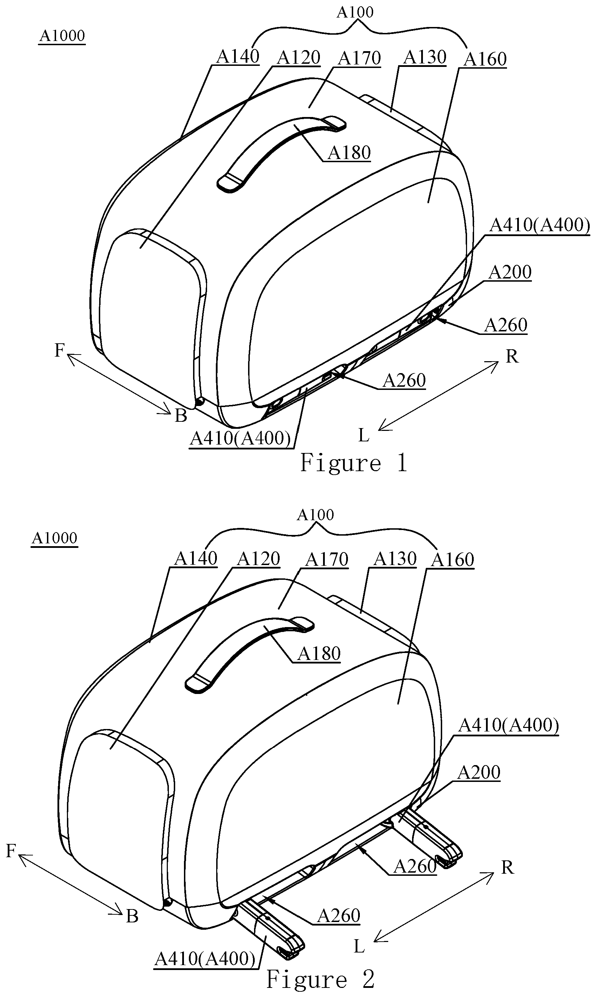

The present disclosure provides an anchoring structure A400 and an animal carrying device A1000 configured with the anchoring structure A400. Figures 1 and 2 show perspective views of the animal carrying device A1000 according to an embodiment of the present disclosure. The anchoring structure A400 of the animal carrying device A1000 in Figure 1 is in a folded state, and the anchoring structure A400 of the animal carrying device A1000 in Figure 2 is in a use state. Hereinafter, the animal carrying device A1000 will be described together with the anchoring structure A400.

As shown in Figure 1, the animal carrying device A1000 may be, but is not limited to, a carry cot, pet crate, pet basket, pet bag, or the like. The animal carrying device A1000 has a carrying space for accommodating an animal. The animal carrying device A1000 may be fixed to a vehicle seat or carried around (e.g., held by a hand, carried on the back, etc.). The animal carrying device A1000 includes a body A100 and a base A200. The body A100 is disposed on the base A200, and forms the carrying space with the base A200. The base A200 is, for example, made of a rigid material to support the body A100, and the body A100 may include a fabric sheet and other materials enclosing the carrying space.

As shown in Figures 1 and 2, the body A100 has a front side portion A140, a left side portion A120, a right side portion A130, and a rear side portion A160. The front side portion A140 forms a front side wall of the carrying space, the left side portion A120 forms a left side wall of the carrying space, the right side portion A130 forms a right side wall of the carrying space, and the rear side portion A160 forms a rear side wall of the carrying space. In some embodiments, a bottom wall of the carrying space is formed by the base A200, and the front side portion A140, left side portion A120, right side portion A130, and rear side portion A160 are directly connected to the base A200. In some alternative embodiments, the body A100 has a bottom portion, which is fixed on the base A200 and forms the bottom wall of the carrying space.

It should be noted that, unless otherwise expressly specified or limited, the directional terms such as "front", "rear", "left", and "right" with reference to the animal carrying device A1000 in the embodiments of the present disclosure are based on the orientations shown in the drawings. In the drawings, the arrows L and R schematically designate the "left" and "right" directions respectively, and the arrows F and B schematically designate the "front" and "rear" directions respectively. These directional terms are used solely for the purpose of clearly describing the embodiments of the present disclosure and are not intended to unduly limit the scope of protection of the present disclosure.

As shown in Figures 1 to 2, the animal carrying device A1000 is equipped with a carry handle A180. The animal carrying device A1000 is provided with a top portion A170, which forms a top wall of the carrying space, and the carry handle A180 is provided on the top portion A170 of the body A100. This allows the animal carrying device A1000 to be conveniently held via the carry handle A180.

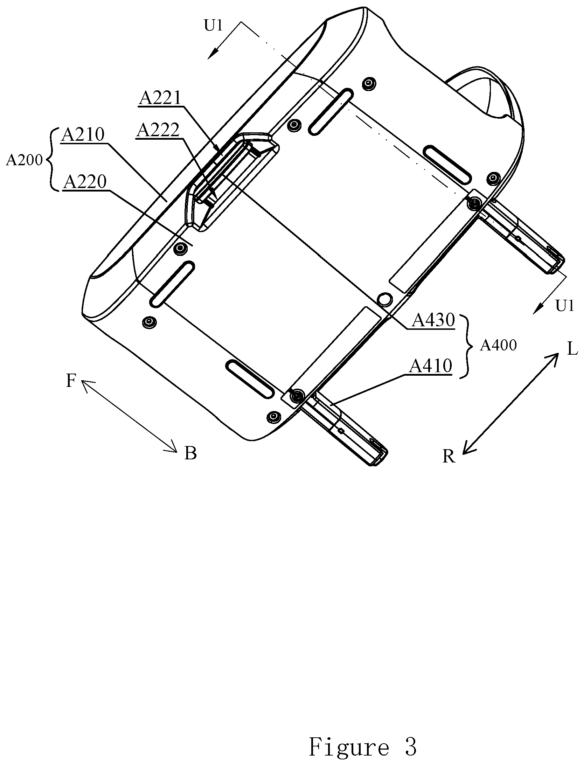

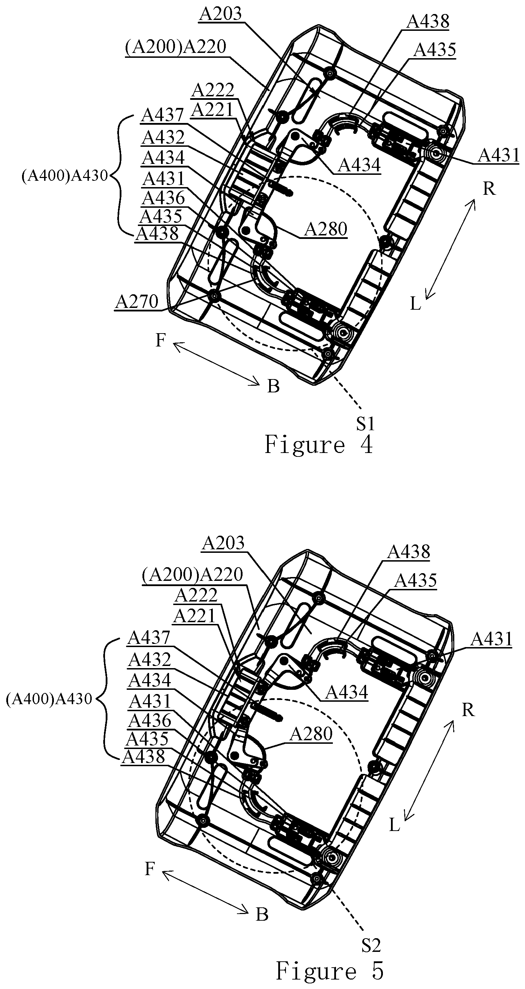

As shown in Figure 3, in an embodiment, the base A200 includes a first cover A210 and a second cover A220, which are detachably connected to each other. The second cover A220 forms a lower bottom surface of the base A200. The lower bottom surface of the base A200 is a flat plane, to place the animal carrying device A1000 on a vehicle seat. With reference to Figures 4 to 6, 18, and 19, in an embodiment, the first cover A210 and the second cover A220 together form an accommodation space A203. The second cover A220 forms a bottom wall of the accommodation space A203, and the first cover A210 forms a top wall of the accommodation space A203. The anchoring structure A400 is at least partially accommodated within the accommodation space A203. This not only prevents the anchoring structure A400 from interfering with objects in the carrying space, thereby improving comfort of the carrying space, but also provides a simple, cleaner and more aesthetically pleasing appearance of the animal carrying device A1000.

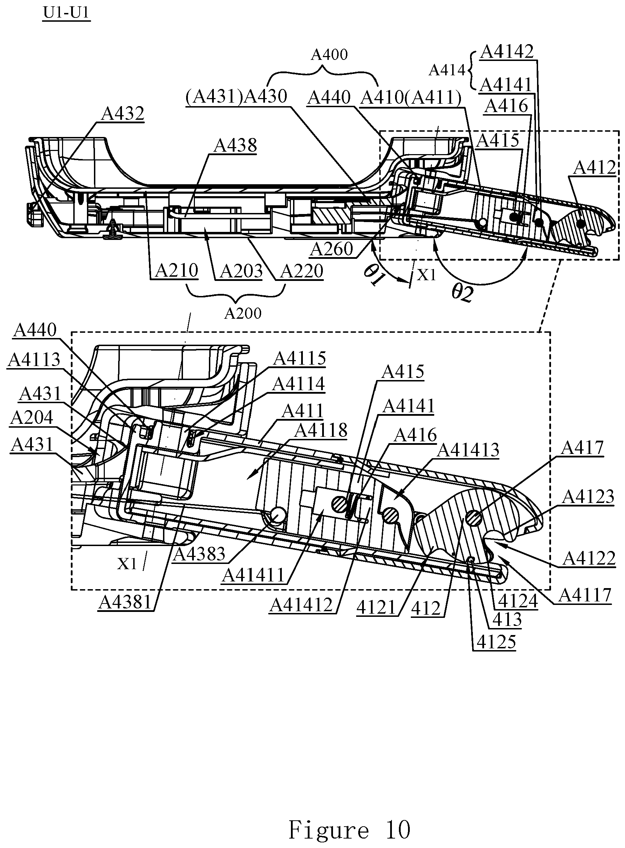

The anchoring structure A400 is configured to be connected to a vehicle seat to fix the animal carrying device A1000 to the vehicle seat. As shown in Figures 3 to 5, in an embodiment, the anchoring structure A400 includes a connection assembly A410, a locking mechanism A430, and a reset member A440 (see Figure 10). The connection assembly A410 is configured to be connected to an anchor bar of the vehicle seat (not shown in the drawings). For example, the connection assembly A410 is an ISOFIX connector. The connection assembly A410 has the following different states: a locked state, in which the connection assembly A410 can be locked with the anchor bar of the vehicle seat, and an unlocked state, in which the connection assembly A410 can be separated from the anchor bar. When the connection assembly A410 is not locked with the anchor bar, the connection assembly A410 is kept in the unlocked state. During the process of locking with the anchor bar, the connection assembly A410 is driven by the anchor bar to switch into the locked state. The connection assembly A410 is movably connected to the base A200 to switch between an unfolded position (also can be referred to as a use position) and a folded position. When the connection assembly A410 is at the folded position, it is in the unlocked state.

With reference to Figures 4 to 6, 18, and 19, the locking mechanism A430 is connected to the connection assembly A410. The connection assembly A410 has a first locking portion and a second locking portion. The locking mechanism A430 is configured to be engaged with different locking portions to lock the connection assembly A410 at either the folded position or the unfolded position. When the locking mechanism A430 is engaged with the first locking portion, the connection assembly A410 is locked at the folded position. When the locking mechanism A430 is engaged with the second locking portion, the connection assembly A410 is locked at the unfolded position.

The reset member A440 is disposed between the connection assembly A410 and the base A200 to switch the connection assembly A410 toward the unfolded position. When the connection assembly A410 is at the folded position, the operation of the locking mechanism A430 can enable the connection assembly A410 to be unlocked, such that the connection assembly A410 can be automatically popped from the folded position to the unfolded position under an action of the reset member A440 (e.g., a torsion spring).

When the connection assembly A410 is switched to the unfolded position and in the locked state, the operation of the locking mechanism A430 can enable the connection assembly A410 to automatically switch from the locked state to the unlocked state, thereby allowing the connection assembly A410 to be separated from the anchor bar. When the connection assembly A410 is switched to the unfolded position and in the unlocked state, the connection assembly A410 does not make any action responses even if the locking mechanism A430 is operated, that is, the connection assembly A410 remains unchanged in the unlocked state and at the unfolded position.

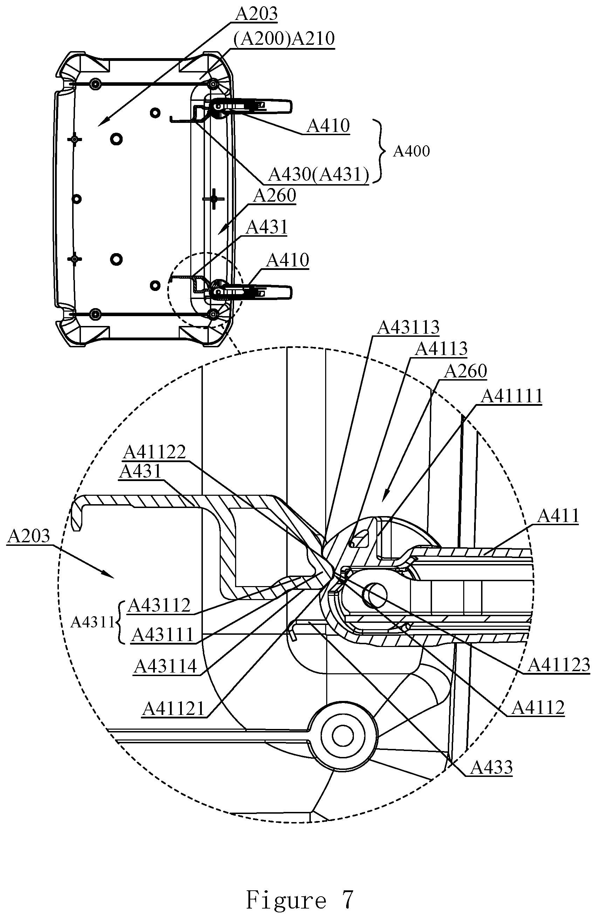

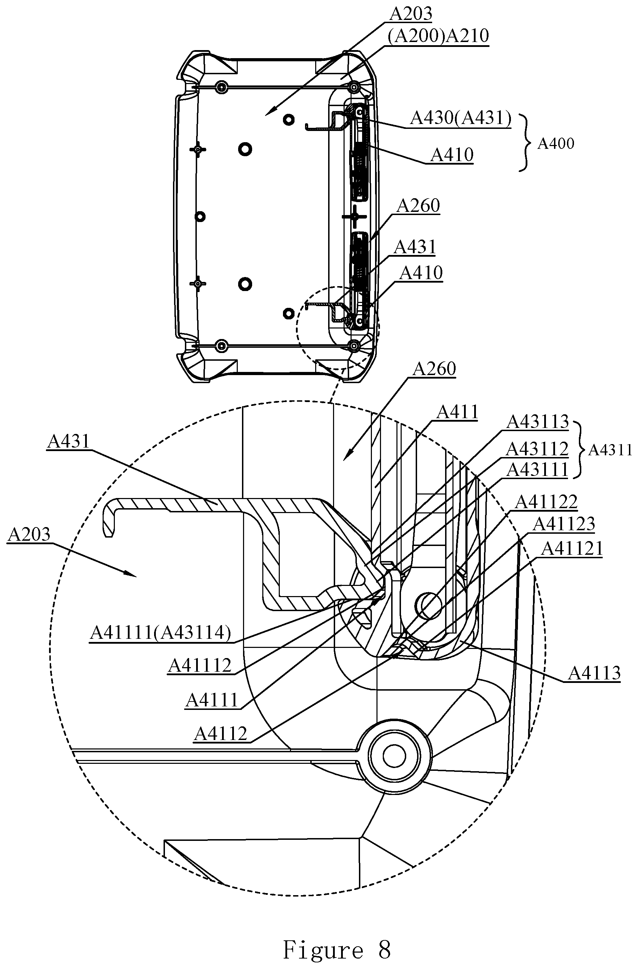

At least one connection assembly A410 is provided. The locking mechanism A430 is connected to each connection assembly A410. As shown in Figures 7 and 8, the base A200 is provided with at least one folding space A260. When at least one connection assembly A410 is at the folded position (i.e., when the anchoring structure A400 is in the folded state), the at least one connection assembly A410 is accommodated within the at least one folding space A260. When at least one connection assembly A410 is at the unfolded position (i.e., when the anchoring structure A400 is in the use state), the at least one connection assembly A410 can extend out of the at least one folding space A260 to be connected to at least one anchor bar of the vehicle seat. With reference to Figures 4 to 6, 18, and 19, in this embodiment, the at least one folding space A260 is formed in the first cover A210. Therefore, the connection assembly A410 is not visible in Figures 4 and 5. Optionally, the base A200 is provided with one folding space A260, and the at least one connection assembly A410 is accommodated within the folding space A260. Alternatively, the base A200 is provided with a plurality of folding spaces A260, and each connection assembly A410 is disposed in a corresponding folding space A260, respectively. The base A200 is further provided with a through hole A204 in communication with both the accommodation space A203 and the at least one folding space A260. This allows at least a portion of the locking mechanism A430 to pass through the through hole A204 and be engaged with the connection assembly A410. The quantity of through hole A204 is in conformity with the quantity of connection assembly A410.

As shown in Figures 7 and 8, at least one connection assembly A410 is pivotally connected to a rear portion of the base A200, respectively, and at least one folding space A260 is disposed on the rear portion of the base A200, respectively. At least a portion of the locking mechanism A430 is movably disposed on the front portion of the base A200, but is not limited thereto. A portion of the base A200 away from the connection assembly A410 is the front portion of the base A200. This facilitates operation of the locking mechanism A430. Specifically, the front portion of the base A200 forms a front side surface of the base A200. The front side surface of the base A200 transitions continuously to an outer surface of the front side portion A140 of the body A100, meaning that the front side surface of the base A200 is at least partially flush with the outer surface of the front side portion A140. The rear portion of the base A200 forms a rear side surface of the base A200. The rear side surface of the base A200 transitions continuously to an outer surface of the rear side portion A160 of the body A100, meaning that the rear side surface of the base A200 is at least partially flush with the outer surface of the rear side portion A160.

As shown in Figures 1 and 2, two connection assemblies A410 are provided, with each pivotally connected to the rear side surface of the base A200. Two folding spaces A260 are provided and arranged at intervals in the left-right direction. In this embodiment, folding spaces A260 are recessed grooves formed in the rear side surface of the base A200, and the through holes A204 extend through a bottom wall of the folding spaces A260. When both connection assemblies A410 are at the folded position, they are respectively received in their respective folding spaces A260. For example, the outer surfaces of the connection assemblies A410 upon being folded are flush with the outer surface of the base A200.

In other embodiments, the anchoring structure A400 may include two or more connection assemblies A410, and two or more folding spaces A260 are provided. The two or more connection assemblies A410 may be connected to two or more anchor bars of the vehicle seat respectively.

As shown in Figures 7 to 9, two connection assemblies A410 rotate in opposite directions to each other and from the folded position to the unfolded position, or from the unfolded position to the folded position. The rotation angles of the two connection assemblies A410 do not exceed 90 degrees, and the rotation axes X1 of the two connection assemblies A410 relative to the base A200 are parallel to each other. In some alternative embodiments, the two connection assemblies A410 may rotate in the same direction to switch to either the unfolded position or the folded position.

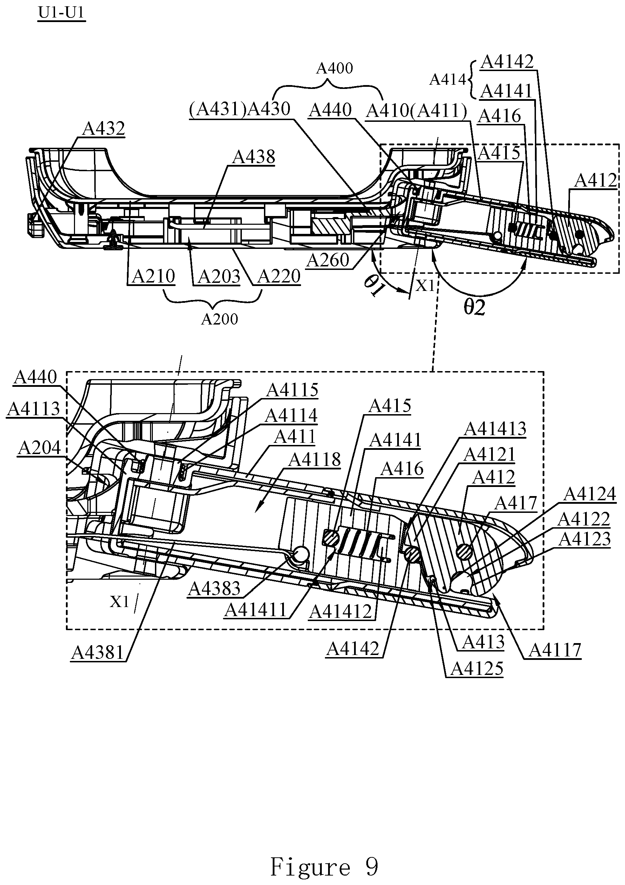

For ease of description, the connection assembly A410 at the left-side is taken as an example hereafter for illustration. As shown in Figures 9 and 10, an angle θ1 between the rotation axis X1 of the connection assembly A410 around which the connection assembly rotates relative to the base A200 and the base A200 is an acute angle. When the connection assembly A410 is at the unfolded position, it is inclined downward with respect to the base A200. That is, the angle θ2 between the connection assembly A410 and the base A200 is an obtuse angle. This can facilitate the insertion of the connection assembly A410 into the anchor bar of the vehicle seat. It should be noted that the angle θ1 between the rotation axis X1 of the connection assembly A410 and the base A200 refers to an angle between the rotation axis X1 and the lower bottom surface of the base A200. The angle θ2 between the connection assembly A410 and the base A200 refers to an angle between the extension direction of the connection assembly A410 and the lower bottom surface of the base A200.

As shown in Figures 4, 5, 18, and 19, in an embodiment, the locking mechanism A430 includes a locking component A431 and an operation member A432. The locking component A431 is movably disposed on the base A200 and has a locking position and an unlocking position. The operation member A432 is operably disposed in the base A200 and connected to the locking component A431. When the connection assembly A410 is at different positions, it will make different actions in response to the operation of the operation member A432. That is, upon the operation member A432 is operated, the connection assembly A410 makes different actions in response to different positions of the connection assembly A410. Specifically, upon the operation member A432 is operated when the connection assembly A410 at the folded position, the connection assembly A410 is switched from the folded position to the unfolded position. That is, movement of the operation member A432 causes the locking component A431 to switch from the locking position to the unlocking position, thereby disengaging the connection assembly A410 from the locking component A431. In other words, upon the operation member A432 is operated when the connection assembly A410 is at the folded position, the connection assembly A410 is switched from the folded position to the unfolded position. Upon the operation member A432 is operated when the connection assembly A410 is at the unfolded position, the connection assembly A410 is switched from the locked state to the unlocked state, or kept in the unlocked state and at the unfolded position. In other words, upon the operation member A432 is operated when the connection assembly A410 is at the unfolded position, the connection assembly A410 is either switched from the locked state to the unlocked state or kept in the unlocked state.

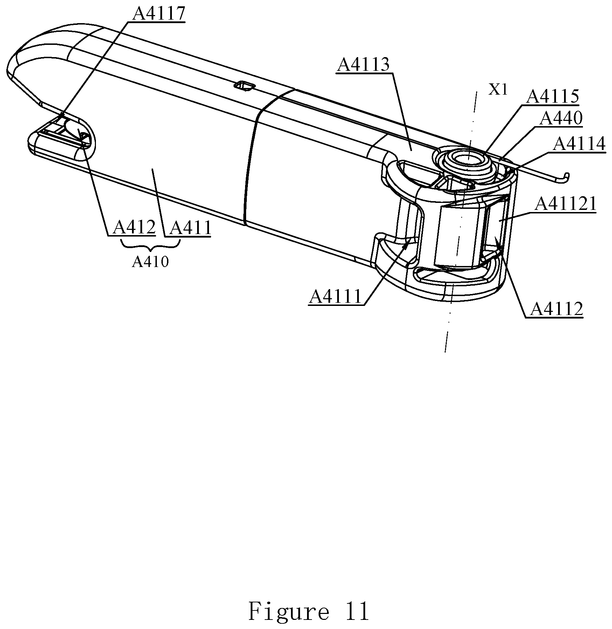

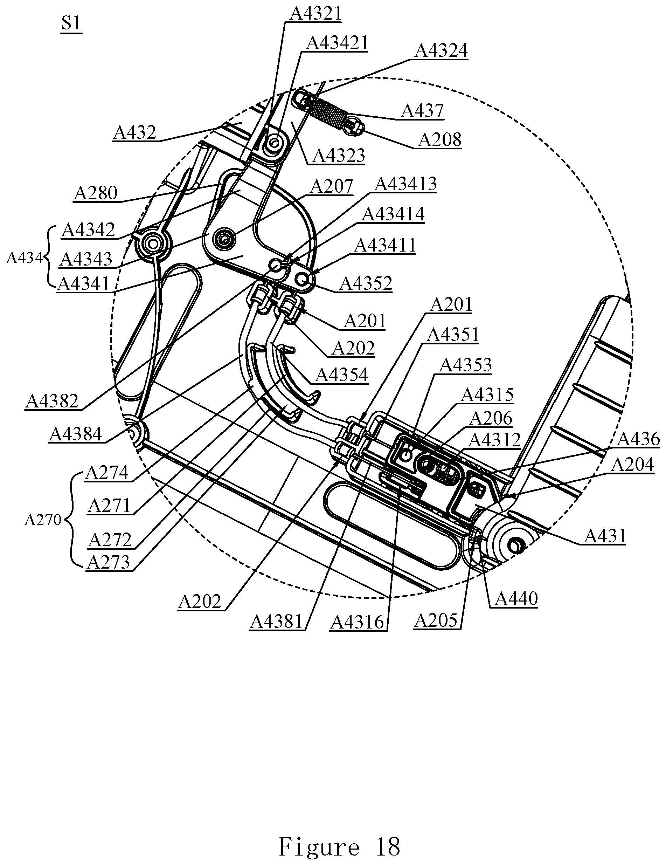

With reference to Figures 9 and 11, the reset member A440 is, for example, a torsion spring. The reset member A440 has an end abutting against the connection assembly A410, and another end engaging with the base A200. Specifically, the base A200 is provided with an engagement opening A205 (see Figure 18) that is in communication with the folding space A260 (see Figure 7) and extends through a side wall of the folding space A260. The reset member A440 passes through the engagement opening A205 and is engaged with the side wall of the folding space A260.

As shown in Figures 4, 5, 9, 18, and 19, in an embodiment, the locking component A431 is slidably disposed on the base A200 and movable relative to the base A200 between a locking position and an unlocking position. The movement direction of the locking component A431 is substantially parallel to the front-rear direction. The connection assembly A410 rotates in a plane that forms an acute angle with respect to the horizontal plane. That is, an angle between the plane in which the rotational trajectory of the connection assembly A410 lies and the horizontal plane is an acute angle. The connection assembly A410 rotates about the rotation axis X1 relative to the base A200. An angle between a movement direction of the locking component A431 and the rotation axis X1 is an acute angle. In this embodiment, the base A200 is provided with a locking pin A206. The locking pin A206 is detachably disposed on either the first cover A210 or the second cover A220 of the base A200, fixedly disposed on either the first cover A210 or the second cover A220, or formed integrally with either the first cover A210 or the second cover A220. The locking component A431 is provided with a locking groove A4312 through which the locking pin A206 passes. The extension direction of the locking groove A4312 is parallel to the movement direction of the locking component A431.

As shown in Figures 8 and 9, in an embodiment, the locking component A431 is provided with a locking protrusion A4311, and the first locking portion is a first locking recess A4111 disposed on the connection assembly A410. The locking protrusion A4311 is configured to be engaged with the first locking recess A4111. Specifically, the locking protrusion A4311 is configured to pass through the through hole A204 and engage with the first locking recess A4111, thereby locking the connection assembly A410 at the folded position.

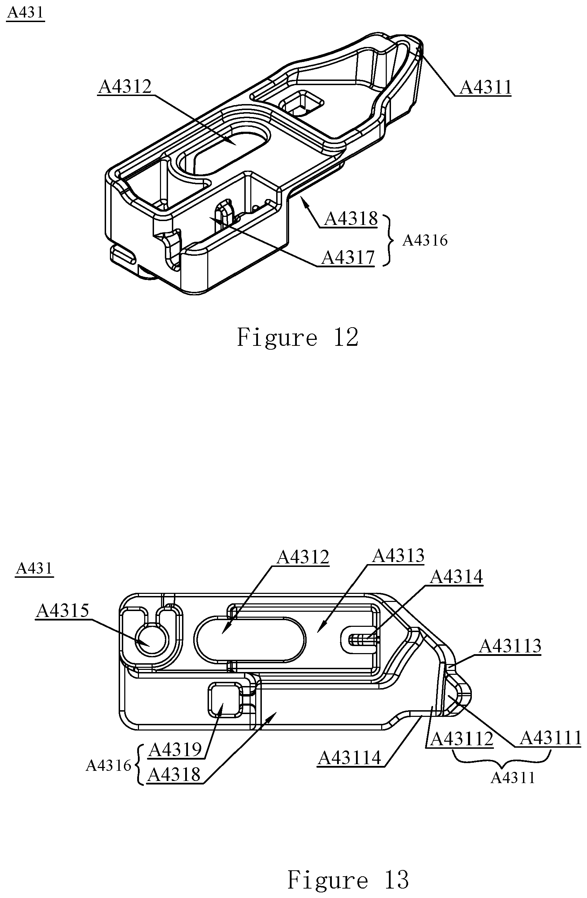

A side wall of the first locking recess A4111 is substantially perpendicular to the bottom wall A41112 of the first locking recess A4111, and forms an abutting wall A41111. An angle between another side wall of the first locking recess A4111 and a bottom wall A41112 of the first locking recess A4111 is an obtuse angle. With reference to Figure 13, the locking protrusion A4311 includes a first portion A43111 and a second portion A43112. A stepped surface A43113 is formed between the second portion A43112 and the first portion A43111. A side of the second portion A43112 away from the stepped surface A43113 forms an abutting surface A43114, and the abutting surface A43114 is substantially parallel to the movement direction of the locking component A431.

Referring to Figure 8, in the state where the locking protrusion A4311 is engaged with the first locking recess A4111, the first portion A43111 is received within the first locking recess A4111. In this case, the abutting surface A43114 abuts against the abutting wall A41111, and the stepped surface A43113 abuts against the outer side surface of the connection assembly A410. This can restrict the rotation of the connection assembly A410, thereby locking the connection assembly A410 at the folded position. That is, it is surface-to-surface abutting in this case, making it difficult to disengage the locking protrusion A4311 from the first locking recess A4111 by applying an external force. Therefore, even if an external force is applied to the connection assembly A410, the connection assembly A410 remains unable to rotate to the unfolded position.

As shown in Figures 7, 8 and 11, the second locking portion is a second locking recess A4112 disposed on the connection assembly A410. Referring to Figure 7, when the connection assembly A410 is at the unfolded position, the second locking recess A4112 is configured to be engaged with the locking protrusion A4311 to limit the connection assembly A410. Specifically, the first portion A43111 of the locking protrusion A4311 is engaged with the second locking recess A4112 for limitation. In this case, when an external force is applied to rotate the connection assembly A410 toward the folded position, the connection assembly A410 can drive the locking component A431 to move toward an unlocking position, thereby causing the locking protrusion A4311 to withdraw from the second locking recess A4112. In this embodiment, the engagement between the second locking recess A4112 and the locking protrusion A4311 for limitation enables more stable restricting the connection assembly A410 at the unfolded position, preventing the connection assembly A410 from switching to the folded position due to accident operation.

Referring to Figure 7, a side wall of the second locking recess A4112 is formed as a guide wall A41121, and an angle between the guide wall A41121 and a bottom wall A41123 of the second locking recess A4112 is an obtuse angle. An opposite side wall of the second locking recess A4112 is formed as a pushing wall A41122, and an angle between the pushing wall A41122 and the bottom wall A41123 of the second locking recess A4112 is an obtuse angle. The pushing wall A41122 is closer to the abutting wall A41111 of the first locking recess A4111 than the guide wall A41121. During rotation of the connection assembly A410 from the unfolded position to the folded position, the pushing wall A41122 pushes against the first portion A43111, and the first portion A43111 slides along the guide wall A41121 and moves in a direction away from the connection assembly A410 (i.e., toward the unlocking position), thereby causing the locking protrusion A4311 to withdraw from the second locking recess A4112 and be abutted by an arc surface of the connection assembly A410. When the connection assembly A410 just rotates to the folded position, the locking protrusion A4311 directly faces the first locking recess A4111 and is not abutted against the arc surface of the connection assembly A410. The locking component A431 automatically returns to the locking position, allowing the locking protrusion A4311 to engage with the first locking recess A4111.

As shown in Figures 4 to 6, 18, and 19, the locking mechanism A430 further includes a reset member A436, which abuts against the locking component A431 to switch the locking component A431 to the locking position. This allows the locking component A431 to automatically return to the locking position under an action of the reset member A436. The reset member A436 is, for example, a compression spring, but is not limited thereto. The reset member A436 is disposed between the locking pin A206 and the locking component A431. With reference to Figure 13, the locking component A431 is provided with an accommodation groove A4313, which is in communication with the locking groove A4312. In this embodiment, the projections of the accommodation groove A4313 and the locking groove A4312 on a horizontal plane (i.e., the bottom surface of the base A200) at least partially overlap. A first protrusion A4314 is provided at an end of the accommodation groove A4313 away from the locking groove A4312. The reset member A436 is disposed within the accommodation groove A4313. The reset member A436 has an end sleeved on the first protrusion A4314, and another end abutting against the locking pin A206, such that it can prevent the reset member A436 from deviating during compression.

Referring to Figures 4 to 6, 18, and 19 again, in an embodiment, the locking mechanism A430 further includes a linkage member A434 and a first traction assembly A435. The operation member A432 is connected to the locking component A431 via the linkage member A434 and the first traction assembly A435. Optionally, the operation member A432 is connected to the locking component A431 through other driving structures, or the operation member A432 is directly connected to the locking component A431, but is not limited thereto in the present application.

With continued reference to Figures 4 to 6, 18, and 19, the operation member A432 is movably disposed on the front portion of the base A200, and the linkage member A434 is movably connected to the base A200. The linkage member A434 is movably connected to the operation member A432 and is connected to the locking component A431 via the first traction assembly A435. When the operation member A432 moves relative to the base A200, it drives the linkage member A434 to move, and the linkage member A434 drives the locking component A431 to switch from the locking position to the unlocking position via the first traction assembly A435. In this embodiment, the linkage member A434 is pivotally connected to the base A200. When the operation member A432 is operated, it drives the linkage member A434 to rotate. In an alternative embodiment, the linkage member A434 is movably connected to the base. When the operation member A432 is operated, it drives the linkage member A434 to move.

As shown in Figures 4, 5, 6, 18, and 19, the operation member A432 is movable between a driving position and an initial position, with its movement direction being substantially parallel to the front-rear direction. During the movement of the operation member A432 from the initial position to the driving position, the operation member A432 drives the linkage member A434 to pivot, and the linkage member A434 drives the locking component A431 to move from the locking position to the unlocking position via the first traction assembly A435. In this embodiment, the front portion of the base A200 is provided with an operation port A222, which is in communication with the accommodation space A203. Specifically, a second cover A220 of the operation member A432 is provided with an operation recess A221, and the operation port A222 extends through a side wall of the operation recess A221, thereby causing the operation recess A221 in communication with the accommodation space A203. The operation member A432 is inserted at the operation port A222. The operation member A432 includes an operation portion A4322 and an operation connection portion A4323. The operation connection portion A4323 is accommodated in the accommodation space A203 and movably connected to the linkage member A434, and the operation portion A4322 is accommodated in and protrudes laterally from the operation recess A221. This allows limiting the operation portion A4322 within the operation recess A221 through the mutual abutment between the side wall of the operation recess A221 and the operation portion A4322, preventing the operation portion A4322 from retracting into the accommodation space A203 and thereby facilitating forward pulling of the operation portion A4322.

As shown in Figures 4 to 6,18, and 19, in an embodiment, the locking mechanism A430 further includes a reset member A437. The reset member A437 has an end connected to the operation member A432, and another end connected to the base A200. The reset member A437 provides an elastic restoring force to the operation member A432, allowing the operation member A432 to return to the initial position when not being operated.

Specifically, the reset member A437 is, for example, a tension spring. The operation connection portion A4323 of the operation member A432 is provided with a first hook portion A4324. The second cover A220 of the base A200 is provided with a second hook portion A208. Certainly, the second hook portion A208 may be provided on the first cover A210, but is not limited thereto in the present application. Both ends of the reset member A437 are respectively hooked on the first hook portion A4324 and the second hook portion A208. When the operation member A432 is pulled to move from the initial position to the driving position (i.e., the operation member A432 moves forward), the reset member A437 is stretched to store energy, and the operation member A432 drives the linkage member A434 to rotate about the pivot shaft A207 in a first direction. On the other hand, when the operation member A432 is released, the operation member A432 moves from the driving position back to the initial position (i.e., the operation member A432 moves backward) under an action of the reset member A437, and drives the linkage member A434 to rotate in a second direction. The second direction is opposite to the first direction.

As shown in Figures 4 to 6, 18, and 19, the linkage member A434 includes a connection arm A4342, a traction arm A4341, and a pivot portion A4343 located between the connection arm A4342 and the traction arm A4341. The pivot portion A4343 is pivotally connected to the base A200. The base A200 is provided with a pivot shaft A207. The pivot shaft A207 passes through the pivot portion A4343 of the linkage member A434 and defines the pivot axis of the linkage member A434. The pivot shaft A207 is fixedly connected to at least one of the second cover A220 and the first cover A210. In this embodiment, the pivot shaft A207 is integrally formed with the second cover A220. The connection arm A4342 is movably connected to the operation member A432, and the traction arm A4341 is connected to the first traction assembly A435. The extension direction of the connection arm A4342 is not parallel to that of the traction arm A4341. In this embodiment, the connection arm A4342 is substantially perpendicular to the traction arm A4341, and the linkage member A434 is generally shaped like the numeral "7". The linkage member A434 is, for example, an integrally formed component, but is not limited thereto.

One of the operation member A432 and the linkage member A434 is provided with a connection protrusion A43421, and the other of the operation member A432 and the linkage member A434 is provided with a connection groove A4321. The connection protrusion A43421 passes through the connection groove A4321 and is movable within the connection groove A4321. In this way, when the operation member A432 moves, it drives the connection protrusion A43421 to move within the connection groove A4321, thereby causing the linkage member A434 to rotate relative to the base A200. As shown in Figures 4, 5, 18, and 19, in this embodiment, the linkage member A434 is rotatably disposed within the accommodation space A203. The connection arm A4342 of the linkage member A434 is provided with the connection protrusion A43421. The connection protrusion A43421 is located at an end of the connection arm A4342 away from the pivot portion A4343. Specifically, the connection groove A4321 is provided in the operation connection portion A4323. The connection groove A4321 extends approximately in a left-right direction, meaning that the extension direction of the connection groove A4321 is substantially perpendicular to the movement direction of the operation member A432.

With continued reference to Figures 4, 5, 18, and 19, to limit the pivoting range of the linkage member A434, the first cover A210 is provided with a pivot limiting portion A280, which is generally fan-shaped. This pivot limiting portion A280 is configured to restrict the pivoting range of the linkage member A434, thereby limiting the movement range of the operation member A432.

As mentioned above, the first traction assembly A435 is connected between the linkage member A434 and the locking component A431. When the connection assembly A410 is at the folded position, movement of the linkage member A434 drives the locking component A431 to move in the front-rear direction via the first traction assembly A435, causing the locking component A431 to disengage from the connection assembly A410, and the connection assembly A410 is automatically popped to the unfolded position under the action of the reset member A440.

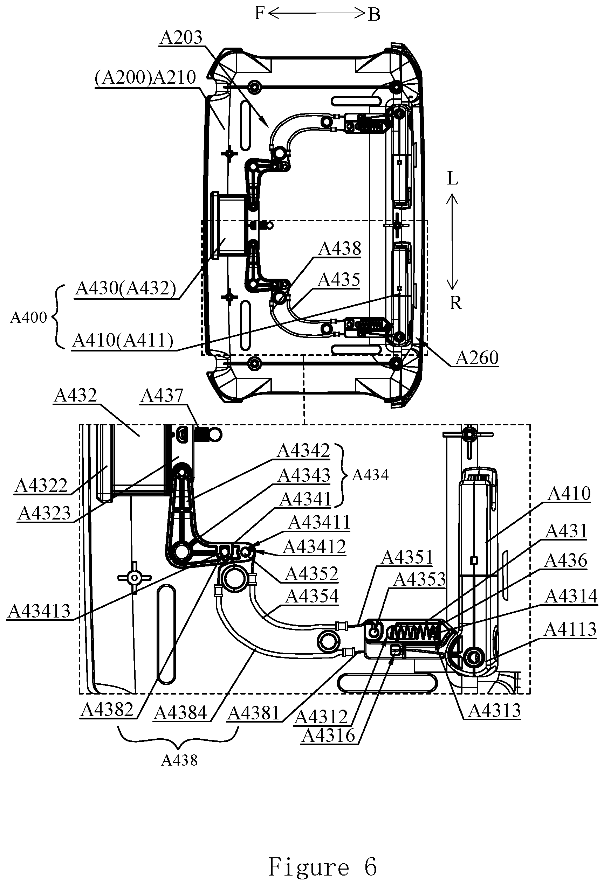

As shown in Figures 4, 5, 18, and 19, in an embodiment, the first traction assembly A435 includes a first traction member A4351. The first traction member A4351 has an end connected to the linkage member A434, and another end connected to the locking component A431. In this embodiment, both ends of the first traction member A4351 are provided with a first end fitting A4352 and a second end fitting A4353, respectively. A first sheath A4354 is sleeved on the first traction member A4351, and is limited between the first end fitting A4352 and the second end fitting A4353, thereby preventing separation of the first sheath A4354 from the first traction member A4351. The first traction member A4351 is, for example, a bendable and deformable wire material such as a steel wire, a carbon fiber wire, or the like. The first end fitting A4352 is detachably connected to the linkage member A434, and the second end fitting A4353 is detachably connected to the locking component A431. Specifically, the traction arm A4341 of the linkage member A434 is provided with a first traction hole A43411 and a first slot A43412 that is in communication with the first traction hole A43411 (see Figure 6). The first end fitting A4352 is engaged in the first traction hole A43411, and a portion of the first traction member A4351 near the first end fitting A4352 is limited within the first slot A43412. The locking component A431 is provided with a first connection hole A4315, with which the second end fitting A4353 is engaged. The second cover A220 is provided with two first limiting grooves A201. Optionally, the first limiting grooves A201 may be provided in the first cover A210. Both ends of the first sheath A4354 are respectively engaged in the respective first limiting grooves A201.

To drive the locking component A431 to move in the front-rear direction more effectively by the linkage member A434 when the linkage member A434 rotates, the base A200 is provided with a guide structure A270. The guide structure A270 is configured to define an extension direction of the first traction member A4351 and the first sheath A4354. The guide structure A270 includes a first guide portion A271 and a second guide portion A272. The first guide portion A271 and the second guide portion A272 extend in an arc, and a guide groove A273 forms between the first guide portion A271 and the second guide portion A272 and extends in an arc. At least a portion of the first traction assembly A435 extends along and is limited within the guide groove A273. It should be noted that "at least a portion of the first traction assembly A435" should be understood as a portion of the first traction member A4351, or a portion of the first sheath A4354 and a portion of the first traction member A4351.

With continued reference to Figures 4, 5, 18, and 19, in an embodiment, the locking mechanism A430 further includes a second traction assembly A438, which includes a second traction member A4381. The connection assembly A410 is connected to the operation member A432 via the second traction member A4381. At least a portion of the second traction assembly A438 extends along the second guide portion A272 and is limited by a guide protrusion A274 that laterally protrudes from the second guide portion A272. In this embodiment, both ends of the second traction member A4381 are connected to the linkage member A434 and the connection assembly A410, respectively, and the operation member A432 is connected to the linkage member A434. When the connection assembly A410 is in the locked state, it is positioned at the unfolded position. The operation member A432 can drive the connection assembly A410 to switch from the locked state to the unlocked state via the second traction assembly A438. Specifically, when the connection assembly A410 is in the locked state, movement of the operation member A432 relative to the base A200 drive the linkage member A434 to rotate, and the linkage member A434 drives the second traction member A4381 as a whole to move, thereby switching the connection assembly A410 from the locked state to the unlocked state. During this process, the connection assembly A410 is kept at the unfolded position under the action of the reset member A440. When the connection assembly A410 is switched to the unlocked state, the second traction member A4381 is in a slackened state, and consequently the linkage member A434 either cannot drive the second traction member A4381 as a whole to move or can only drive the second traction member A4381 as a whole to move minimally even if the operation member A432 moves relative to the base A200 and drives the linkage member A434 to rotate. As a result, the connection assembly A410 is kept in the unlocked state. That is, when the connection assembly A410 is in the unlocked state, pulling the operation member A432 forward cannot switch the connection assembly A410 between the unlocked state and locked state via the second traction assembly A438. Specifically, when the connection assembly A410 is in the unlocked state and at the folded position, upon the operation member A432 is operated, the locking component A431 can be driven to move toward the unlocking position via the first traction assembly A435, and the connection assembly A410 then automatically rotates to the unfolded position under the action of the reset member A440 and is kept in the unlocked state.

With reference to Figures 7 to 10, 18, and 19, the second traction member A4381 has an end connected to the linkage member A434, and another end connected to the connection assembly A410. In this embodiment, both ends of the second traction member A4381 are provided with a first end fitting A4382 and a second end fitting A4383, respectively. A second sheath A4384 is sleeved on the second traction member A4381 and is limited between the first end fitting A4382 and the second end fitting A4383, thereby preventing separation of the second sheath A4384 from the second traction member A4381. The second traction member A4381 is, for example, a bendable and deformable wire material such as a steel wire, a carbon fiber wire, or the like. The first end fitting A4382 is detachably connected to the linkage member A434, and the second end fitting A4383 is detachably connected to the connection assembly A410. The second cover A220 is provided with two second limiting grooves A202. Optionally, the second limiting grooves A202 may be provided on the first cover A210. Both ends of the first sheath A4354 are engaged in the respective second limiting grooves A202, respectively. Specifically, the traction arm A4341 of the linkage member A434 is provided with a second traction hole A43413 and a second slot A43414 in communication with the second traction hole A43413. The first end fitting A4382 is engaged in the second traction hole A43413, and a portion of the second traction member A4381 near the first end fitting A4382 is limited within the second slot A43414. More specifically, the second traction hole A43413 and the first traction hole A43411 are distributed in the extension direction of the traction arm A4341, and the second slot A43414 and the first slot A43412 are located on both sides of the traction arm A4341, respectively. This can prevent mutual interference between the first traction member A4351 and the second traction member A4381. The locking component A431 is provided with a limiting channel A4316 for the second traction member A4381 to pass through. The limiting channel A4316 extends through the locking component A431 in a movement direction of the locking component A431. The locking protrusion A4311 of the locking component A431 is at least partially located in the extension direction of the limiting channel A4316, allowing both the second traction member A4381 and the locking protrusion A4311 to enter the folding space A260 through the same through hole A204 and interact with the connection assembly A410. Specifically, the limiting channel A4316 includes a first recess A4317 located on the locking component A431 away from the second cover A220, a second recess A4318 located on the locking component A431 facing the second cover A220, and a communication opening A4319 in communication with the first recess A4317 and the second recess A4318 (see Figures 12 and 13). The locking protrusion A4311 at least partially forms the bottom wall of the second recess A4318, meaning that a gap is formed between the locking protrusion A4311 and the second cover A220. The second traction member A4381 passes through this gap (i.e., below the locking protrusion A4311).

As can be seen from the above, two connection assemblies A410 are provided. As shown in Figures 4, 5, 18, and 19, two linkage members A434, two first traction assemblies A435, and two locking components A431 are correspondingly provided. Each of the linkage members A434 is connected to the corresponding locking component A431 via the corresponding first traction assembly A435. One operation member A432 is provided. Optionally, two operation members A432 may be provided, but is not limited thereto in the present application. The two locking components A431 correspond to the two connection assemblies A410, respectively. Each of the linkage members A434 is connected to the corresponding locking component A431 via the corresponding first traction assembly A435. The operation member A432 is connected to both linkage members A434, respectively, and the movement of the operation member A432 drives the two linkage members A434 to rotate horizontally in opposite directions. Two second traction assemblies A438 are correspondingly provided, and each of the second traction assemblies A438 is connected to the corresponding connecting component A410 and the corresponding linkage member A434.

As shown in Figures 9, 10, and 11, in an embodiment, the connection assembly A410 includes a housing A411, an engaging hook A412, an engagement reset member A413, and a release component A414. The housing A411 is movably disposed on the base A200. The engaging hook A412 is pivotally connected within an inner cavity A4118 of the housing A411, and is configured to lock with an engagement rod (not shown in the figures) of an anchor bar of a vehicle seat to achieve locking and connection between the connection assembly A410 and the anchor bar. The engaging hook A412 can be switched between a locking position and an unlocking position. When the engaging hook A412 is at the locking position (i.e., the connection assembly A410 is in a locked state), the engaging hook A412 is engaged with the engagement rod, thereby realizing the locking and connection between the connection assembly A410 and the anchor bar. When the engaging hook A412 is at the unlocking position (i.e., the connection assembly A410 is in the unlocked state), the engaging hook A412 disengages from the engagement rod, thereby allowing the connection assembly A410 and the anchor bar to separate from each other. The release component A414 is movably disposed within the inner cavity A4118 of the housing A411 and is configured to block the engaging hook A412 and limit the engaging hook A412 at the locking position, thereby mating with the engagement rod to achieve locking and limiting in position. The release component A414 is connected to the second traction assembly A438, so that the release component A414 is driven via the second traction assembly A438 to move or rotate. The engagement reset member A413 is disposed between the engaging hook A412 and the housing A411 to pivot the engaging hook A412 toward the unlocking position. In other words, when the engaging hook A412 is not blocked by the release component A414, the engaging hook A412 is kept at the unlocking position under an action of the engagement reset member A413. When the engaging hook A412 is at the unlocking position, the release component A414 is blocked by the engaging hook A412, such that the second traction assembly A438 is in a slackened state. In this case, even if the operation member A432 is operated, the second traction assembly A438 cannot drive the release component A414 to move, and the engaging hook A412 is kept at the unlocking position.

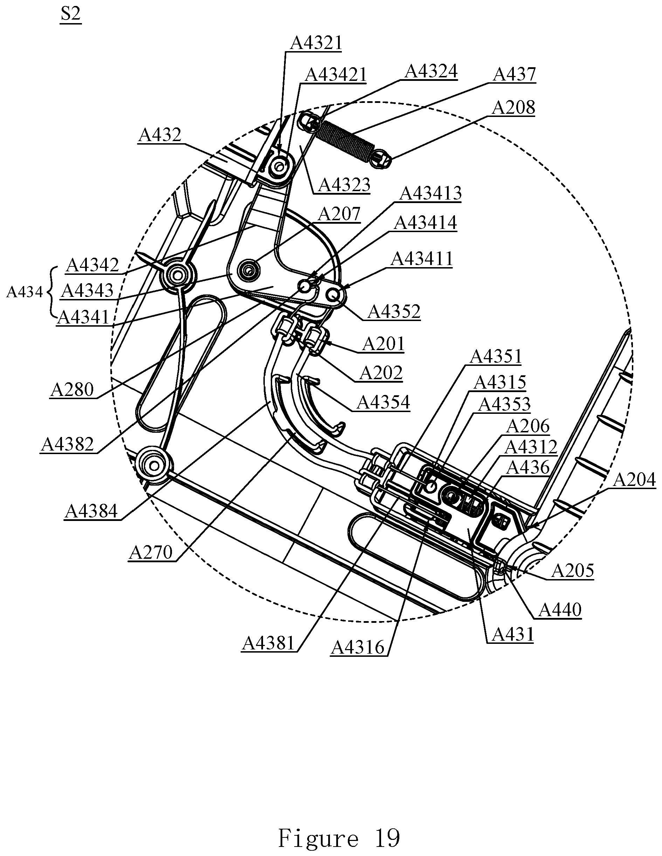

As shown in Figures 9 to 11, in an embodiment, the housing A411 has an end pivotally connected to a rear portion of the base A200 and forms a pivot end A4113. A rotation axis X1 of the housing A411 is the rotation axis X1 of the connection assembly A410. A first locking recess A4111 and a second locking recess A4112 are both provided in the pivot end A4113. The pivot end A4113 of the housing A411 is further provided with a receive groove A4114, which has a fixed protrusion A4115 protruding in a direction of the rotation axis X1. A reset member A440 is sleeved on the fixed protrusion A4115 and has an end abutting against a side wall of the receive groove A4114 and another end engaged at the engagement opening A205 (see Figures 18 and 19). The housing A411 is provided with a limiting groove A4117, which is located at an end of the housing A411 away from the pivot end A4113 and is configured to receive the engagement rod of the anchor bar. In this embodiment, the limiting groove A4117 and the first locking recess A4111 are located on both sides of the rotation axis X1, respectively. The limiting groove A4117 is substantially U-shaped.

Referring to Figures 9 and 10, the engaging hook A412 is provided with an abutting portion A4121, which is configured to be engaged with the release component A414 to keep the engaging hook A412 at the locking position. The engaging hook A412 is pivotally connected in the inner cavity A4118 and can partially extend out of the inner cavity A4118. The engaging hook A412 is provided with an engaging groove A4122. When the engaging hook A412 is at the locking position, the engaging hook A412 at least partially extends into the limiting groove A4117 to close the opening of the limiting groove A4117, and the opening of the engaging groove A4122 is closed by a side wall or a bottom wall of the limiting groove A4117, thereby achieving locking and restriction of the engagement rod. When the engaging hook A412 is at the unlocking position, the openings of both the limiting groove A4117 and the engaging groove A4122 are open, allowing the engagement rod to separate from the engaging hook A412.

Specifically, the engaging groove A4122 is U-shaped, and has two opposing side walls forming a locking wall surface A4123 and a pushing wall surface A4124, respectively. The pushing wall surface A4124 is configured to be pushed against the engagement rod to drive the engaging hook A412 to pivot from the unlocking position to the locking position. A portion of the engaging hook A412 is accommodated within the inner cavity A4118 and is pivotally connected to a side wall of the inner cavity A4118 via a pivot pin A417. When the engaging hook A412 is at the locking position, the locking wall surface A4123 is located within the limiting groove A4117 and closes the opening of the limiting groove A4117. When the engaging hook A412 is at the unlocking position, the pushing wall surface A4124 is located within the limiting groove A4117, and the locking wall surface A4123 retracts into the inner cavity A4118. Thus, during the process of engaging and locking the connection assembly A410 with the engagement rod, the engagement rod can push against the locking wall surface A4123, such that the engaging hook A412 pivots from the unlocking position to the locking position.

The engagement reset member A413 is, for example, a torsion spring. The engagement reset member A413 is accommodated within the inner cavity A4118 and sleeved on the pivot pin A417. The engagement reset member A413 has an end abutting against an inner wall of the inner cavity A4118, and another end engaged at an engaged opening A4125 of the engaging hook A412.

As shown in Figures 9 and 10, in an embodiment, the release component A414 is slidably disposed within the housing A411. The release component A414 includes a release block A4141 and a limiting rod A4142 provided on the release block A4141. The release block A4141 is slidably disposed within the inner cavity A4118 and can drive the limiting rod A4142 to move. The limiting rod A4142 is configured to abut against the abutting portion A4121. Specifically, the release block A4141 moves between a first position and a second position. When the release block A4141 is at the first position, the limiting rod A4142 abuts against the abutting portion A4121, thereby limiting the engaging hook A412 at the locking position. When the release block A4141 is at the second position, the limiting rod A4142 disengages from the abutting portion A4121, and the release block A4141 is abutted against the abutting portion A4121 and kept at the second position. In this case, the second traction member A438 is in a slacked state.

Optionally, the limiting rod A4142 is detachably disposed on the release block A4141, fixedly mounted on the release block A4141, or integrally formed on the release block A4141. As shown in Figures 9, 10, and 14, in this embodiment, the limiting rod A4142 passes through the release block A4141. The release block A4141 is provided with a first groove A41413, and a portion of the limiting rod A4142 is located within the first groove A41413. The opening of the first groove A41413 faces the engaging hook A412. Referring to Figure 9, when the release block A4141 is at the first position, the abutting portion A4121 of the engaging hook A412 extends into the first groove A41413 and abuts against the limiting rod A4142. The first groove A41413 has two opposing side portions, and the limiting rod A4142 passes through these two side portions. Referring to Figure 10, when the engaging hook A412 is at the unlocking position, the abutting portion A4121 abuts against the side portion of the first groove A41413, thereby restricting the release block A4141 at the second position.

As shown in Figures 9 and 10, in an embodiment, the release block A4141 is slidably connected to the housing A411 through a sliding pin A415. The release block A4141 is provided with a sliding groove A41411 for the sliding pin A415 to pass through. The sliding groove A41411 extends in a straight line, and both ends of the sliding pin A415 are fixedly connected to the housing A411. A release reset member A416 is further provided between the release block A4141 and the sliding pin A415. The release reset member A416 is configured to bias the release block A4141, such that the release block A4141 moves toward the engaging hook A412. That is, the release reset member A416 is configured to bias the release block A4141, such that the release block A4141 moves toward the second position. Specifically, the release reset member A416 is, for example, a compression spring. A second protrusion A41412 is provided in the sliding groove A41411. The release reset member A416 is accommodated within the sliding groove A41411, and has an end sleeved on the second protrusion A41412 and another end abutting against the sliding pin A415.

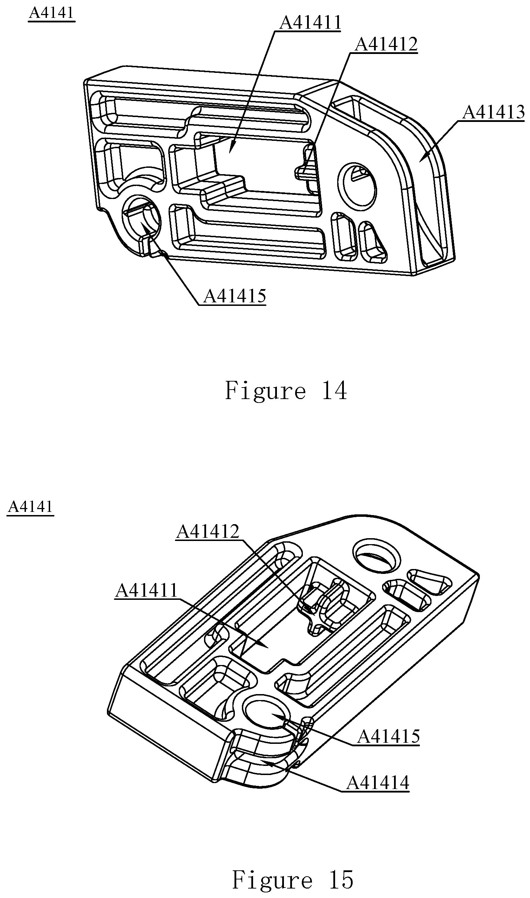

The release block A4141 is connected to the second traction assembly A438. Specifically, the release block A4141 is provided with a second connection hole A41415, which extends through the release block A4141 in a direction perpendicular to the movement direction of the release block A4141. The second connection hole A41415 is located at an end of the release block A4141 away from the limiting rod A4142. That is, the second connection hole A41415 and the first groove A41413 are positioned at both ends of the release block A4141, respectively. A second end fitting A4383 of the second traction assembly A438 is engaged in the second connection hole A41415. As shown in Figure 15, the release block A4141 is further provided with a second groove A41414, which is in communication with the second connection hole A41415. A portion of the second traction member A4381 near the second connection hole A41415 extends along the second groove A41414 and is limited within the second groove A41414.

The operational principle of the animal carrying device A1000 and its anchoring structure A400 according to the present disclosure will be explained below with reference to Figures 4, 5, 7 to 10, 18, and 19.

As shown in Figure 8, when two connection assemblies A410 are at the folded position, they are in an unlocked state (i.e., each engaging hook A412 is at the unlocking position). Each connection assembly A410 is accommodated in its corresponding folding space A260, each locking component A431 is at a locking position engaged with the first locking recess A4111 of the corresponding connection assembly A410, and each release block A4141 is abutted against an end surface of the abutting portion A4121 of the engaging hook A412 and limited at the second position.

When it is necessary to connect the connection assembly A410 to the anchor bar, the connection assembly A410 is first unfolded. Referring to Figures 4, 5, 18, and 19, the operation member A432 is pulled forward. The operation member A432 drives two linkage members A434 to rotate horizontally in opposite directions. Each linkage member A434 then drives the corresponding locking component A431 via the corresponding first traction member A435 to move from the locking position to the unlocking position, such that the connection assembly A410 is popped from the folded position to the unfolded position under the action of the reset member A440. During the popping of the connection assembly A410, it remains in the unlocked state, meaning the engaging hook A412 is kept at the unlocking position. Subsequently, the anchor bar equipped on the vehicle seat is connected to the connection assembly A410. The pushing wall surface A4124 of the engaging hook A412 is pushed against the engagement rod of the anchor bar, causing the engaging hook A412 to rotate from the unlocking position to the locking position against the force of the engagement reset member A413. When the engaging hook A412 rotates to the locking position (i.e., when the engagement rod is engaged in position), the end surface of the abutting portion A4121 of the engaging hook A412 no longer abuts against the release block A4141. The release block A4141 then moves from the second position (see Figure 10) (i.e., a direction closer to the engaging hook A412) to the first position (see Figure 9) under the action of the release reset member A416, and drives the limiting rod A4142 to move. When the release block A4141 moves to the first position (see Figure 9), the limiting rod A4142 abuts against a side surface of the abutting portion A4121, thereby restricting the engaging hook A412 at the locking position.

When it is necessary to fold the connection assembly A410, it is first separated from the anchor bar. Referring to Figures 4, 5, 18, and 19, the operation member A432 is pulled forward. The operation member A432 drives two linkage members A434 to rotate horizontally in opposite directions. Each linkage member A434 then drives the release block A4141 of the corresponding connection assembly A410 via the corresponding second traction assembly A438 to move in a direction away from the engaging hook A412 from the first position (see Figure 9) to the second position (see Figure 10). During this process, the limiting rod A4142 gradually disengages from the abutting portion A4121 of the engaging hook A412. The engaging hook A412 automatically rotates from the locking position to the unlocking position under the action of the engagement reset member A413. When the engaging hook A412 rotates to the unlocking position (i.e., when the connection assembly A410 is disengaged from the anchor bar), the operation member A432 is released. The operation member A432 automatically returns to its initial position under the action of the reset member A437, and drives the linkage members A434 to rotate in the reverse direction for reset. In this case, the release block A4141 is abutted against an end surface of the abutting portion A4121 and is limited at the second position. During the above separation process between the connection assembly A410 and the anchor bar, the locking protrusion A4311 of the locking component A431 is withdrawn from the second locking recess A4112 under the drive of the first traction assembly A435, then moves to the locking position under the action of the reset member A436 and is engaged with the second locking recess A4112. The connection assembly A410 is kept at the unfolded position throughout this process under the action of the reset member A440.

After completing the above separation of the connection assembly A410 from the anchor bar, both connection assemblies A410 rotate in opposite directions toward the folded position. The locking protrusion A4311 of the locking component A431 is withdrawn from the second locking recess A4112 along the guide wall A41121 under the pushing action of the pushing wall A41122 of the second locking recess A4112, and is then abutted against the outer side surface of the housing A411 (i.e., the outer side surface of the ISOFIX connection assembly). When the connection assembly A410 precisely rotates to the folded position, the locking protrusion A4311 is no longer abutted against the outer side surface of the housing A411, and just faces the first locking recess A4111. The locking component A431 automatically moves to the locking position under the action of the reset member A436, and thus the locking protrusion A4311 is engaged with the first locking recess A4111, thereby locking the connection assembly A410 at the folded position.

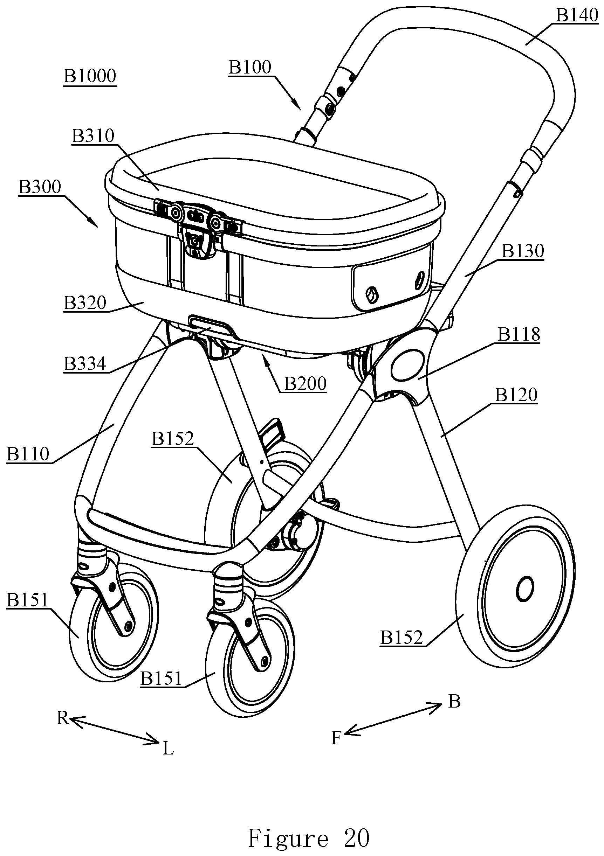

Figures 20 to 23 shows schematic structural diagrams of a wheeled mobile device B1000 according to a first embodiment of the present disclosure. The wheeled mobile device B1000 may include a frame B100, a carrier B300, and a support assembly B200 provided according to some embodiments of the present disclosure. The wheeled mobile device B1000 will be described along with the support assembly B200. In the embodiment shown in Figure 20, the wheeled mobile device B1000 is exemplarily described as a stroller. Depending on the type of the carrier B300, the stroller may be a child stroller, a pet stroller, a shopping stroller, etc. Certainly, in some alternative embodiments, the wheeled mobile device B1000 may be other types of products.

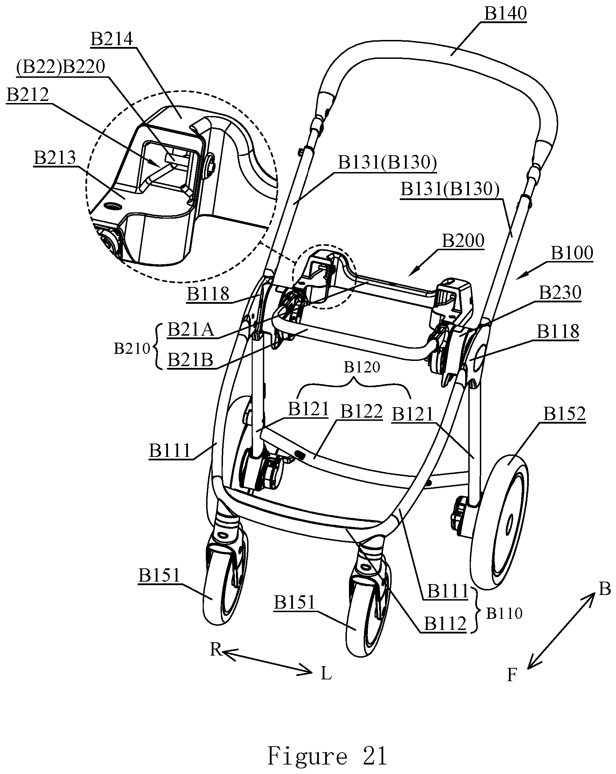

Referring to the configuration of the frame B100 shown in Figure 21, in some embodiments, the frame B100 is configured as substantially bilaterally symmetrical. The frame B100 may include, for example, a front support rod B110, a rear support rod B120, an upper support rod B130, and a handle B140. The frame B100 may be foldable or non-foldable, but is not limited thereto in the present application.

It should be noted that, unless otherwise expressly specified and defined, the directional terms such as "front", "rear", "left", and "right" regarding the wheeled mobile device B1000 in various embodiments of the present disclosure are based on the "front", "rear", "left", and "right" directions of the wheeled mobile device B1000 during its normal propulsion. The arrows F and B in the drawings schematically indicate the "front" and "rear" directions, respectively, while the arrows L and R schematically indicate the "left" and "right" directions, respectively. These directional terms are used solely to describe the embodiments of the present disclosure clearly and are not intended to unduly limit the scope of protection of the present disclosure.

Referring to Figure 21, the front support rod B110 is, for example, in a U-shaped configuration. The front support rod B110 includes two rod members B111 disposed on left and right sides respectively, and a front cross rod B112 connecting between two rod members B111. The front cross rod B112 extends substantially in the left-right direction. At least one front wheel B151 is mounted at a bottom of the front support rod B110. In this embodiment, two front wheels B151 are mounted at the bottom of the front support rod B110, and disposed at intervals in the left-right direction. More specifically, two front wheels B151 are mounted at left and right ends of the front cross rod B112 respectively. The front wheels B151 may be caster wheels or non-caster wheels. Certainly, in some alternative embodiments, the front support rod B110 may have other implementations. For example, the front support rod B110 is in a V-shaped configuration or an I-shaped configuration, and a front wheel B151 may be centrally mounted at a bottom of the front support rod B110.

The rear support rod B120 is, for example, in a U-shaped configuration, and includes two rod members B121 disposed on left and right sides respectively, and a rear cross rod B122 connected to the two rod members B121. An upper end of each of the rod members B121 is connected to, for example, an upper end of each of the rod members B111 of the front support rod B110 on the same side via a connection part B118. The rod member B111 and rod member B121 on the same side, together with the ground, form a substantially triangular structure. The rear support rod B120 is equipped with two rear wheels B152 disposed at intervals in the left-right direction. The rear wheels B152 may be caster wheels or non-caster wheels. In this embodiment, the rear wheels B152 have a larger size than the front wheels B151 to make the whole wheeled mobile device B1000 more stable. Certainly, in some alternative embodiments, the rear wheels B152 may have the same size as the front wheels B151.

The upper support rod B130 includes two rod members B131 on left and right sides respectively. Each rod member B131 has a lower end connected to the connection part B118 on the same side, and an upper end connected to the handle B140. In some embodiments, the handle B140 is, for example, in a U-shaped configuration, with its two ends connected to the rod members B131 of the upper support rod B130 on the same sides respectively. In some embodiments, two ends of the handle B140 are connected to the two rod members B131 via retractable structures, for example, to allow adjustment of the height of the handle B140.

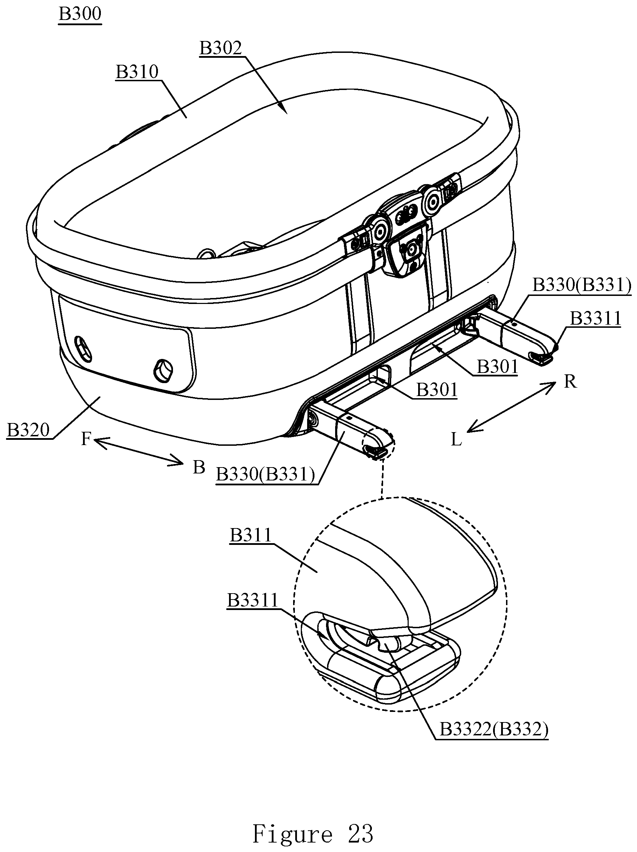

The carrier B300 is, for example, a pet carry cot, an infant sleeping basket, an infant carry cot, an infant seat, etc. Referring to Figures 20 and 23, the carrier B300 is exemplarily described as a pet carry cot. The carrier B300 includes a body B310, a base B320, and an anchoring structure. The body B310 is disposed on the base B320, and forms a carrying space B302 together with the base B320. The body B310 may include foamed material and other rigid materials enclosing the carrying space B302, and the base B320 is, for example, made of rigid material to provide support for the body B310.

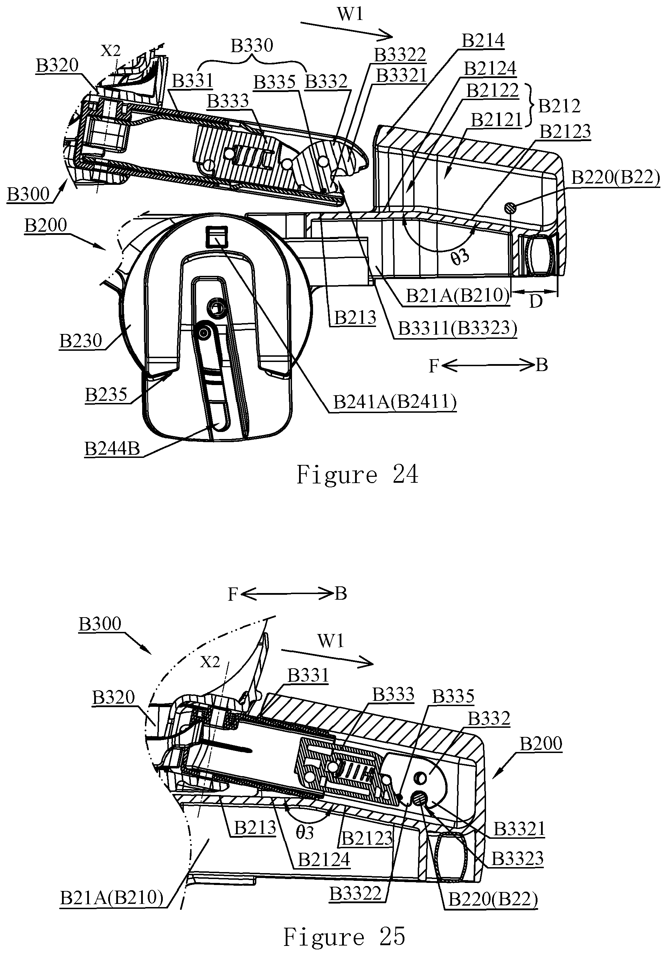

As shown in Figures 24 and 25, in an embodiment, the anchoring structure includes an anchoring assembly B330, which is, for example, an ISOFIX connection assembly. Certainly, in some other embodiments, the anchoring assembly B330 may be other suitable connection assemblies, which is not limited in the present application. With continued reference to Figures 24 and 25, the anchoring assembly B330 is disposed on the base B320 and includes a housing B331 and an engaging hook B332. With reference to Figure 20, the anchoring structure is further provided with an operation member B334. The anchoring assembly B330 may be movably disposed on the base B320 or fixedly disposed on the base B320, and is provided with a receive groove B3311, which is substantially U-shaped. Preferably, the housing B331 is movably disposed on the base B320 and is provided with the receive groove B3311. The engaging hook B332 has an engaging groove B3323, with opposite sides of the engaging groove B3323 forming a hook portion B3321 and a pushing portion B3322, respectively. The engaging hook B332 is pivotally connected within an inner cavity of the housing B331 and is rotatable between an unlocking position and a locking position. Referring to Figure 25, when the engaging hook B332 is at the locking position, the hook portion B3321 extends into the receive groove B3311 and closes the opening of the receive groove B3311 to achieve limitation in position by engagement. Referring to Figure 24, when the engaging hook B332 is at the unlocking position, the openings of both the receive groove B3311 and the engaging groove B3323 are open, the hook portion B3321 retracts from the receive groove B3311, and the pushing portion B3322 extends into the receive groove B3311, allowing the hook portion B3321 to switch from the unlocking position to the locking position by pushing against the pushing portion B3322. The operation member B334 is configured to unlock the engaging hook B332, to allow the engaging hook B332 to rotate from the locking position to the unlocking position. In this embodiment, the operation member B334 is movably disposed on the base B320 and can be operated. Specifically, the operation member B334 is disposed on a front side portion of the base B320, and the anchoring assembly B330 is disposed on a rear side portion of the base B320. Certainly, in some alternative embodiments, the operation member B334 may be, for example, movably disposed on the anchoring assembly B310.

Referring to Figures 20 and 23, for example, two anchoring assemblies B330 are provided, and one operation member B334 is provided, but is not limited thereto. The two anchoring assemblies B330 are pivotally connected to the base B320 respectively and are rotatable relative to the base B320 approximately horizontally about a rotation axis X2 (see Figure 24). Specifically, the two anchoring assemblies B330 may rotate relative to the base B320 in a plane slightly inclined to the horizontal plane (i.e., a surface on which the base B320 is placed). In this embodiment, the two anchoring assemblies B330 rotate in opposite directions from a folded position to an unfolded position, or from the unfolded position to the folded position. Certainly, in some alternative embodiments, the two anchoring assemblies B330 may also rotate in the same direction from the folded position to the unfolded position, or from the unfolded position to the folded position. It should be noted that the anchoring assemblies B330 being pivotally connected to the base B320 refers to the housings B331 of anchoring assemblies B330 being pivotally connected to the base B320. In this embodiment, the base B320 is provided with folding spaces B301, which are recessed grooves formed in a rear side surface of the base B320. When the two anchoring assemblies B330 are at the folded position, they are respectively received within the folding spaces B301. For example, the outer side surfaces of the anchoring assemblies B330 upon folding are flush with the rear side surface of the base B320 or collapsed from the rear side surface of the base B320.

As shown in Figures 20 and 21, the support assembly B200 is mounted on the frame B100 and is configured to mount the carrier B300. In this embodiment, the support assembly B200 is fixedly (i.e., non-detachably) mounted on the frame B100. A specific configuration for realizing the connection between the support assembly B200 and the frame B100 will be described hereafter in detail. In some other embodiments, the support assembly B200 may be detachably mounted on the frame B100.

Referring to Figures 21, 24, and 25, the support assembly B200 includes a support frame B210 and an engagement member B22. The support frame B210 is configured to support the carrier B300 and is provided with a connection groove B212. The connection groove B212 is configured to be inserted by an anchoring assembly B330 of a carrier B300. The engagement member B22 is disposed on the support frame B210 and at least partially received within the connection groove B212. The engagement member B22 is configured to be engaged with the anchoring assembly B330 to limit the movement of the anchoring assembly B330 relative to the support assembly B200 in the front-rear direction, thereby at least partially locking the anchoring assembly B330 within the connection groove B212. Specifically, the engagement member B22 is, for example, an engagement pin B220, and the anchoring assembly B330 is provided with an engaging hook B332. The engagement pin B220 passes through the support frame B210 and is configured to be engaged with the engaging hook B332 of the anchoring assembly B330.

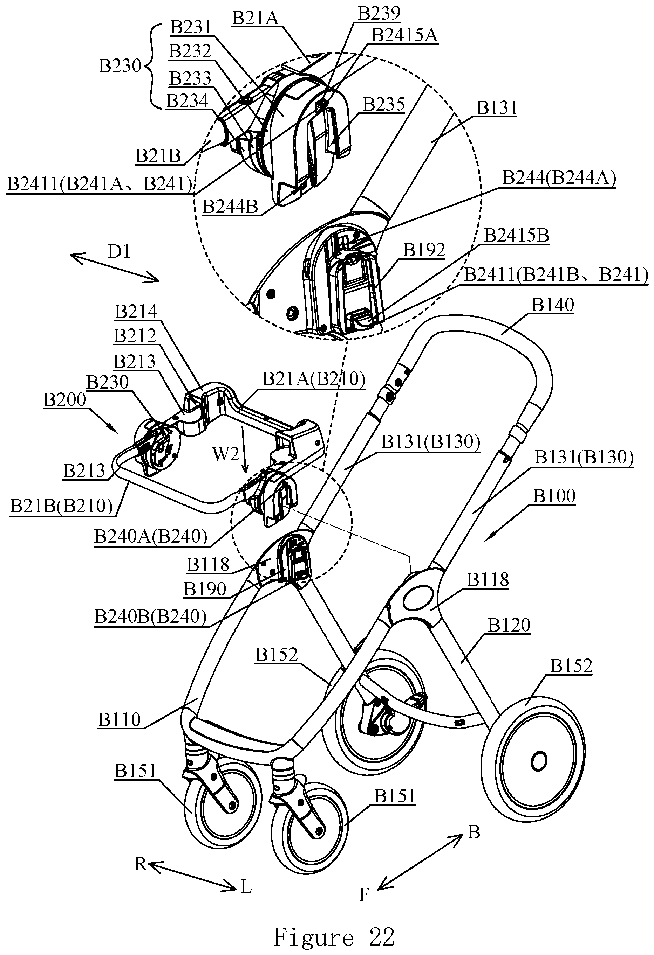

With reference to Figure 22, the support frame B210 has a generally rectangular configuration and includes a first support B21A and a second support B21B. The first support B21A and the second support B21B are connected to each other via mounting bases B230 on both left and right sides. Specifically, both the first support B21A and the second support B21B are generally U-shaped. The first support B21A has two ends connected to two mounting bases B230 respectively, and the second support B21B has two ends connected to the two mounting bases B230 respectively. Both the mounting bases B230 are disposed on the left and right sides of the support frame B210, respectively. Optionally, the first support B21A and the second support B21B may be pivotally connected to each other via the mounting bases B230 to facilitate folding the support frame B210. In some other embodiments, the first support B21A and the second support B21B may be fixedly connected to each other. In yet other embodiments, at least one of the first support B21A and the second support B21B is retractable relative to the two mounting bases B230 in a front-rear direction to adjust the front-rear dimensional size of the support frame B210, thereby allowing the support frame B210 to adapt to carriers B300 of different sizes.

The support frame B210 has a support plane B213, which is jointly formed by the first support B21A and the second support B21B. The first support B21A is provided with an accommodation protrusion B214 that protrudes upward from the support plane B213. The accommodation protrusion B214 is provided with the connection groove B212, and the connection groove B212 has an opening facing the second support B21B. In this embodiment, the second support B21B is located in front of the first support B21A, and the opening of the connection groove B212 faces forward. In some alternative embodiments, the second support B21B may be located behind the first support B21A, and the opening of the connection groove B212 facing rearward, but is not limited thereto in the present application.

As shown in Figures 21 and 23, the quantity of the connection grooves B212 is in conformity with that of the anchoring assemblies B330. Specifically, two connection grooves B212 are provided, for example. With reference to Figures 24 and 25, each connection groove B212 comprises a first groove section B2121 and a second groove section B2122, with the first groove section B2121 being located farther from the opening of the connection groove B212 than the second groove section B2122. An extension direction of the first groove section B2121 is parallel to an insertion direction W1 in which the anchoring assembly B330 is inserted into the connection groove B212. The insertion direction W1 of the anchoring assembly B330 is parallel to the extension direction of the anchoring assembly B330 at the unfolded position. In this embodiment, the support plane B213 is substantially parallel to a surface where the base B320 places (namely, the horizontal plane), and an angle between the support plane B213 and the insertion direction W1 in which the anchoring assembly B330 is inserted into the connection groove B212 (which will be described hereinafter) is an obtuse angle. Specifically, when the anchoring assembly B330 is inserted into the connection groove B212, the anchoring assembly B330 extends inclinedly downward with respect to the support plane B213. In this manner, the blocking effect of a lower side wall B2123 of the first groove section B2121 on the anchoring assembly B330 can further restrict the movement of the anchoring assembly B330 in the front-rear direction.

With continued reference to Figures 24 and 25, the shape of the connection groove B212 matches with the shape of the housing B331 of the anchoring assembly B330. The side walls of at least one of the first groove section B2121 and the second groove section B2122 are configured to at least partially conform to the outer surface of the anchoring assembly B330. Specifically, when the anchoring assembly B330 is inserted into the connection groove B212, the left and right side walls of the first groove section B2121 conform to the left and right side surfaces of the housing B331 respectively, and the upper and lower side walls B2123 of the first groove section B2121 conform to the upper and lower side surfaces of the housing B331 respectively. In this manner, on the one hand, the anchoring assembly B330 can be securely connected within the connection groove B212, preventing movement of the anchoring assembly B330 relative to the support frame B210 in the up, down, left, and right directions, and thereby preventing the carrier B300 from moving relative to the support frame B210, on the other hand, the anchoring assembly B330 can be guided to be inserted into and engaged with the connection groove B212 in the insertion direction W1. The upper side wall of the second groove section B2122 is coplanar with the upper side wall of the first groove section B2121 and parallel to the insertion direction W1. The lower side wall B2124 of the second groove section B2122 is coplanar with the support plane B213, and the lower side wall B2123 of the first groove section B2121 is parallel to the insertion direction W1. An angle θ3 between the lower side wall B2124 of the second groove section B2122 and the lower side wall B2123 of the first groove section B2121 is an obtuse angle, which means the angle between the support plane B213 and the insertion direction W1 is an obtuse angle.

As shown in Figures 21, 24, and 25, in an embodiment, the extension direction of the engagement pin B220 is perpendicular to the insertion direction W1 in which the anchoring assembly B330 is inserted into the connection groove B212. The engagement pin B220 is spaced apart from the bottom of the connection groove B212. Optionally, a spacing distance D between the engagement pin B220 and the bottom of the connection groove B212 satisfies that when the engagement pin B220 is engaged with the engaging hook B332 (see Figure 25), an end of the anchoring assembly B330 is either in contact with or spaced apart from the bottom of the connection groove B212. In other words, the spacing distance D between the engagement pin B220 and the bottom of the connection groove B212 is greater than or equal to the distance between the engaging groove B3323 of the engaging hook B332 and the end of the housing B331. During the insertion of the anchoring assembly B330 into the connection groove B212 in the insertion direction W1, the engagement pin B220 pushes against the engaging hook B332, so that the engaging hook B332 rotates from the unlocking position (see Figure 24) to the locking position (see Figure 25), and thereby the engagement pin B220 is engaged with the engaging hook B332.

In this embodiment, when the anchoring assembly B330 is not inserted into and engaged with the connection groove B212 (see Figure 24), the engaging hook B332 is kept at the unlocking position. During the insertion of the anchoring assembly B330 into the connection groove B212, the engagement pin B220 pushes against the pushing portion B3322 of the engaging hook B332, so that the engaging hook B332 rotates from the unlocking position to the locking position and is engaged with the engagement pin B220. In this case, the engaging hook B332 is kept at the locking position by a retaining assembly B333 disposed within the housing B331. When it is necessary to separate the anchoring assembly B330 from the support frame B210, the operation member B334 is operated, so that the retaining assembly B333 is driven by the operation member B334 to move away from the engaging hook B332, thereby releasing the engaging hook B332 from blocking and limitation by the retaining assembly B333. Consequently, the engaging hook B332 automatically rotates to the unlocking position under the action of a reset member B335 (e.g., a torsion spring) and disengages from the engagement pin B220. In this case, the carrier B300 can be moved in a direction opposite to the insertion direction W1 until the anchoring assembly B330 is completely withdrawn from the connection groove B212, thereby achieving separation between the carrier B300 and the support assembly B200.

As shown in Figure 22, in an embodiment, the frame B100 is provided with a connection base B190, for example, two connection bases B190. The two connection bases B190 are detachably connected to, fixedly provided on, or integrally formed with the corresponding (i.e., same-side) connection parts B118 of the frame B100, respectively. The two mounting bases B230 are configured to be engaged with the corresponding connection bases B190 respectively. The support assembly B200 further includes a locking mechanism B240 configured to be connected to both the mounting base B230 and the connection base B190 on the same side, so as to lock the mounting base B230 onto the connection base B190.

For ease of description, the mounting base B230, locking mechanism B240 and connection base B190 located on the same side are taken as an example hereafter for illustration.

One of the connection base B190 and the mounting base B230 is provided with a mounting groove B235. The mounting groove B235 has an opening for allowing the other of the connection base B190 and the mounting base B230 to be inserted into the mounting groove B235. The other of the connection base B190 and the mounting base B230 is provided with a connection protrusion B192. At least a portion of the connection protrusion B192 is configured to be inserted into the mounting groove B235 through the opening of the mounting groove B235, so that the connection base B190 and the mounting base B230 are engaged with each other. As shown in Figure 22, in this embodiment, the mounting base B230 is provided with the mounting groove B235, and the connection protrusion B192 of the connection base B190 can be engaged with the mounting groove B235 through the opening of the mounting groove B235. Certainly, in an alternative embodiment, the connection base B190 may be provided with the mounting groove B235, and the mounting base B230 may be engaged with the mounting groove B235 through the opening of the mounting groove B235.

With continued reference to Figure 22, in an embodiment, the mounting groove B235 is generally U-shaped with its opening facing downward, enabling the mounting base B230 to be engaged with the connection base B190 in the vertical direction (i.e., the up-down direction). That is, an engagement direction W2 in which the mounting base B230 engages with the connection base B190 is substantially parallel to the vertical direction. By configuring the mounting base B230 and the connection base B190 to be engaged with each other in a vertical direction, separation or disengagement of the mounting base B230 from the connection base B190 due to inertia during movement of the wheeled mobile device B1000 can be prevented. Certainly, in an alternative embodiment, the opening of the mounting groove B235 may face forward or backward, or may face toward the lower-left or lower-right direction, etc., which is not limited in the present application.

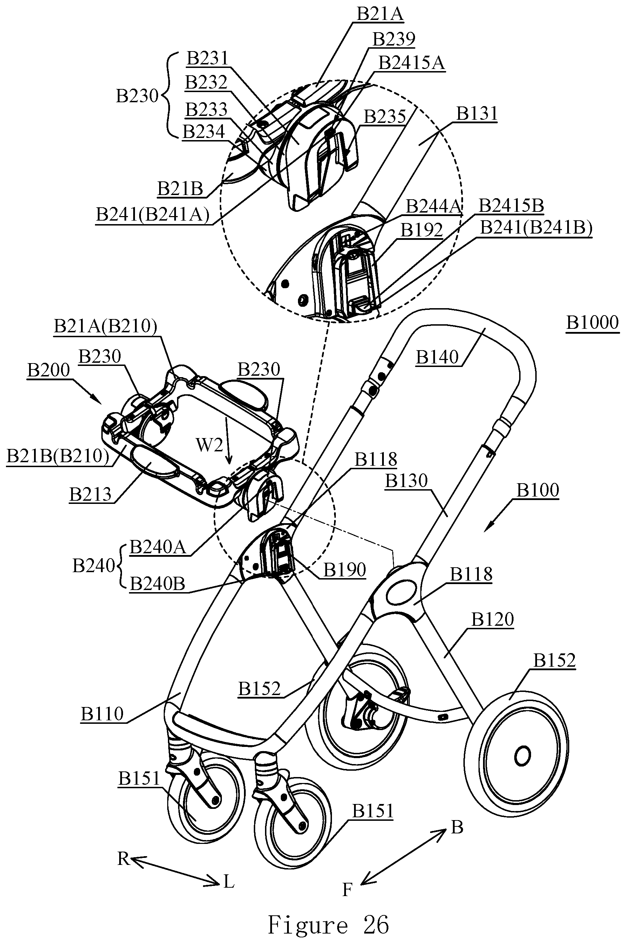

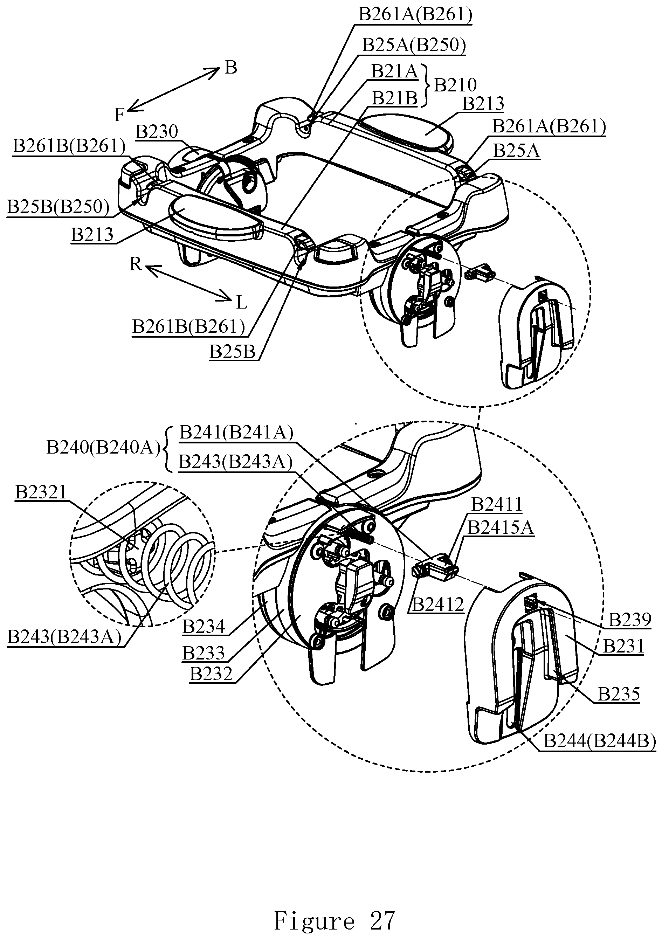

In some embodiments, although the support assemblies B200, for example in the first embodiment shown in Figure 22 and the second embodiment shown in Figures 26 to 28, has different configurations, the mounting base B230 and locking mechanism B240 of the support assembly B200 in the first embodiment have the same configuration as those in the second embodiment. The locking mechanism B240 comprises a locking member B241, a reset member B243, and a locking hole B244. The reset member B243 is not shown in Figure 22 but in Figure 27. The locking member B241 is movably disposed on one of the mounting base B230 and the connection base B190, and is switchable between a locking position and an unlocking position. The locking hole B244 is disposed on the other of the mounting base B230 and the connection base B190. The locking member B241 includes a locking portion B2411 configured to be engaged with the locking hole B244. When the locking member B241 is at the locking position, at least a portion of the locking member B241 is configured to extend into the locking hole B244 to restrict the mounting base B230 from being separated from the connection base B190, thereby locking the mounting base B230 on the connection base B190. When the locking member B241 is at the unlocking position, the locking portion B2411 is at least partially retracted into the mounting base B230, and is disengaged from in the locking hole B244, allowing the mounting base B230 to be separated from the connection base B190. The reset member B243 is configured to apply a force to the locking member B241, so that the locking member B241 moves toward the locking position.

Optionally, two locking mechanisms B240, specifically, a first locking mechanism B240A and a second locking mechanism B240B, are provided. Certainly, in some alternative embodiments, one locking mechanism B240, or more than two locking mechanisms B240 may be provided, but is not limited thereto in the present application.

As shown in Figure 22, the locking member B241A of the first locking mechanism B240A is movably disposed on the mounting base B230. The locking hole B244A of the first locking mechanism B240A is disposed on the connection base B190. Specifically, the locking member B241A of the first locking mechanism B240A is movably disposed on the mounting base B230, and the locking portion B2411 of the locking member B241A can extend outside the mounting base B230. More specifically, the locking member B241A is movable relative to the mounting base B230 in a first direction D1. The first direction D1 is substantially parallel to the left-right direction. The locking member B241B of the second locking mechanism B240B is movably disposed on the connection base B190, and the locking hole B244B of the second locking mechanism B240B is disposed on the mounting base B230. Specifically, the locking member B241B of the second locking mechanism B240B is movably disposed on the connection base B190, and the locking portion B2411 of the locking member B241B can extend outside the connection base B190. More specifically, a movement direction of the locking member B241B is parallel to that of the locking member B241A. That is, the locking member B241 is movable relative to the connection base B190 in the first direction D1. The locking member B241B and the locking member B241A move from a locking position to an unlocking position or from an unlocking position to a locking position in opposite directions. In this embodiment, the locking member B241A of the first locking mechanism B240A and the locking hole B244B of the second locking mechanism B240B are distributed on the mounting base B230 in the up-down direction. Specifically, the locking member B241A of the first locking mechanism B240A is located above the mounting groove B235, and the locking hole B244B of the second locking mechanism B240B is located below the locking member B241A of the first locking mechanism B240A, either below or above the opening of the mounting groove B235.

As shown in Figures 22 and 27, in some embodiments, the mounting base B230 includes a first base B231 and a second base B232. The second base B232 is connected to the support frame B210, and the first base B231 is detachably connected to a side of the second base B232 facing away from the support frame B210 (i.e., an outwardly facing side of the second base B232). The first base B231 and the second base B232 are detachably connected to each other. At least a portion of the locking member B241A of the first locking mechanism B240A is limited between the first base B231 and the second base B232. The first base B231 is provided with a pass-through channel B239, which is configured to be passed through by and engaged with the locking member B241A, and define the movement direction of the locking member B241A.

As shown in Figures 22, 27, and 28, in some embodiments, the locking member B241A further includes a limiting protrusion portion B2412. The locking member B241A is in a generally "T"-shaped configuration. The limiting protrusion portion B2412 of the locking member B241A is limited between the first base B231 and the second base B232, and the locking portion B2411 of the locking member B241A can extend outside the first base B231 through the pass-through channel B239. The limiting protrusion portion B2412 is provided with a sliding groove B2413, which extends through the limiting protrusion portion B2412 in the movement direction of the locking member B241A. Optionally, two sliding grooves B2413 are provided, and are symmetrically provided on the locking member B241A. A side of the first base B231 facing the second base B232 is provided with a guide protrusion B2311. The guide protrusion B2311 is slidably fitted with the sliding groove B2413. By slidably fitting the guide protrusion B2311 with the sliding groove B2413, the locking member B241A can be further limited to move in a predetermined direction, and is prevented from deviating during its movement.

Optionally, a side wall of the sliding groove B2413 is provided with a guide rib B2414 extending in the movement direction of the locking member B241A, and the guide protrusion B2311 is provided with a guide groove B2312. The guide rib B2414 is slidably fitted with the guide groove B2312. In this embodiment, through multiple sets of sliding fitting, the locking member B241A can be better limited to move in the predetermined direction. An end of the guide groove B2312 forms an abutting surface B2313, and the locking member B241A can be blocked by the abutting surface B2313, thereby limiting the sliding stroke of the locking member B241A relative to the first base B231.

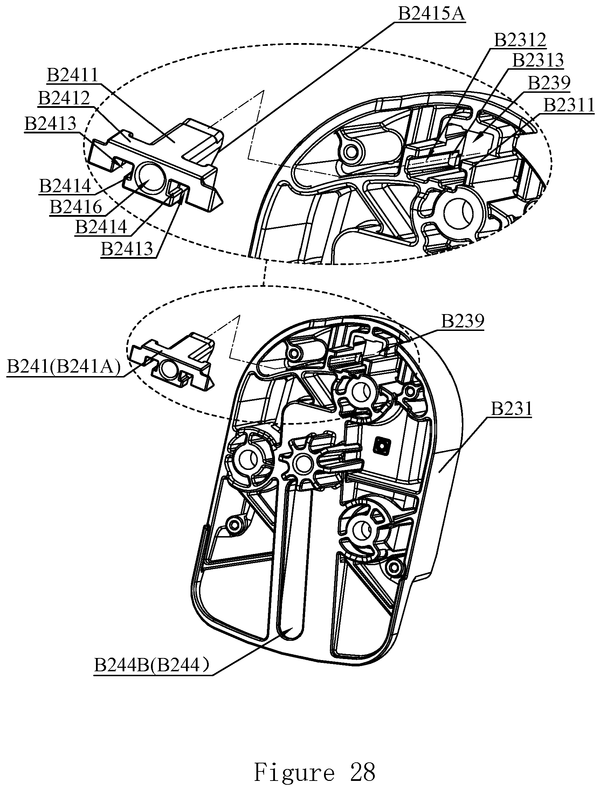

Referring to Figures 27 and 28, the reset member B243A of the first locking mechanism B240A is disposed between the locking member B241A of the first locking mechanism B240A and the mounting base B230, and applies a force to the locking member B241A, so that the locking member B241A moves toward the locking position. That is to say, the locking member B241A of the first locking mechanism B240A can be kept at the locking position under the force of its reset member B243A. In this embodiment, the reset member B243A is, for example, a compression spring. The reset member B243A is disposed within the mounting base B230. Specifically, the reset member B243A is disposed between the locking member B241A and the second base B232. The reset member B243A has an end abutting against the second base B232, and another end abutting against the locking member B241A. The reset member B243A may be provided with a receiving groove B2416. The end of the reset member B243A away from the second base B232 is accommodated in the receiving groove B2416. The second base B232 may be provided with a limiting protrusion B2321. An end of the reset member B243A away from the locking member B241A is sleeved on the limiting protrusion B2321. This can prevent the reset member B243A from deviating during elastic energy storage (e.g., when being compressed) or elastic energy release.

As shown in Figure 22, the locking portion B2411 of the locking member B241A is provided with a wedge surface B2415A. During the connection of the support assembly B200 with the frame B100, i.e., during the engagement of the mounting base B230 with the connection base B190, the wedge surface B2415A of the locking member B241A is pushed against the mounting base B230, causing the locking member B241A to move from the locking position to the unlocking position. When the mounting base B230 is engaged in position, the locking member B241A aligns with the locking hole B244A, and the wedge surface B2415A of the locking member B241A is no longer pushed against the connection base B190. In this case, the locking member B241A moves from the unlocking position back to the locking position under the force of the reset member B243A, causing the locking portion B2411 of the locking member B241A to extend into the locking hole B244A and keep within the locking hole B244A under the force of the reset member B243A. In this embodiment, the support assembly B200 is not provided with a release structure capable of driving the locking member B241A to switch from the locking position to the unlocking position. Therefore, once the support assembly B200 is mounted on the frame B100, it cannot be detached from the frame B100. Certainly, in some other embodiments, the support assembly B200 may be provided with a release structure capable of driving the locking member B241A to switch from the locking position to the unlocking position, meaning the support assembly B200 can be detachably connected to the frame B100. This will be explained in detail in the below embodiments.

Referring to Figure 22, the configuration of the second locking mechanism B240B is similar to that of the aforementioned first locking mechanism B240A. The locking member B241B of the second locking mechanism B240B may be disposed on the connection base B190 in a manner similar to the locking member B241A of the first locking mechanism B240A. Similarly, the reset member of the second locking mechanism B240B (not shown in the drawings) may also be disposed on the connection base B190 in a manner similar to the reset member B243A of the first locking mechanism B240A, which will not be elaborated herein. Certainly, in some alternative embodiments, the reset member and locking member B241B of the second locking mechanism B240B may be disposed on the connection base B190 in other suitable manners, which are not limited in the present application.

As shown in Figures 22 and 24, the locking portion B2411 of the locking member B241B is also provided with a wedge surface B2415B. The wedge surface B2415B of the locking member B241B is arranged substantially facing the wedge surface B2415B of the aforementioned locking member B241A. Specifically, the wedge surface B2415B of the locking member B241A is arranged substantially downward, and the wedge surface B2415B of the locking member B241B is arranged substantially upward. During the engagement between the mounting base B230 and the connection base B190, the mounting base B230 is configured to push against the wedge surface B2415B provided on the locking member B241B of the second locking mechanism B240B, thereby causing the locking member B241B of the second locking mechanism B240B to be abutted and limited at the unlocking position. When the mounting base B230 is engaged with the connection base B190 in position, the locking portion B2411 of the locking member B241B aligns with the locking hole B244B and then extends into the locking hole B244B under the action of the reset member of the second locking mechanism B240B, thus further restricting the mounting base B230 from being separated from the connection base B190.

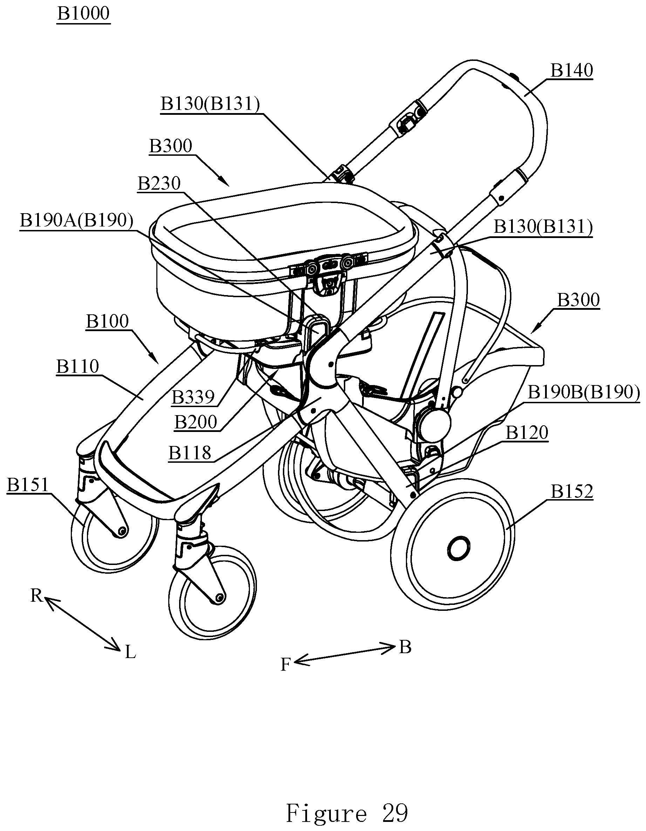

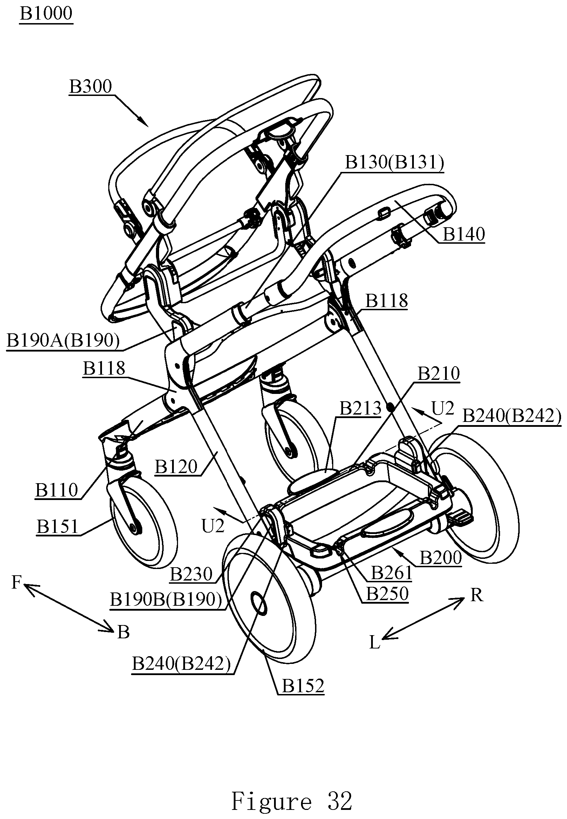

Figure 26 shows a schematic structural diagram of a wheeled mobile device B1000 according to a second embodiment of the present disclosure. Figures 29 to 32 show schematic structural diagrams of a wheeled mobile device B1000 according to a third embodiment of the present disclosure. In some embodiments, as shown in Figures 26 and 29, the wheeled mobile device B1000 includes a frame B100, a carrier B300, and a support assembly B200. The carrier B300 in the second embodiment is not shown in FIG. 26, and its configuration may refer to that of the carrier B300 in the third embodiment shown in Figures 29 to 32. The carrier B300 is configured to be detachably connected to the support assembly B200. The detachable connection between the carrier B300 and the support assembly B200 will be elaborated hereafter. The frame B100 may refer to the frame B100 in the aforementioned first embodiment, which will not be elaborated herein. The support assembly B200 of the wheeled mobile device B1000 in this embodiment differs from the support assembly B200 of the wheeled mobile device B1000 in the aforementioned first embodiment in at least the following aspects.

As shown in Figures 26 and 27, the support assembly B200 includes a first support B21A and a second support B21B. The first support B21A is pivotally connected to the second support B21B via a mounting base B230. The connection part B118 of the frame B100 is provided with a connection base B190 configured to be engaged with the mounting base B230. The specific configuration of the connection base B190 may refer to the configuration of the connection base B190 in the aforementioned first embodiment. The mounting base B230 includes a first pivot base B233 and a second pivot base B234 that are pivotally connected to each other. The first support B21A is connected to the first pivot base B233, and the second support B21B is connected to the second pivot base B234, so as to realize folding of the support frame B210. The mounting base B230 further includes a first base B231 and a second base B232 that can be engaged with each other. The second base B232 is connected to the first pivot base B233, and the first base B231 is connected to a side of the second base B232 away from the first pivot base B233. Specifically, the second pivot base B234, the first pivot base B233, the second base B232, and the first base B231 are sequentially stacked in the left-right direction.

The mounting base B230 is configured to be engaged with the connection base B190 and be locked on the connection base B190 via a locking mechanism B240. In this embodiment, the mounting base B230, connection base B190, and locking mechanism B240 may refer to those described in the aforementioned first embodiment, which will not be repeatedly described herein.

Referring to Figure 27, each of the first support B21A and the second support B21B includes at least one engagement channel B250, with each engagement channel B250 extending in a front-rear direction. Each of the first support B21A and the second support B21B is provided with at least one locking component B261, with each locking component B261 being movable in a left-right direction to present an engaged position at which it extends into the respective engagement channels B250, and a non-engaged position at which it is retracted from the respective engagement channels B250. It will be understood that when the locking component B261 is at the engaged position, the carrier B300 can be locked on the support assembly B200; and when the locking component B261 is at the non-engaged position, the carrier B300 is allowed to be removed from the support assembly B200.

The engagement channel B250 on the first support B21A may be referred to as a first engagement channel B25A, and the engagement channel B250 on the second support B21B may be referred to as a second engagement channel B25B. The locking component B261 provided on the first support B21A may be referred to as a first locking component B261A, and the locking component B261 provided on the second support B21B may be referred to as a second locking component B261B. In this embodiment, two first engagement channels B25A and two first locking components B261A may be provided. The locking and unlocking directions of the two first locking components B261A are opposite to each other, and the locking and unlocking directions of the two second locking components B261B are opposite to each other. Certainly, in some alternative embodiments, the locking and unlocking directions of the two first locking components B261A may be identical, or the locking and unlocking directions of the two second locking components B261B may be identical.

As shown in Figures 27 and 29 to 31, the bottom of the carrier B300 may be for example provided with an engagement rod B339, for example two engagement rods B339. The respective engagement rods B339 are configured to be engaged with respective engagement channels B250. When the carrier B300 is supported and locked by the support assembly B200, the respective engagement rods B339 are engaged with the respective first engagement channels B25A and second engagement channels B25B, and locked by the respective locking components B261, and the respective locking components B261 extend into the respective engagement channels B250. This prevents movement of the carrier B300 relative to the support frame B210 in the left-right direction, and removal of the carrier B300 from the support frame B210. During engaging the respective engagement rods B339 of the carrier B300 with the respective engagement channels B250, the respective engagement rods B339 push against the respective first locking component B261A or second locking component B261B toward the non-engaged position. When the respective engagement rods B339 are fully engaged in the engagement channels B250, the respective first locking components B261A and the respective second locking components B261B is automatically popped to the engaged position under an action from a reset member (not shown); so that the engagement rods B339 is engaged in the engagement channels B250 and consequently the carrier B300 is locked on the support assembly B200. In this embodiment, the locking components B261 may be unlocked (i.e., the locking components B261 are driven to move from the engaged position to the non-engaged position) by any suitable release mechanism, which is not limited in the present application.

In the third embodiment, as shown in Figures 29 to 32, the wheeled mobile device B1000 includes a frame B100, a carrier B300, and a support assembly B200. The wheeled mobile device B1000 in this embodiment differs from the wheeled mobile device B1000 in the aforementioned second embodiment in at least the following aspects.

As shown in Figures 29 to 32, each of the left and right sides of the frame B100 is provided with two connection bases B190. The two connection bases B190 on the same side of the frame B100 include a first connection base B190A and a second connection base B190B, which may be collectively referred to as the connection base B190. The respective first connection bases B190A are, for example, fixedly provided on a connection part B118 of the frame B100. Specifically, the respective first connection bases B190A are integrally formed with the connection part B118. The respective second connection bases B190B are, for example, detachably disposed on a rear support rod B120 of the frame B100.

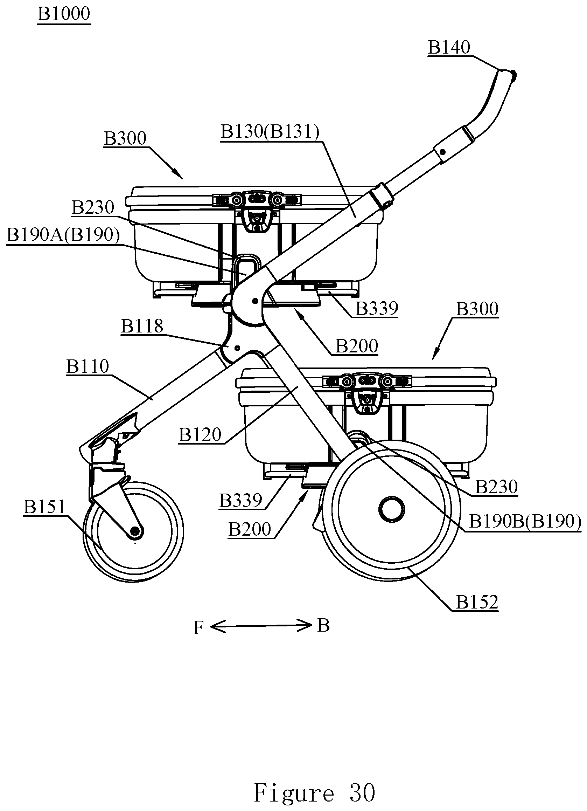

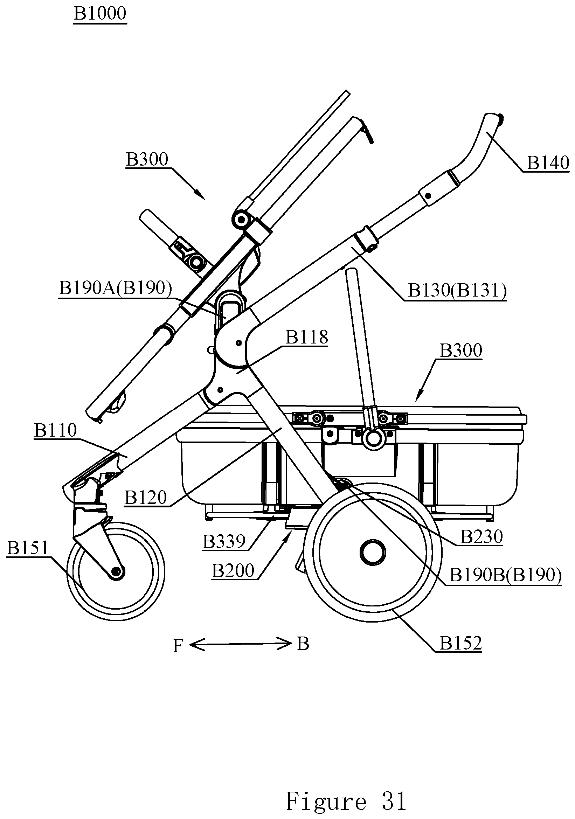

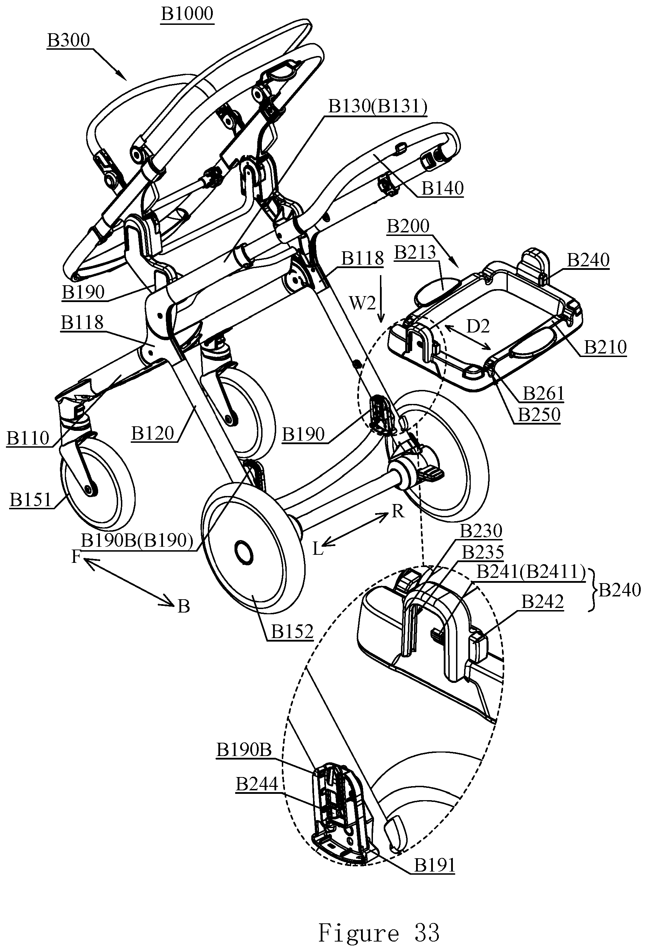

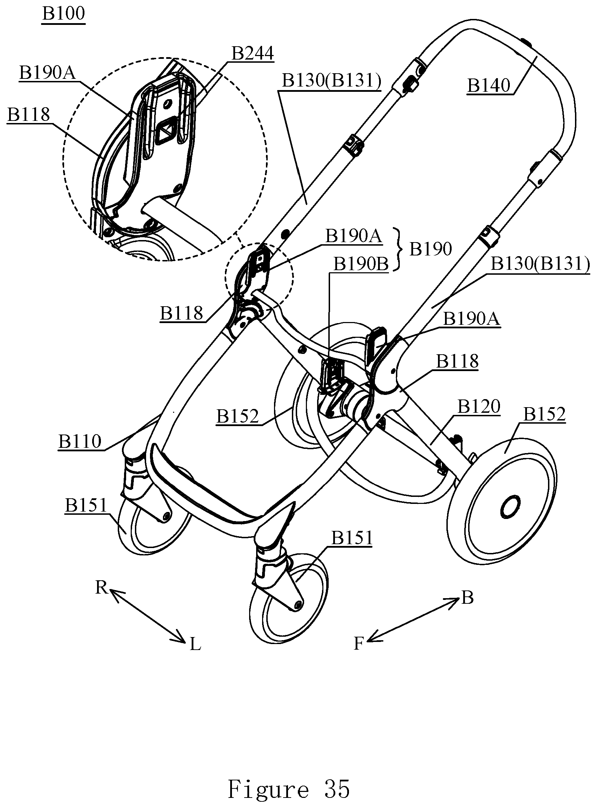

The wheeled mobile device B1000 can be configured with two carriers B300. The two carriers B300 may be carriers B300 of the same type or different types. The two carriers B300 may be mounted on the frame B100 in the same manner or in different manners. Optionally, as shown in Figure 30, both carriers B300 are mounted on the frame B100 via the support assembly B200. For details on how the carriers B300 are mounted on the frame B100 through the support assembly B200, reference may be made to the description in the aforementioned second embodiment, which will not be repeatedly described herein. Alternatively, as shown in Figure 30, one carrier B300 is mounted on the upper first connection base B190A via the support assembly B200, and the other carrier B300 is connected to the lower second connection base B190B via a suitable connection structure. Alternatively, as shown in FIG. 31, one carrier B300 is mounted on the lower second connection base B190B via the support assembly B200, and the other carrier B300 is connected to the upper first connection base B190A via a suitable connection structure. In other words, the carrier B300 may be selectively mounted on either the first connection base B190A or the second connection base B190B via the support assembly B200, or may be connected to the first connection base B190A or the second connection base B190B via a suitable connection structure. With reference to Figures 33 and 35, in this embodiment, the configuration of the first connection base B190A and the configuration of the second connection base B190B are substantially the same.

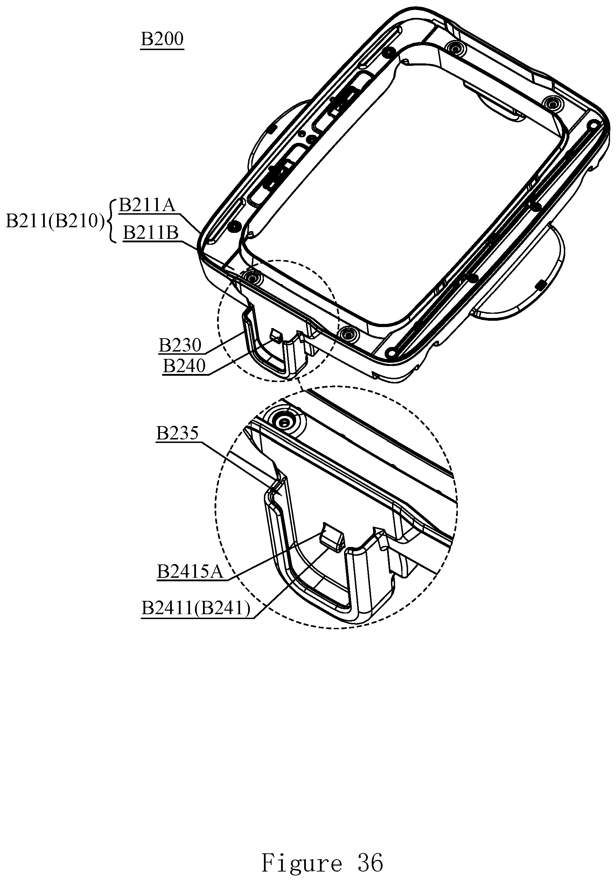

As shown in Figures 33, 34, and 36 to 38, the support assembly B200 includes a support frame B210, a mounting base B230, and a locking mechanism B240. The support frame B210 is in a substantially rectangular configuration. Optionally, the support frame B210 is non-foldable. The support frame B210 comprises a support housing B211 and a reinforcement member B219 disposed within the support housing B211. The reinforcement member B219 includes, for example, a U-shaped reinforcement rod. The support housing B211 includes an upper housing B211A and a lower housing B211B. The first engagement channel B25A is formed on the upper housing B211A, and the first locking component B261A is located within an accommodation cavity enclosed by the upper housing B211A and lower housing B211B. The second engagement channel B25B is formed on the upper housing B211A, and the second locking component B261B is located within the accommodation cavity enclosed by the upper housing B211A and lower housing B211B. The upper housing B211A forms a support plane B213. The support housing B211 is provided with an engagement channel B250 and a locking component B261. The locking component B261 is capable of extending into the engagement channel B250 to lock the engagement rod B339 of the carrier B300 within the engagement channel B250.

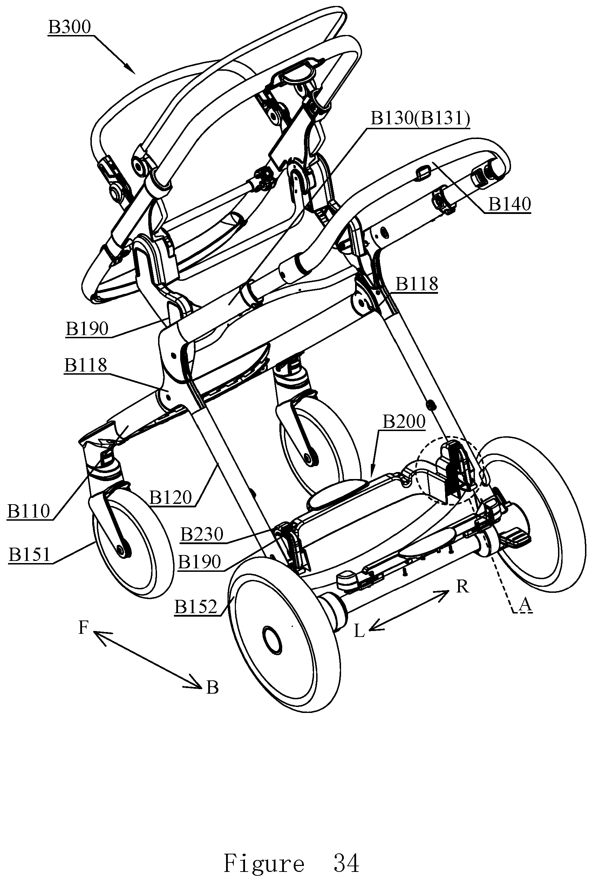

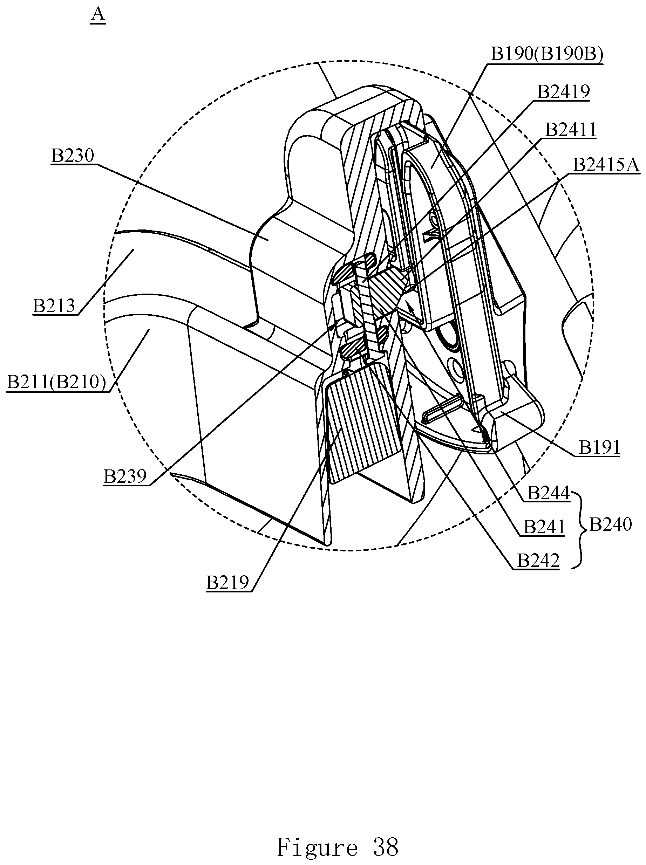

Referring to Figures 34, 36, and 38, the mounting base B230 is integrally formed with the support housing B211, but is not limited thereto. Specifically, the mounting base B230 is integrally formed with the upper housing B211A. The mounting base B230 is provided with a mounting groove B235. The mounting groove B235 is generally U-shaped, with its opening facing downward. The frame B100 is provided with a connection base B190. At least a portion of the connection base B190 can be inserted into the mounting groove B235 through its opening. As shown in Figures 33 and 38, an engagement direction W2 in which the mounting base B230 engages with the connection base B190 is substantially parallel to the up-down direction. The connection base B190 is fixedly or detachably disposed on the frame B100. Optionally, the connection base B190 is provided with an abutting protrusion B191. When the connection base B190 is at least partially engaged within the mounting groove B235, the abutting protrusion B191 abuts against the opening of the mounting groove B235.

As shown in Figures 34, 37, and 38, the locking mechanism B240 may include a locking member B241, a reset member B243, and a release member B242. The locking member B241 is movably disposed on the mounting base B230. Specifically, the locking member B241 is movable relative to the mounting base B230 in a first direction D1. The engagement direction W2 in which the mounting base B230 engages with the connection base B190 is not parallel to the first direction D1. The mounting base B230 is provided with a pass-through channel B239. The locking member B241 passes through the pass-through channel B239 to limit the movement of the locking member B241 in the first direction D1.

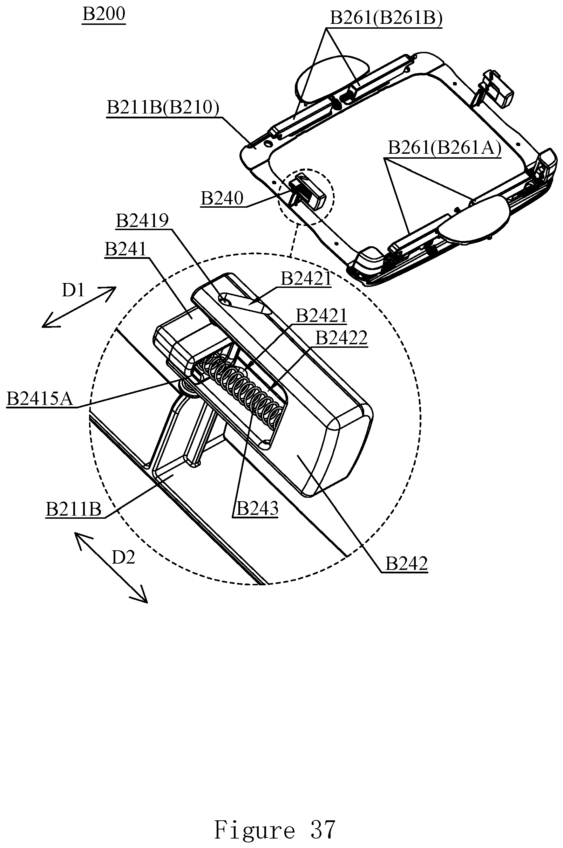

Referring to Figures 37 and 38 together, the release member B242 is movably disposed on the mounting base B230. The release member B242 can be operated and is movable relative to the mounting base B230 in a second direction D2, and the second direction D2 is substantially parallel to the front-rear direction. One of the release member B242 and the locking member B241 is provided with a driving pin B2419, and the other of the release member B242 and the locking member B241 is provided with a driving inclined slot B2421. The driving pin B2419 passes through the driving inclined slot B2421 and can move in an extension direction of the driving inclined slot B2421. In this embodiment, the driving pin B2419 passes through and is detachable from the locking member B241. The driving inclined slot B2421 is disposed on the release member B242. Certainly, the driving pin B2419 may be fixedly disposed on the locking member B241. In an alternative embodiment, the driving pin B2419 may be fixed or detachably disposed on the release member B242, and the driving inclined slot B2421 is disposed on the locking member B241. Thus, when the release member B242 is operated to move in the second direction D2, the driving pin B2419 is driven to move along the driving inclined slot B2421, thereby driving the locking member B241 to move in the first direction D1. Conversely, when the locking member B241 moves in the first direction D1, the driving pin B2419 is driven to move along the driving inclined slot B2421, thereby driving the release member B242 to move in the second direction D2. An extension direction of the driving inclined slot B2421 is not parallel to both the first direction D1 and the second direction D2, and the first direction D1 is not parallel to the second direction D2. Specifically, the first direction D1 is substantially parallel to the left-right direction, and the second direction D2 is substantially parallel to the front-rear direction.

The reset member B243 is disposed between the locking member B241 and the release member B242. The reset member B243 constantly urges the release member B242 to move toward the initial position, thereby driving the locking member B241 by the release member B242 to move toward the locking position. The release member B242 is provided with an accommodation groove B2422. The driving inclined slot B2421 is provided on a side wall of the accommodation groove B2422 and in communication with the accommodation groove B2422. The locking member B241 is at least partially received within the accommodation groove B2422. The reset member B243 has an end abutting against the locking member B241, and another end abutting against the bottom of the accommodation groove B2422. This can prevent the reset member B243 from deviating during the elastic energy storage process.

The wheeled mobile device B1000 and its support assembly B200 provided according to the embodiments of the present disclosure at least have the following beneficial effects, by providing an engagement pin B220 and a connection groove B235 configured to be inserted by the anchoring assembly B330 of the carrier B300, a user can quickly mount the carrier B300 onto the frame B100 or remove it rapidly from the frame B100 as needed. This not only enhances convenience for a user, but also expands the usage modes of the carrier B300, improving its versatility in application.

Additionally, the support assembly B200 can also be adapted to different types of carriers B300 (e.g., safety seats, animal travel crates, carry cot, or stroller seats, etc.). By changing the type of the carrier B300, different needs can be met for the user, improving the versatility of the wheeled mobile device B1000 in application.

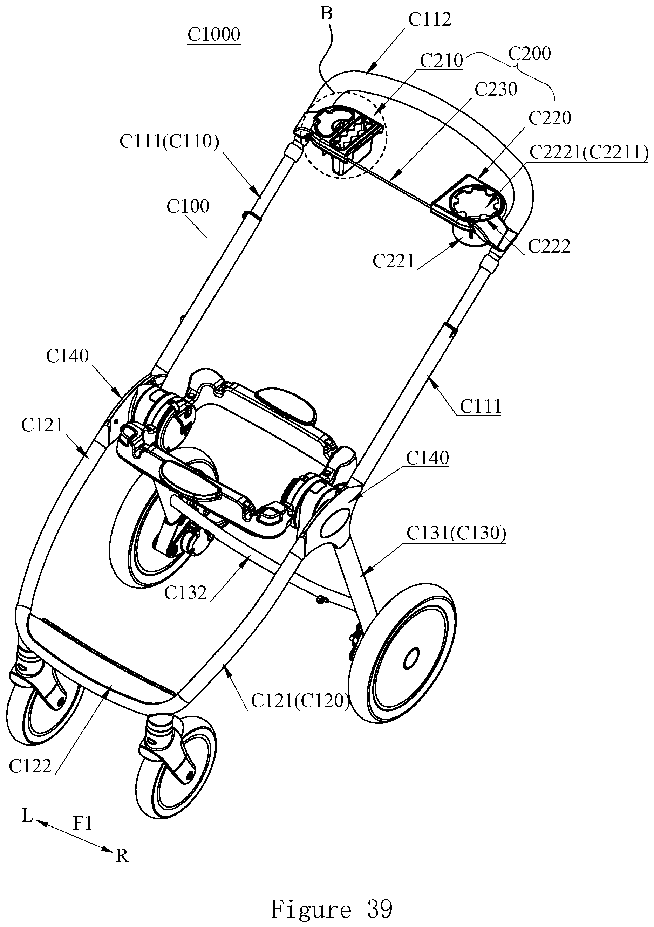

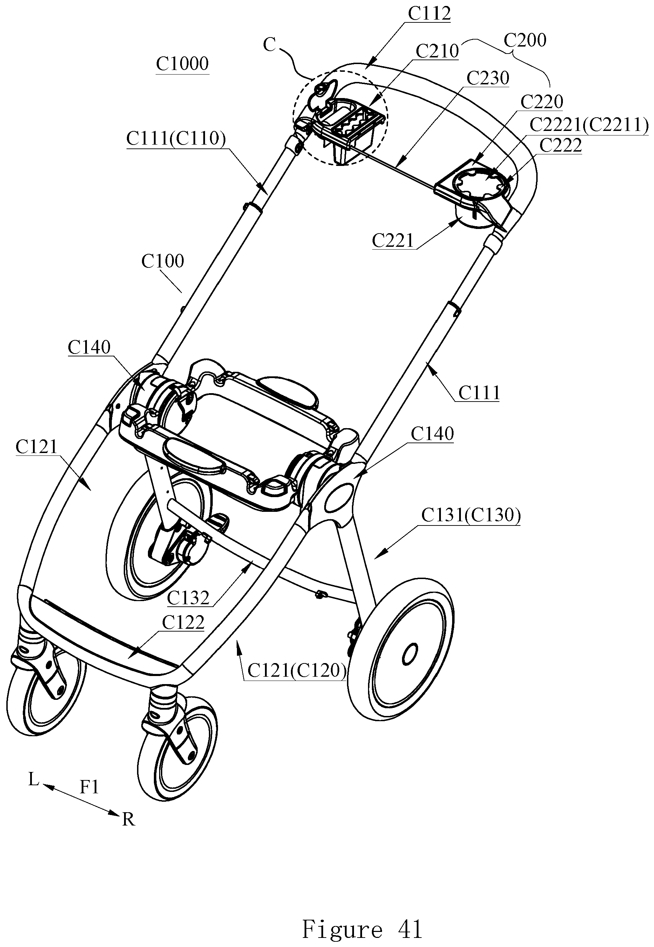

Figures 39 and 41 illustrate a carrying apparatus C1000 (which may also be referred to as a wheeled mobile device in other embodiments) according to an embodiment of the present disclosure. The carrying apparatus C1000 may include a carrying apparatus body C100 (which may also be referred to as a frame in other embodiments) and a storage device C200 according to an embodiment of the present disclosure. The carrying apparatus C1000 may be, but is not limited to, a structure such as a trolley. The following description takes the case where the carrying apparatus C1000 is a trolley as an example to briefly explain the configurations of the carrying apparatus body C100 and the storage device C200.

In an embodiment, when the carrying apparatus C1000 is a trolley, the carrying apparatus body C100 is a frame. The whole configuration of the frame is substantially left-right symmetrical and may include a handle frame C110, a front wheel frame C120, and a rear wheel frame C130. It should be noted that the trolley can be used as a child trolley, pet trolley, shopping trolley, etc. For example, when a seat or carry cot is mounted on the carrying apparatus body C100 (or frame), the trolley can function as a child trolley. When a pet crate is provided on the carrying apparatus body C100 (or frame), the trolley can function as a pet trolley. When a shopping basket is provided on the carrying apparatus body C100 (or frame), the trolley can function as a shopping trolley.

With continued reference to Figures 39 and 41, in an embodiment, the front wheel frame C120 and the rear wheel frame C130 may be fixedly connected through a connection base C140. Similarly, the handle frame C110 may also be fixedly connected to the front wheel frame C120 and the rear wheel frame C130 through the connection base C140. The front wheel frame C120 and the rear wheel frame C130 are arranged at an angle to each other, and the handle frame C110 is arranged at angles to both the front wheel frame C120 and the rear wheel frame C130. Certainly, in another alternative embodiment, the front wheel frame C120 and the rear wheel frame C130 may be pivotally connected to each other through the connection base C140. Similarly, the handle frame C110 may also be pivotally connected to the connection base C140. This allows the carrying apparatus body C100 to be switched between an unfolded state and a folded state.

Referring again to Figures 39 and 41, in an embodiment, both the front wheel frame C120 and the rear wheel frame C130 are in a generally U-shape configuration. The front wheel frame C120 may include front rods C121 at its left and right sides and a front crossbar C122 connected between the two front rods C121. The front crossbar C122 extends substantially in a first direction F1, which is equivalent to the left-right direction. When the carrying apparatus C1000 serves as a child trolley, this front crossbar C122 can also function as a footrest. Similarly, the rear wheel frame C130 may include two rear rods C131 at its left and right sides and a rear crossbar C132 connected between the two rear rods C131. The rear crossbar C132 extends in the first direction F1. Specifically, the upper ends of the two rear rods C131 are connected to the upper ends of the front rods C121 on the same sides via respective connection bases C140, respectively. Certainly, in another alternative embodiment, the front wheel frame C120 and/or the rear wheel frame C130 may be in other implementation forms. For example, the front wheel frame C120 consists solely of two front rods C121 arranged in parallel or joined at an end to form in a V-shaped configuration. Alternatively, the rear wheel frame C130 may consist solely of two rear rods C131 arranged in parallel or joined at an end to form in a V-shaped configuration.

It should be noted that unless otherwise expressly specified and defined, the directional terms such as "left" and "right" with reference to the carrying apparatus C1000 in various embodiments of the present disclosure are based on the "left" and "right" directions of the carrying apparatus C1000 during normal propulsion, with arrows L and R in the drawings schematically indicating the "left" and "right" directions. These directional terms are used solely to make the description of the embodiments of the present disclosure clearer and are not intended to unduly limit the scope of protection of the present disclosure.

Referring to Figures 39 and 41, in an embodiment, the handle frame C110 includes pushing rods C111 and a handrail rod C112. Two pushing rods C111 are provided, and the handrail rod C112 is connected between two pushing rods C111. The handrail rod C112 is configured for a user to grip to push the carrying apparatus C1000. For example, the lower ends of the two pushing rods C111 are connected to the connection bases C140 on the same sides, respectively.

It should be noted that the pushing rods C111 in this embodiment may be configured as a retractable rod. Alternatively, the pushing rods C111 may be configured as a foldable rod or a non-bendable straight rod.

When a user goes outside using the aforementioned carrying apparatus C1000 as a pet trolley, she/he typically needs to carry numerous objects. These objects include, but are not limited to, a water cup for providing water, tissues (such as a roll of tissues or pull-out tissues), and garbage bags for collecting pet excrement, among others. To improve the portability of various objects, an embodiment of the present disclosure provides a storage device C200 suitable for mounting on the carrying apparatus body C100 to allow the user to store various objects, referring to Figures 39 to 42.

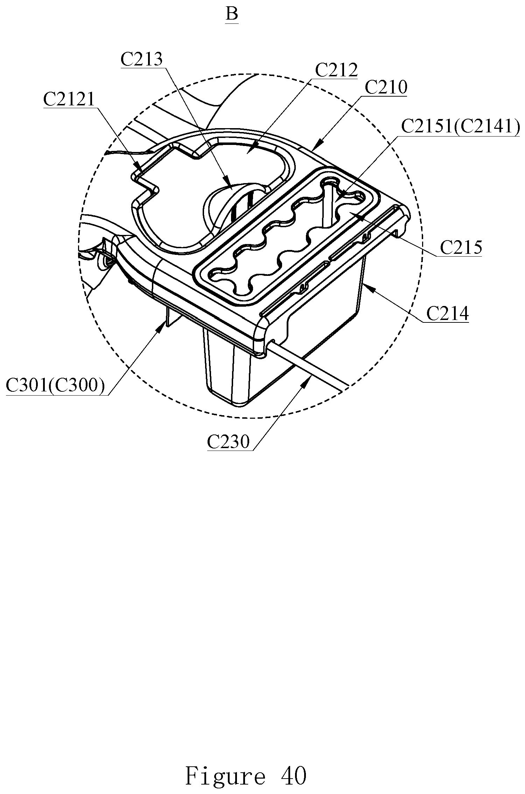

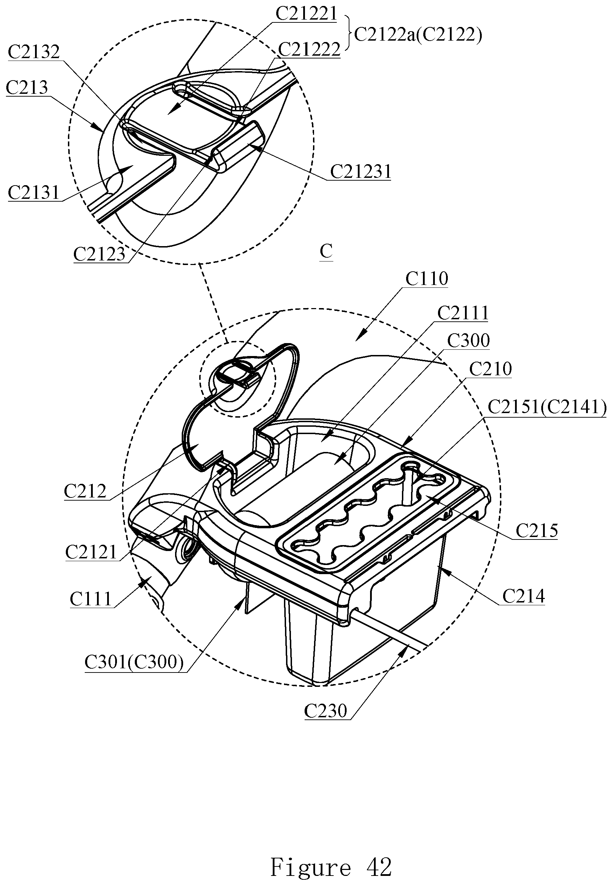

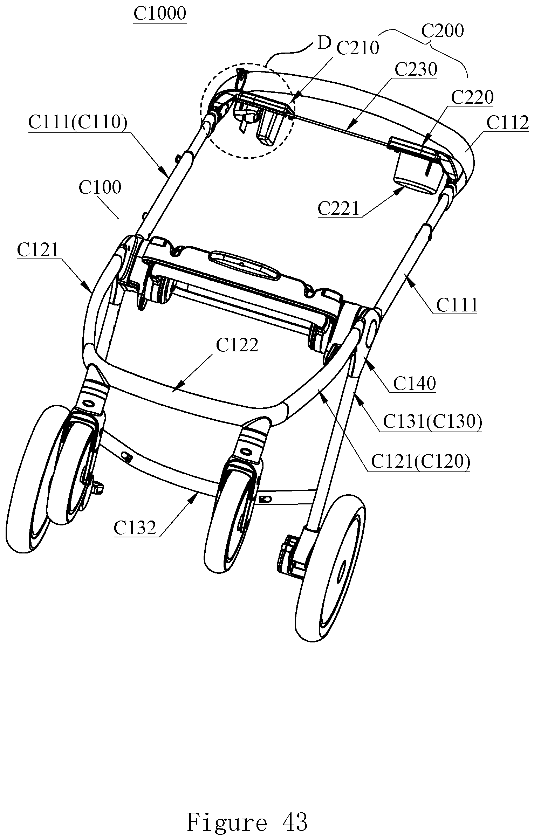

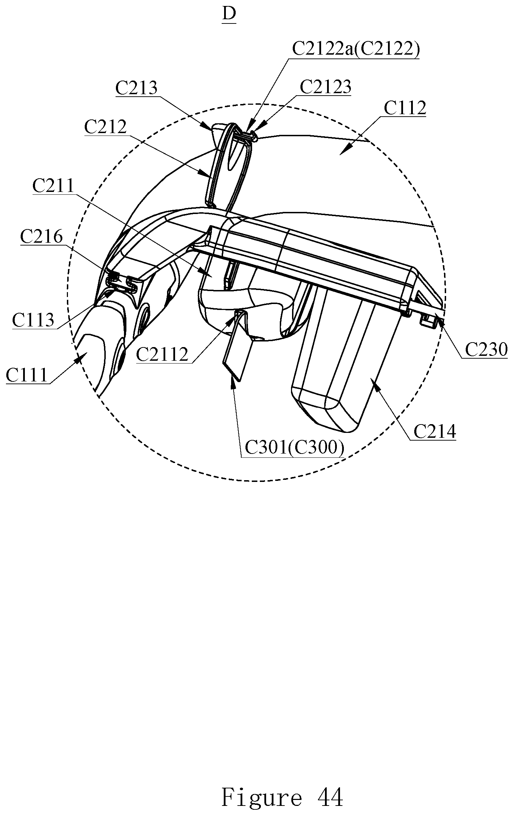

Figures 40 and 42 illustrate a storage device C200 according to an embodiment of the present disclosure, which includes a first storage rack C210. Specifically, as shown in Figures 39 to 42, the first storage rack C210 is connected to the handle frame C110 of the carrying apparatus body C100. More specifically, the first storage rack C210 is connected to one of the pushing rods C111 of the handle frame C110. Specifically, the first storage rack C210 has a first storage member C211 (see Figure 44) and a cover C212. The first storage member C211 is hollow to be configured to store a to-be-taken object C300. The first storage member C211 is provided with a first opening C2111 and a second opening C2112 (see Figure 44). The cover C212 is movably disposed at the first opening C2111, so that the cover C212 has a first use position (see Figure 40) and a second use position (see Figure 42). When the cover C212 is at the first use position, it covers the first opening C2111. When the cover C212 is at the second use position, the first opening C2111 is exposed, enabling a user to place the to-be-taken object C300 inside. The second opening C2112 is configured for a portion of an edge of the to-be-taken object C300 to extend therethrough (see Figures 43 and 44), so as to facilitate being pulled by the user.

It should be noted that the aforementioned to-be-taken object C300 may be a roll of garbage bags C301. The roll of garbage bags C301 refers to a roll of garbage bags that are continuous and pre-cut. During use, the user only needs to pull an end of a garbage bag and tear off one garbage bag along the pre-cut dividing lines. Certainly, in other embodiments, the to-be-taken object C300 may be a roll of tissues or a tissue box containing tissues. An end or partial edge of the tissues may extend out from the second opening C2112, allowing the user to directly pull the tissues from the second opening C2112.

The following describes the operational effects of certain configuration of the storage device C200 briefly, taking a roll of garbage bags C301 as the to-be-taken object C300 for example. In the aforementioned storage device C200, the first storage member C211 is designed as hollow and is equipped with a first opening C2111, such that the user can place the roll of garbage bags C301 inside the first storage member C211 through the first opening C2111. Additionally, the first storage member C211 further has a second opening C2112, which allows an end of the roll of garbage bags C301 to extend outward, enabling the user to easily tear off a garbage bag from the second opening C2112 as needed. Furthermore, since the cover C212 is movably disposed at the first opening C2111, it can be switched between a first use position and a second use position. When the cover C212 is at the first use position, it can cover the first opening C2111. Therefore, after the roll of garbage bags C301 is placed inside the first storage member C211, the cover C212 can be kept at the first use position. When users pull a garbage bag downward through the second opening C2112 at any time, the cover C212 can effectively prevent the roll of garbage bags C301 from a phenomenon of "being popped off" due to an uneven pulling force, thereby preventing accidental detachment of the roll of garbage bags C301 from the first storage member C211. In summary, the storage device C200 is designed with full consideration for both convenient storage and access of the roll of garbage bags C301 and the stability of the roll of garbage bags C301 during use, and it prevents the roll of garbage bags C301 from accidental detachment due to improper operation and improves the usability of the carrying apparatus C1000.

It should be noted that when the to-be-taken object C300 is a roll of tissues or a tissue box containing tissues, an end or partial edge of the tissue can extend outward from the second opening C2112 beyond the first storage member C211. Consequently, when tissues are needed, users can directly pull the tissues from the second opening C2112.

Referring to Figures 40 and 42, in an embodiment, the cover C212 includes a pivot portion C2121. The cover C212 is pivotally connected to the first storage rack C210 via the pivot portion C2121, enabling the cover C212 to switch between a first use position and a second use position. Certainly, in another alternative embodiment, the cover C212 may be slidably disposed on the first storage rack C210, which likewise allows the cover C212 to switch between the first use position and the second use position.

With continued reference to Figures 40 and 42, in an embodiment, a side wall of the first storage member C211 is provided with a first engagement portion, and the cover C212 has a second engagement portion C2122. Specifically, when the cover C212 is pivoted to the first use position, the second engagement portion C2122 is engaged with the first engagement portion to restrict the cover C212 from being switched to the second use position. This enables the cover C212 to stably cover at the first opening C2111. More specifically, the second engagement portion C2122 and the pivot portion C2121 are arranged opposite to each other in the circumferential direction of the cover C212. This can enhance both the stability and reliability of the cover C212 when locked.

In an embodiment, one of the first engagement portion and the second engagement portion C2122 is an elastic arm C2122a, and the other is an engagement opening. The elastic arm C2122a is provided with a limiting protrusion C2123 that is engaged with the engagement opening. Specifically, as shown in Figures 42 and 44, in this embodiment, the first engagement portion may be the engagement opening, and the second engagement portion C2122 is the elastic arm C2122a. The elastic arm C2122a has an operation end C21221 and a locking end C21222 on which the limiting protrusion C2123 is located. When the first cover C212 is at the first use position, the locking end C21222 extends into the first opening C2111 and is engaged with the engagement opening, and at least a portion of the operation end C21221 protrudes from the first opening C2111, so that the user operates (e.g., presses) the operation end to disengage the locking end C21222 from the engagement opening. It should be noted that, the "engagement opening" may be directly in a recess or hole configuration provided on the side wall of the first storage member C211. Certainly, the "engagement opening" may be a mouth of a hook disposed on the side wall of the first storage member C211, the hook is inverted and the opening of the mouth substantially faces downward in the vertical direction.

Referring to Figures 40 and 42, in an embodiment, an operation member C213 is provided on a side of the cover C212 facing away from the first opening C2111. When the cover C212 is at the first use position, the operation member C213 protrudes from a surface of the cover C212. This is convenient for a user to flip the cover C212 via the operation member C213. Specifically, the operation member C213 is provided at and protrudes from an edge of the cover C212 and is arranged opposite to the pivot portion C2121. The operation member C213 may be in a columnar, cubic, or conical-shaped configuration. Specifically, in this embodiment (as shown in Figures 40 and 42), the operation member C213 is shaped as a 1/2 cone structure, with a bottom wall of the cone structure is flush with the edge of the cover C212. The bottom wall of the cone structure is defined as an operation side wall C2131 of the operation member C213. The operation side wall C2131 is provided with a notch C3132, and the elastic arm C2122a is disposed at the notch C3132. Specifically, the side wall of the first storage member C211 provided with the engagement opening is defined as a mating wall. When the cover C212 is at the first use position, the operation side wall C2131 is arranged opposite to the mating wall and at least partially protrudes from the first opening C2111.

When the cover C212 is switched from the second use position to the first use position, the user can directly flip the cover C212 to make it cover the first opening C2111. During the covering process, the limiting protrusion C2123 at the locking end C21222 of the elastic arm C2122a first abuts against the mating wall, causing the elastic arm C2122a to deform and develop a tendency to move away from the mating wall. Once the limiting protrusion C2123 aligns with the engagement opening, the elastic arm C2122a resets, and the limiting protrusion C2123 is engaged with the engagement opening, thereby restricting the locking end C21222 of the elastic arm C2122a within the first storage member C211. To improve the service life of the elastic arm C2122a and reduce the insertion resistance of the limiting protrusion C2123, a guiding slope C21231 is provided on the limiting protrusion C2123. When the cover C212 is switched from the first use position to the second use position, the user can first press the exposed operation end C21221 of the elastic arm C2122a, so that the operation end C21221 drives the locking end C21222 to move in a direction away from the mating wall and the limiting protrusion C2123 is disengaged. Subsequently, by gripping the operation member C213, the cover C212 can be flipped to the second use position through the operation member C213.

Referring to Figures 42 and 44, in an embodiment, the first opening C2111 and the second opening C2112 are arranged opposite to each other, with the second opening C2112 facing the ground. Specifically, the second opening C2112 is located at a bottom of the first storage member C211. Certainly, in another alternative embodiment, the second opening C2112 may be located on a side wall of the first storage member C211.

Referring to Figures 40 and 42, in an embodiment, the first storage rack C210 further includes a second storage member C214. Similarly, the second storage member C214 is hollow and has a third opening C2141. The second storage member C214 can be configured for the placement of various objects, such as a mobile phone, disinfectant, etc. as needed by a user. Optionally, the shape of the second storage member C214 is not specifically limited, for example, it may be a cubic structure, or a circular cylinder structure, or the like. Specifically, in this embodiment, the second storage member C214 is a flat cubic structure primarily used for storing mobile phones. More specifically, an edge of a wall of the third opening C2141 is provided with a first limiting baffle C215, which extends circumferentially around the third opening C2141. The first limiting baffle C215 is provided with a first through-hole C2151 in communication with the third opening C2141, and an inner wall of the first through-hole C2151 entirely exhibits a concave-convex profile. Specifically, the first limiting baffle C215 may be made of plastic (such as thermoplastic elastomer (TPE), rubber, or silicone), but is not limited thereto. Upon an object such as a mobile phone is placed into the second storage member C214, the first limiting baffle C215 is in contact with the outer surface of the mobile phone, thereby increasing the friction coefficient between the first limiting baffle C215 and the mobile phone. This effectively prevents the mobile phone from accidental detachment due to accident circumstances. Additionally, since the first limiting baffle C215 is made of flexible plastic, it can prevent the mobile phone from directly and rigidly colliding with the edge of the third opening C2141 during movement of the carrying apparatus body C100, reducing potential damage to the mobile phone.

It should be noted that at least one second storage member C214 can be provided on the first storage rack C210. When a plurality of second storage bodies C214 are provided, the shapes of the respective second storage bodies C214 may be identical or different.

Referring to Figures 39, 41, and 43, in an embodiment, the storage device C200 further includes a second storage rack C220. The second storage rack C220 is configured to be connected to the carrying apparatus body C100. Specifically, the second storage rack C220 is connected to the handle frame C110. The second storage rack C220 includes a third storage member C221, which is hollow and has a fourth opening C2211. The second storage member C214 can be configured to hold various objects, such as a water glass, a mobile phone, disinfectant, etc., as needed by a user. Similarly, the shape of the third storage member C221 is not specifically limited, for example, it may be a cubic structure, or a circular cylinder structure, or the like. Specifically, in this embodiment, the third storage member C221 is a cylindrical structure, primarily configured to store a water glass or a beverage bottle. More specifically, an edge of a wall of the fourth opening C2211 is provided with a second limiting baffle C222, which extends circumferentially around the fourth opening C2211. The second limiting baffle C222 is provided with a second through-hole C2221 in communication with the fourth opening C2211, and an inner wall of the second through-hole C2221 entirely exhibits a concave-convex profile. Specifically, the second limiting baffle C222 may be made of plastic (e.g., TPE, rubber, or silicone), but is not limited thereto. Upon an object such as a water glass, a beverage bottle, or the like is placed into the third storage member C221, the second limiting baffle C222 is in contact with the outer wall of the water glass or the beverage bottle, thereby increasing the frictional coefficient between the second limiting baffle C222 and the water glass or the beverage bottle. This can effectively prevent the water glass or the beverage bottle from accidental detachment due to accident circumstances. Additionally, the second limiting baffle C222 also helps to mitigate an impact force between the water glass or the beverage bottle and the edge of the fourth opening C2211.

It should be noted that at least one third storage member C221 can be provided on the second storage rack C220. When a plurality of third storage bodies C221 are provided, the shapes of the respective third storage bodies C221 may be identical or different.

In an embodiment, the first storage rack C210 and the second storage rack C220 may be mounted on the two pushing rods C111, respectively. This is beneficial for maintaining the balance of the carrying apparatus body C100. Certainly, in another alternative embodiment, both the first storage rack C210 and the second storage rack C220 may be connected to the same pushing rod C111 of the pushing frame. That is, both the first storage rack C210 and the second storage rack C220 are mounted on the pushing rod C111 on the left or right side. The first storage rack C210 and the second storage rack C220 may be fixedly connected to the pushing rod C111. Certainly, they may be mounted on the pushing rod C111 in a detachable connection manner, for example, by engagement, adhesive bonding, etc. Specifically, in this embodiment, as shown in FIG. 44, the pushing rod C111 is provided with a special-shaped engaged groove C113, and the first storage rack C210 and the second storage rack C220 are provided with engaging portions C216 respectively. Both the first storage rack C210 and the second storage rack C220 are engaged with the respective special-shaped engaged grooves C113 on the pushing rod C111 via the engaging portions C216 provided on the the first storage rack C210 and the second storage rack C220.

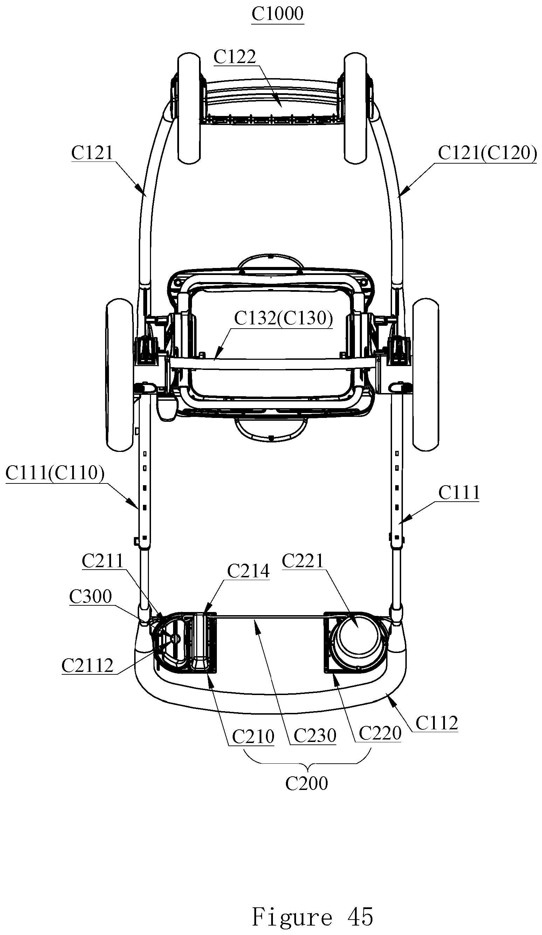

Referring to Figures 39, 41, 43, and 45, in this embodiment, the first storage rack C210 and the second storage rack C220 are respectively connected to the two pushing rods C111. In an embodiment, the storage device C200 further includes a supporting member C230 connected between the first storage rack C210 and the second storage rack C220. This increases the support points for the first storage rack C210 and the second storage rack C220, thereby improving the stability of the first storage rack C210 and the second storage rack C220 after being mounted. Additionally, the supporting member C230 can be configured to hang some relatively lightweight objects, such as towels, ropes, garbage bags, or the like. Optionally, the supporting member C230 may be made of plastic or metal, but is not specifically limited thereto herein.

The technical features of the above-mentioned embodiments can be combined arbitrarily. In order to make the description concise, not all possible combinations of the respective technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

The present application provides a transportation system D1000 that can easily accommodate a pet carrier D200 on a stroller.

One or more embodiments of the disclosed system are elaborated by way of example and with reference to the accompanying drawings, but are not limited thereto.

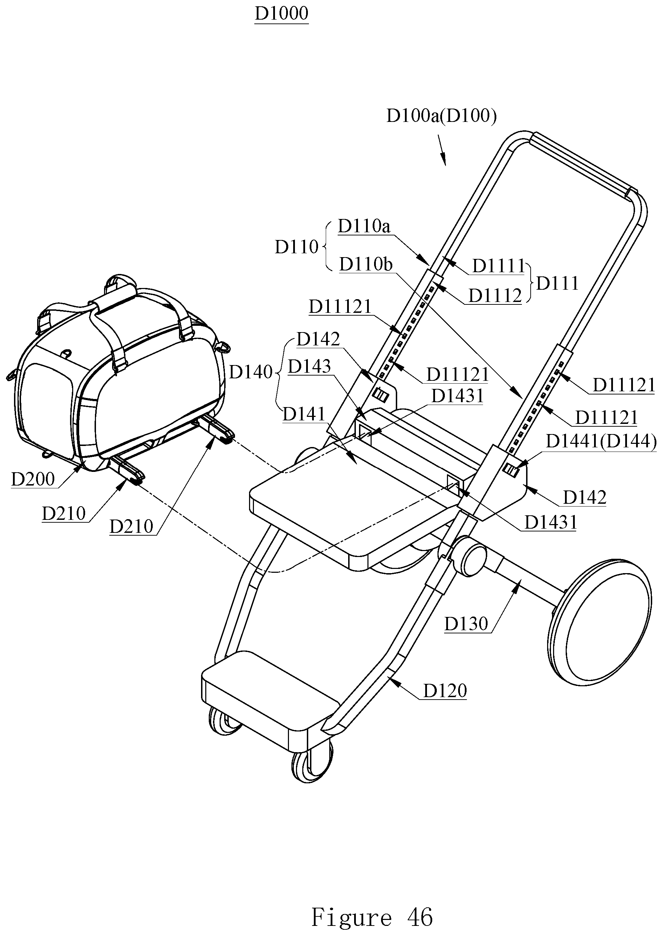

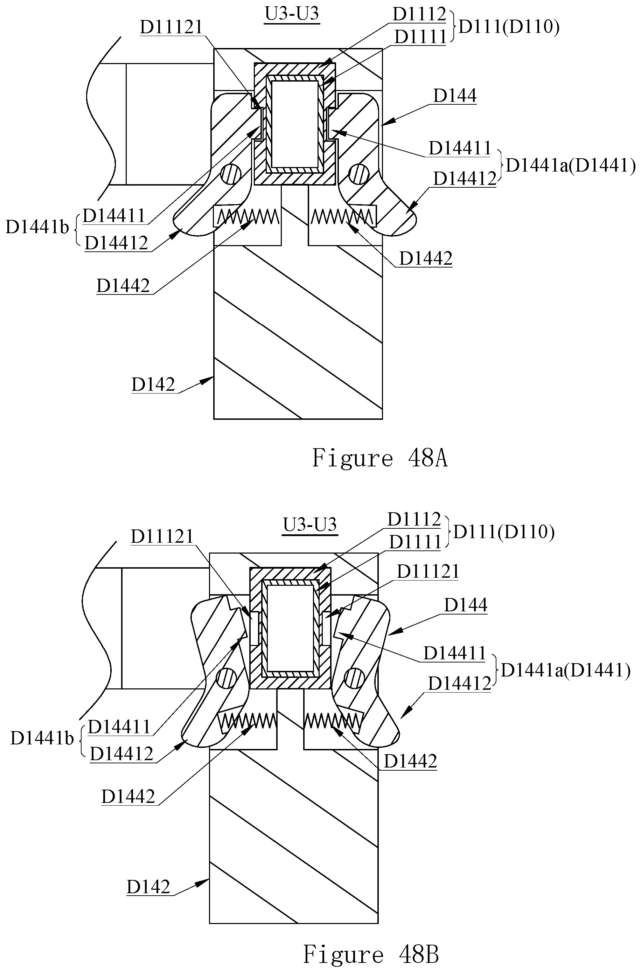

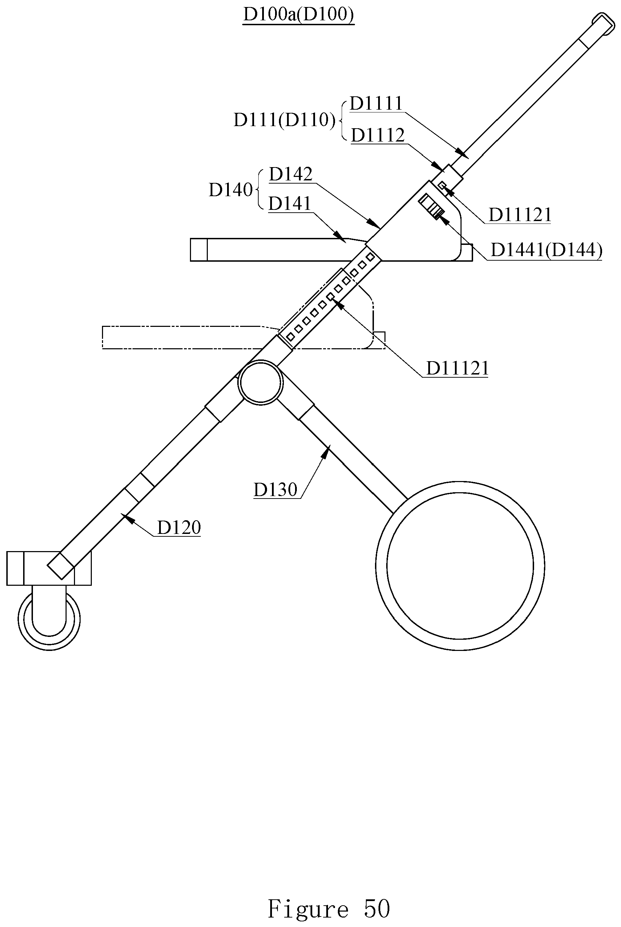

Referring to Figures 46 to 50, an embodiment of a transportation system D1000 for carrying a pet carrier D200 is illustrated. As shown in Figure 46, an example of the transportation system D1000 is illustrated. As illustrated, the transportation system D1000 includes a pet carrier D200 and a stroller D100. The stroller D100 has a frame D100a, which includes handles D110, a pair of rear leg rods D130, and a pair of front leg rods D120. Two handles D110 are provided, which are a left handle D110a and a right handle D110b, respectively. The front leg rods D120 are located below the handle D110 and are substantially in the same plane as the handle D110. The handle D110, front leg rods D120, and rear leg rods D130 are pivotally connected to each other, allowing the frame D100a to be unfolded or folded. The present disclosure describes a carrying assembly D140 mounted between the left handle D110a and the right handle D110b. The carrying assembly D140 includes a supporting member D141 (also referred to as a supporting base), a first connecting part D142 (also referred to as a sliding base in this embodiment) on each side, and a second connecting part D143 (also referred to as a connecting base in this embodiment). The supporting member D141 is configured to support the pet carrier D200, and the second connecting part D143 is configured to be connected to the first connecting part D142. The supporting member D141 is also connected to the first connecting part D142. In this embodiment, the handle D110 includes a handle rod D1111 and a sleeve rod D1112 located outside the handle rod D1111. As shown in Figure 46, the pet carrier D200 includes a pair of anchors D210 that can be inserted into a vehicle or airplane's LATCH or ISOFIX system. According to a non-limiting embodiment disclosed in the present disclosure, the stroller D100 may include the second connecting part D143 of the present disclosure, and the second connecting part D143 has connection grooves D1431 (also referred to as pockets) to accept or receive the anchors D210 of the pet carrier D200 in the same manner. In a non-limiting embodiment as illustrated, the carrying assembly D140 further includes a locking device D144, which is provided on the first connecting part D142. The locking device D144 can be locked or unlocked with the frame D100a, so that the carrying assembly D140 arrives at a desired position by moving the first connecting part D142 along the frame D100a, and is thus more adaptable to the adjustment of the height of the carrying assembly D140.

More specifically, the first connecting part D142 is connected to the first rod D111 of the frame D100a, and the first connecting part D142 moves along the first rod D111. In a non-limiting embodiment as illustrated, the sleeve rod D1112 serves as the first rod D111 of the frame D100a. The first connecting part D142 is connected to the sleeve rod D1112 and moves along the sleeve rod D1112. In some embodiments not shown, the handle D110 is not provided with the sleeve rod D1112 but only provided with the handle rod D1111, which serves as the first rod D111 of the frame D100a. The first connecting part D142 is connected to the handle rod D1111, and the carrying assembly D140 can move along the handle rod D1111. In other embodiments not shown, the front leg rod D120 or the rear leg rod D130 serves as the first rod D111 of the frame D100a. The first connecting part D142 is connected to the front leg rod D120 or the rear leg rod D130, and the carrying assembly D140 can move along the front leg rod D120 or the rear leg rod D130.

In an embodiment, the first rod D111 is provided with a plurality of holes D11121 for receiving the locking device D144 when the first connecting part D142 moves along the first rod D111. More specifically, the plurality of holes D11121 are configured to receive an actuating part D1441 of the locking device D144 by pivoting the actuating part D1441 of the locking device D144 about an axis. In an exemplary or representative embodiment, the actuating part D1441 includes a protruding part D14411 that can be received in the plurality of holes D11121 of the first rod D111 to lock the locking member with the frame D100a. Specifically, the actuating part D1441 includes a finger D14412 and the protruding part D14411, which are arranged on opposite sides of the actuating part D1441, respectively. The protruding part D14411 faces inwardly toward the first rod D111, and the finger D14412 faces outward from the first rod D111. A resilient member D1442 may be positioned between the actuating part D1441 pivotable about the axis and the frame D100a. The connection groove D1431 of the second connecting part D143 is similar to the connection groove B212 in the aforementioned embodiment. Meanwhile, the second connecting part D143 is further provided with an engagement member D1432 (e.g., an engagement pin) located within the connection groove D1431. The engagement member D1432 is configured to be connected to the anchor D210 of the pet carrier D200, which will not be repeatedly described here.

In an embodiment, the locking device D144 further includes a first actuating part D1441a on a first side of the first connecting part D142 and a second actuating part D1441b on a second side of the first connecting part D142. Each of the first actuating part D1441a and the second actuating part D1441b further includes a finger D14412 and a protruding part D14411 located on opposite sides thereof. The locking member further includes a resilient member D1442 positioned between the first actuating part D1441a and the second actuating part D1441b. The resilient member D1442 is connected between the frame D100a and each of the first actuating part D1441a and the second actuating part D1441b. The first actuating part D1441a is pivotally movable about a first axis, and the second actuating part D1441b is pivotally movable about a second axis. The protruding part D14411 is receivable in the plurality of holes D11121 of the first rod D111. Specifically, the protruding part of the first actuating part D1441a and the protruding part of the second actuating part D1441b are receivable in the plurality of holes D11121 of the first rod D111 respectively, thereby locking the locking member with the frame D100a. In some embodiments, the supporting member D141 of the carrying assembly D140 is detachable.

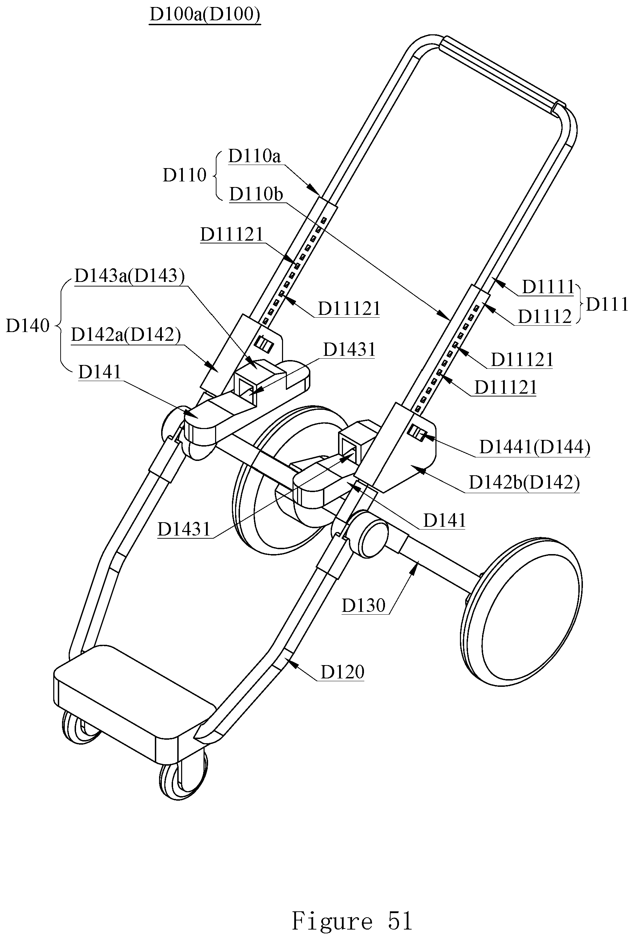

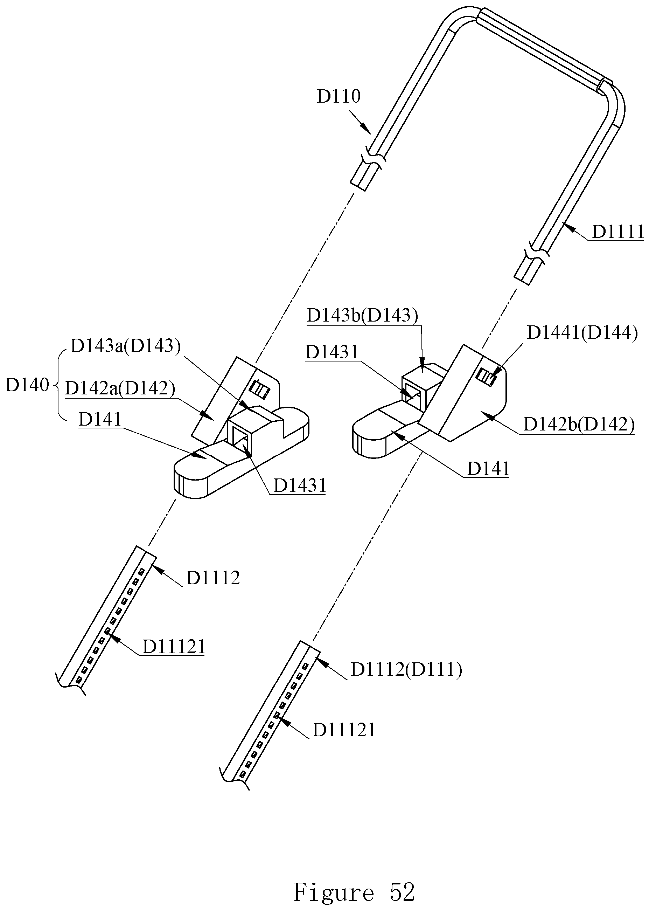

Figure 51 is a schematic diagram showing an isometric view of an exemplary or representative embodiment of the transportation system D1000. Figure 52 is an enlarged exploded view of an exemplary or representative embodiment of the transportation system D1000.

In some embodiments, as shown in Figures 51 to 54, the first connecting part D142 may not be connected to both the second connecting parts D143 on two opposite sides, but may be connected to the second connecting part D143 on one side. This allows the first connecting part D142 to move independently along the first rod D111 without being disturbed by the movement of the first connecting part D142 on the other side. The first connecting part D142 and second connecting part D143 of the carrying assembly D140 are detachably connected. Specifically, the first connecting part D142 further includes a first sliding base D142a and a second sliding base D142b, and the second connecting part D143 further includes a first connecting base D143a and a second connecting base D143b. The first sliding base D142a and second sliding base D142b are connected to the first connecting base D143a and second connecting base D143b respectively, and move independently along the frame D100a. In some embodiments, the supporting member D141 is not connected to both the second connecting parts D143, but rather two supporting members D141 are connected to two second connecting parts D143 respectively. More specifically, the supporting member D141 extends from a side of the second connecting part D143 to support the pet carrier D200.

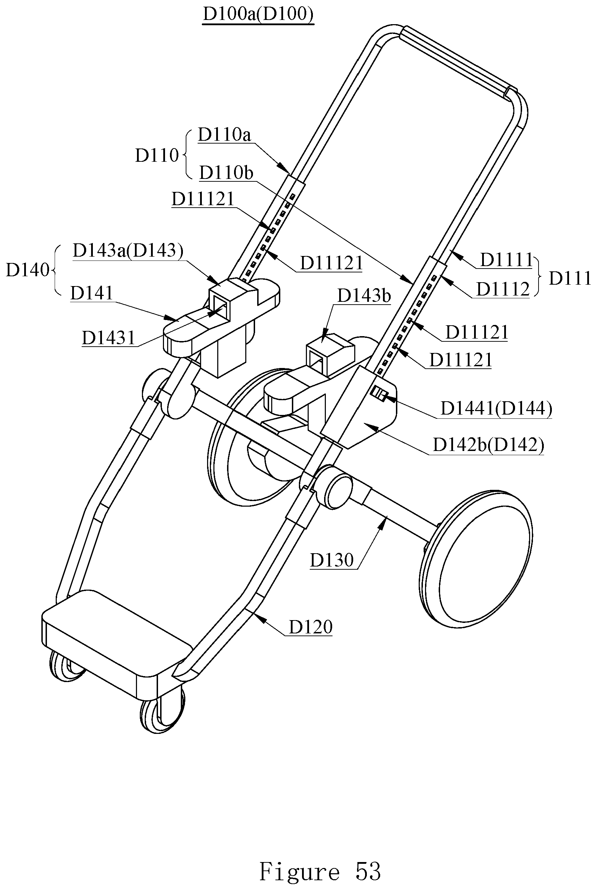

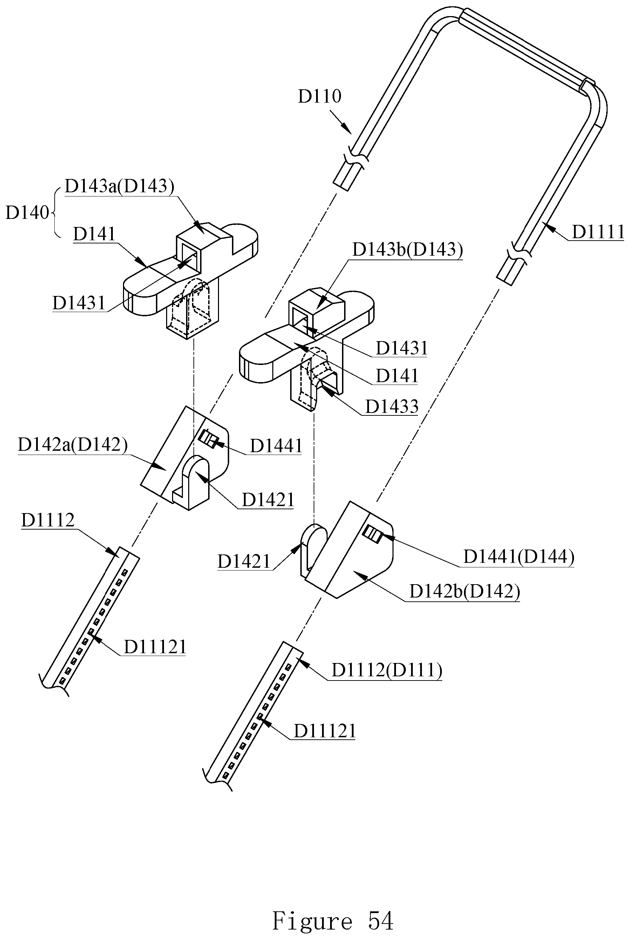

In another representative embodiment of the carrying assembly D140 of the transportation system D1000 as shown in Figures 53 and 54, the first connecting part D142 and the second connecting part D143 may be connected by blocks in a male-female connection manner, but not limited to the embodiment introduced herein. The first connecting part D142 is provided with a connector D1421, which in this embodiment protrudes inwardly (i.e., toward an inner side of the stroller D100). The second connecting part D143 is provided with a mounting groove D1433 (also referred to as a pocket), into which the connector D1421 can be inserted or from which the connector D1421 can be removed. When the mounting groove D1433 of the second connecting part D143 is inserted by and engaged with the connector D1421 of the first connecting part D142, the second connecting part D143 is mounted on the stroller D100, and the anchor D210 of the pet carrier D200 can be connected to the engagement member D1432 within the connecting groove D1431 of the second connecting part D143, thereby achieving connection of the pet carrier D200 to the stroller D100. In some non-limiting embodiments, the positions of the connector D1421 and the mounting groove D1433 are interchangeable, with the connector D1421 provided on the second connecting part D143 and the mounting groove D1433 provided on the first connecting part D142.

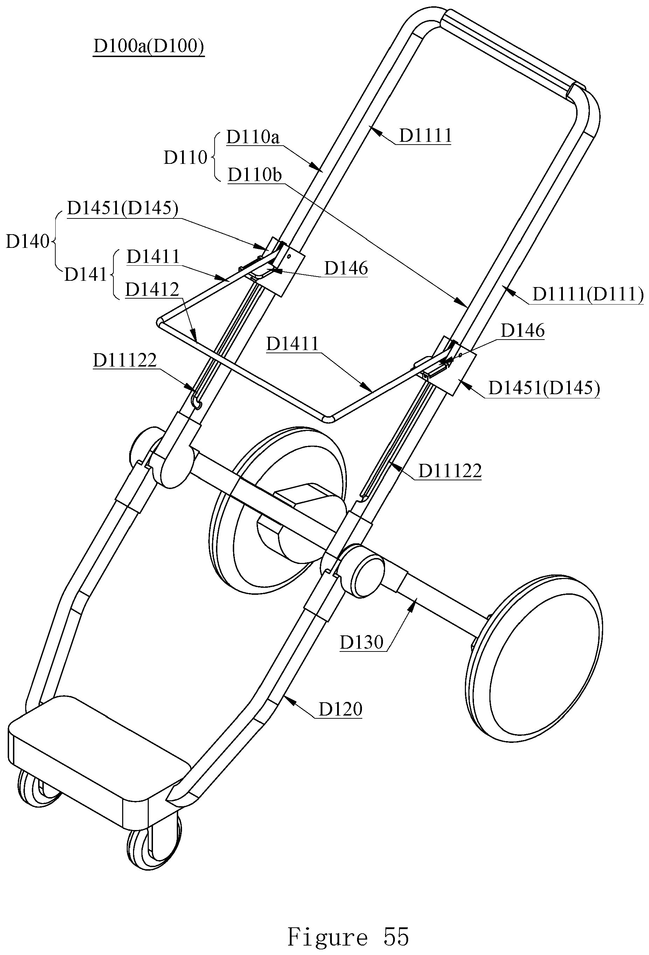

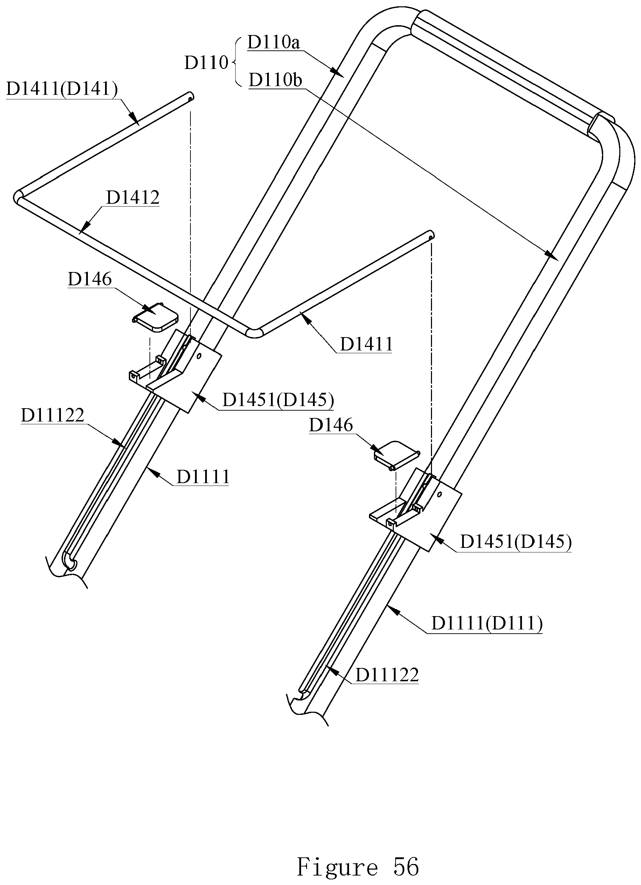

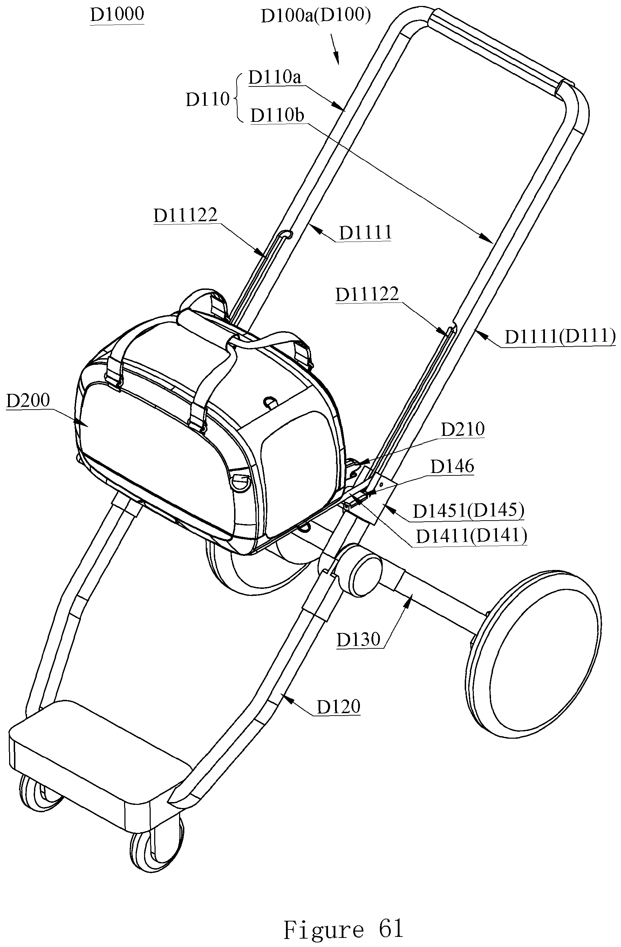

Referring to Figures 55 to 62, another representative embodiment of the carrying assembly D140 is illustrated. With reference to Figures 56 to 59, the carrying assembly D140 includes a supporting member D141 and a connecting part D145. The supporting member D141 is movably connected to the connecting part D145 and is switchable between a use position and a storage position, and the connecting part D145 is connected to the frame D100a. When the supporting member D141 is at the use position, the supporting member D141 is configured to support the pet carrier D200.

Referring to Figure 56, in this embodiment, the supporting member D141 is a pivotable supporting frame that can pivotally move relative to the connecting part D145. When the supporting member D141 (i.e., the pivotable supporting frame) is at the storage position, it can be stored in a groove D11122 provided in the first rod D111. A caregiver may place the pet carrier D200 on the pivotable supporting frame when travel. It should be noted that in this embodiment, the first rod D111 may be the handle rod D1111 of the handle D110. In other embodiments, the first rod D111 may be the sleeve rod D1112 of the handle D110, the front leg rod D120, or the rear leg rod D130.

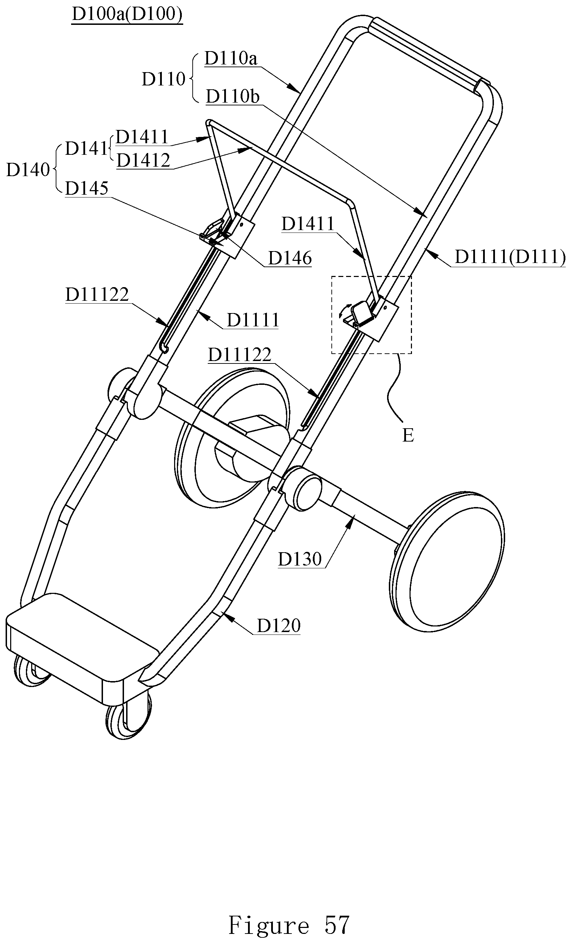

In a representative embodiment as illustrated, the connecting part D145 is provided with a limiting member D146 (also referred to as a locking device). The limiting member D146 is disposed on the connecting part D145 and is switchable between a closed position and an open position. The limiting member D146 is configured to hold the supporting member D141 (i.e., the pivotable supporting frame) stationary when it is at a closed position as shown in Figures 55 and 56 and to release the supporting member D141 (i.e., the pivotable supporting frame) movable when it is at an open position as shown in Figures 57 to 58.

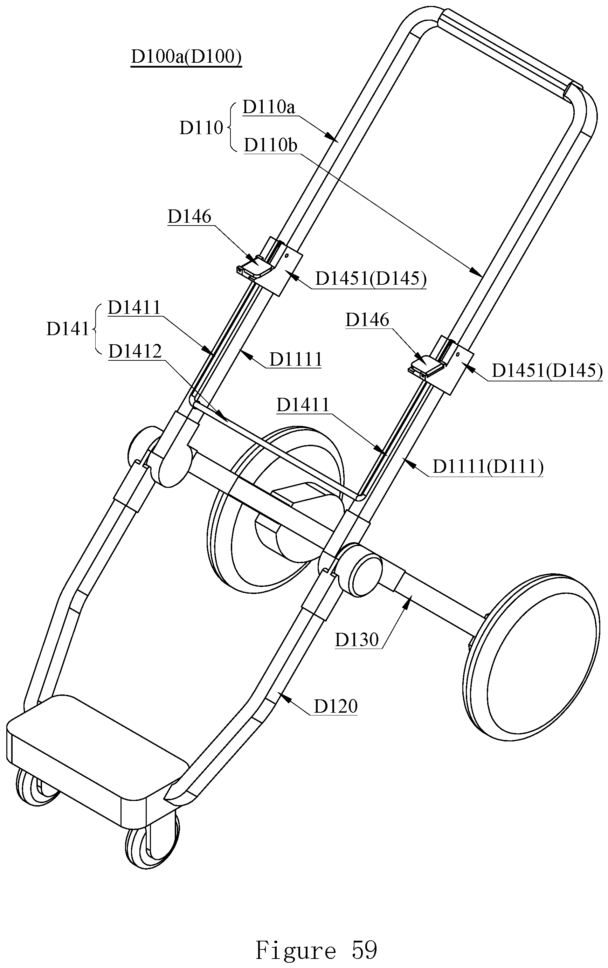

Furthermore, referring to Figures 55 to 59, the connecting part D145 is rotatably connected to the supporting member D141. The supporting member D141 has a use position and a storage position. The supporting member D141 includes two side rods D1411 and a connecting rod D1412 that is connected between the two side rods D1411. The ends of the two side rods D1411 are pivotally connected to the connecting part D145. The ends of the two side rods D1411 are pivotally connected to two connecting parts D145 respectively. The supporting member D141 is configured to support the pet carrier D200 when it is at the use position (as shown in Figure 55), and the pet carrier D200 can be placed on the supporting member D141. The supporting member D141 is stored in the groove D11122 of the first rod D111 when it is at the storage position (as shown in Figure 59). The supporting member D141 is substantially positioned in a horizontal plane when it is at the use position. The two side rods D1411 of the supporting member D141 extend along the left handle D110a and right handle D110b of the stroller D100 respectively and are positioned within the groove D11122 of the first rod D111, when the supporting member D141 is at the storage position.

Referring to an embodiment shown in Figures 55, 56, and 59, the groove D11122 extends in a length direction of the first rod D111 (the handle rod D1111 in this embodiment), and the connecting part D145 is located at an upper end of the handle D110 near the groove D11122. When the supporting member D141 is at the use position, the pet carrier D200 is positioned relatively close to an upper side of the handle D110. When the supporting member D141 is switched from the use position to the storage position, it rotates downward relative to the connecting part D145 until the side rods D1411 are positioned within the groove D11122 of the first rod D111 (as shown in Figure 59).

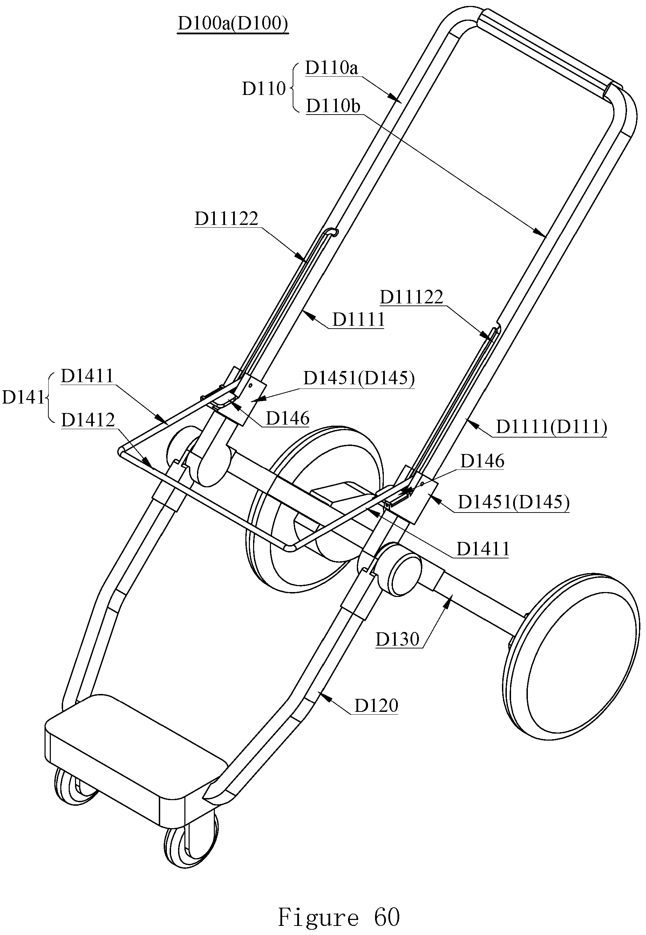

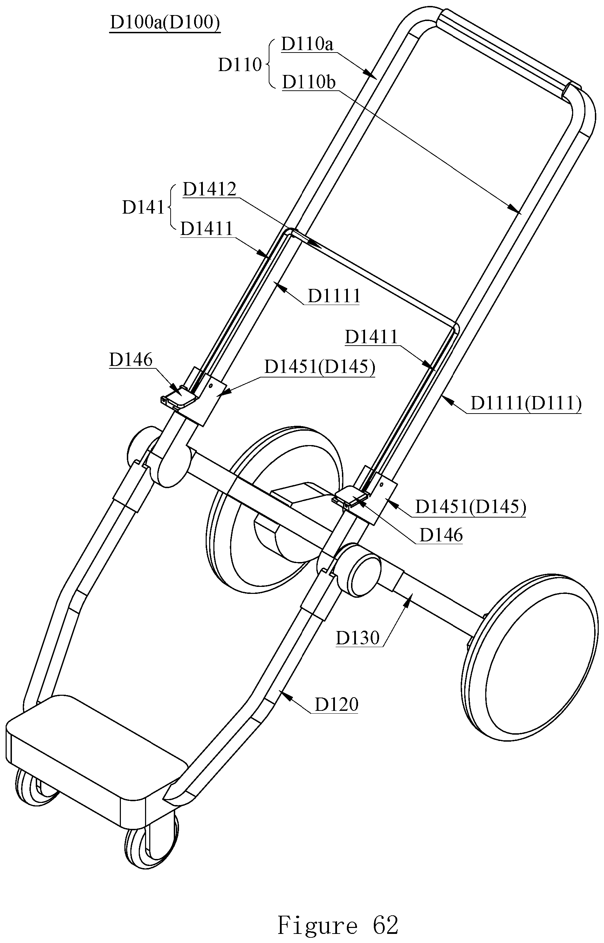

Referring to an embodiment shown in Figures 60 to 62, the groove D11122 extends in the length direction of the first rod D111, and the connecting part D145 is located at a lower end of the handle D110 near the groove D11122. When the supporting member D141 is at the use position, the pet carrier D200 is positioned relatively close to the lower side of the handle D110. When the supporting member D141 is switched from the use position to the storage position, it rotates upward relative to the connecting part D145 until the side rods D1411 are positioned within the groove D11122 of the first rod D111 (as shown in Figure 62).

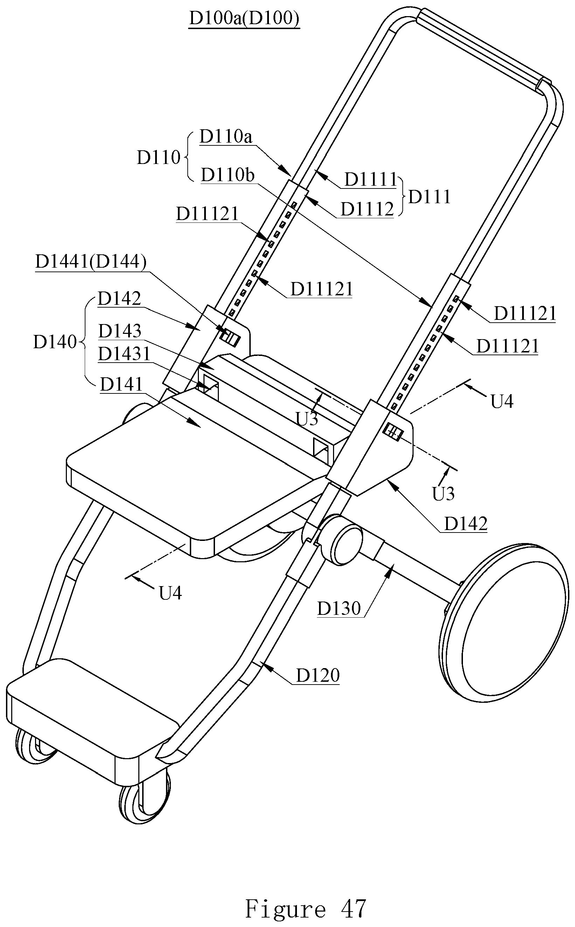

It should be noted that the connecting part D145 may slide along the first rod D111 by mating the actuating part D1441 with a plurality of holes D11121 of the sleeve rod D1112 as shown in the embodiment of Figure 47 above, in which case the connecting part D145 may also be referred to as a sliding base. Alternatively, the connecting part D145 is positioned at least at either the higher position shown in Figure 55 or the lower position shown in Figure 60, but is not limited thereto.

More specifically, the connecting part D145 includes a base body D1451. The limiting member D146 is movably connected to the base body D1451 and is movable relative to the base body D1451 between a closed position and an open position. When the limiting member D146 is at the closed position, the limiting member D146 can restrict movement of the supporting member D141 between the use position and the storage position. That is, when the limiting member D146 is at the closed position, the limiting member D146 is positioned in a movement path along which the supporting member D141 is switched between the use position and the storage position, thereby keeping the supporting member D141 at either the use position or the storage position. When the limiting member D146 is at the open position, the limiting member D146 allows movement of the supporting member D141 between the use position and the storage position. That is, when the limiting member D146 is at the open position, the limiting member D146 is removed from the movement path along which the supporting member D141 is switched between the use position and the storage position, allowing the supporting member D141 to switch between the open position and the closed position.

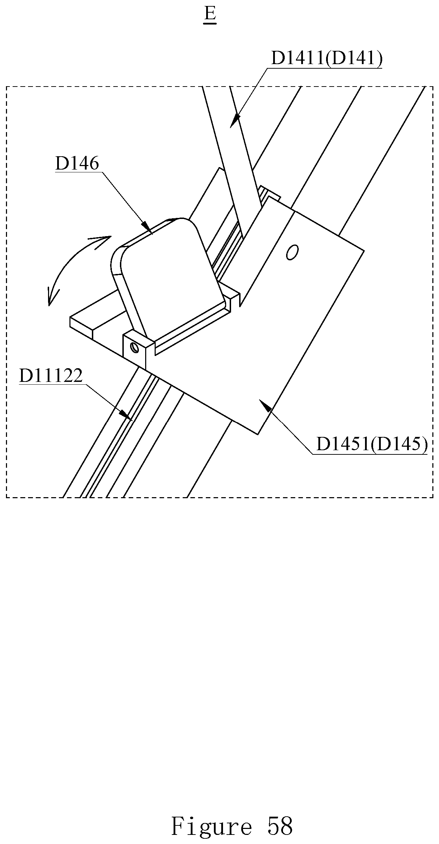

More specifically, the limiting member D146 is pivotally connected to the base body D1451. When the limiting member D146 is at the closed position, the limiting member D146 is substantially horizontal (as shown in Figures 55 and 56). When the limiting member D146 is at the open position, the limiting member D146 is substantially tilted or vertical (as shown in Figures 57 and 58). When the limiting member D146 is at the closed position and the pivotable supporting frame is at the use position, at least a portion of the supporting member D141 abuts against the limiting member D146. The supporting member D141 is kept in a horizontal state by the limiting member D146, so that the pet carrier D200 is supported by the supporting member D141.

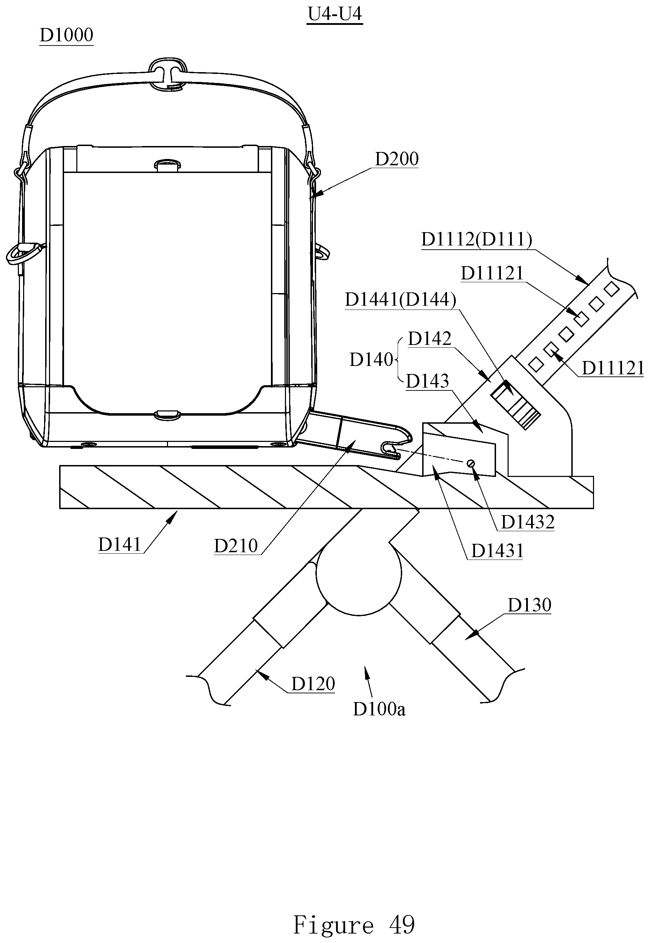

It should be noted that the supporting member D141 in this embodiment may be provided with a crossbar (not shown in the figures), which is configured to connect to the anchor D210 of the pet carrier D200. Alternatively, the carrying assembly D140 may further include a connection groove D1431 as shown in the embodiments of Figures 46 and 49, and an engagement member D1432 is disposed inside the connection groove D1431 and is configured for connecting with the anchor D210 of the pet carrier D200. Alternatively, the pet carrier D200 is connected to the supporting member D141 through an additional structure such as a fixing strap (not shown in the figures). These implementations are not limited thereto herein.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The present disclosure is to be considered as an exemplification of the principles of the invention and is not intended to limit the invention to the specific embodiments illustrated. In this respect, it is to be understood that the invention is not limited in its application to the details of construction and to the arrangements of components set forth above and below, illustrated in the drawings, or as described in the examples. Systems, methods and apparatuses consistent with the present disclosure are capable of other embodiments and of being practiced and carried out in various ways.

Although the invention has been described with respect to specific embodiments thereof, these embodiments are merely illustrative and not restrictive of the invention. In the description herein, numerous specific details are provided, such as examples of electronic components, electronic and structural connections, materials, and structural variations, to provide a thorough understanding of embodiments of the present disclosure. One skilled in the relevant art will recognize, however, that an embodiment of the invention can be practiced without one or more of the specific details, or with other apparatus, systems, assemblies, components, materials, parts, etc. In other instances, well-known structures, materials, or operations are not specifically shown or described in detail to avoid obscuring aspects of embodiments of the present disclosure. In addition, the various Figures are not drawn to scale and should not be regarded as limiting.

Reference throughout this specification to "one embodiment", "an embodiment", or a specific "embodiment" means that a particular feature, structure, or characteristic described in connection with the embodiment is included in at least one embodiment of the present disclosure and not necessarily in all embodiments, and further, are not necessarily referring to the same embodiment. Furthermore, the particular features, structures, or characteristics of any specific embodiment of the present disclosure may be combined in any suitable manner and in any suitable combination with one or more other embodiments, including the use of selected features without corresponding use of other features. In addition, many modifications may be made to adapt a particular application, situation or material to the essential scope and spirit of the present disclosure. It is to be understood that other variations and modifications of the embodiments of the present disclosure described and illustrated herein are possible in light of the teachings herein and are to be considered part of the spirit and scope of the present disclosure.

It will also be appreciated that one or more of the elements depicted in the Figures can also be implemented in a more separate or integrated manner, or even removed or rendered inoperable in certain cases, as may be useful in accordance with a particular application. Integrally formed combinations of components are also within the scope of the invention, particularly for embodiments in which a separation or combination of discrete components is unclear or indiscernible. In addition, use of the term "coupled" herein, including in its various forms such as "coupling" or "couplable", means and includes any direct or indirect electrical, structural or magnetic coupling, connection or attachment, or adaptation or capability for such a direct or indirect electrical, structural or magnetic coupling, connection or attachment, including integrally formed components and components which are coupled via or through another component.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated. In addition, every intervening sub-range within range is contemplated, in any combination, and is within the scope of the disclosure. For example, for the range of 5-10, the sub-ranges 5-6, 5-7, 5-8, 5-9, 6-7, 6-8, 6-9, 6-10, 7-8, 7-9, 7-10, 8-9, 8-10, and 9-10 are contemplated and within the scope of the disclosed range.

Furthermore, any signal arrows in the drawings/Figures should be considered only exemplary, and not limiting, unless otherwise specifically noted. Combinations of components of steps will also be considered within the scope of the present disclosure, particularly where the ability to separate or combine is unclear or foreseeable. The disjunctive term "or", as used herein and throughout the claims that follow, is generally intended to mean "and/or", having both conjunctive and disjunctive meanings (and is not confined to an "exclusive or" meaning), unless otherwise indicated. As used in the description herein and throughout the claims that follow, "a", "an", and "the" include plural references unless the context clearly dictates otherwise. Also as used in the description herein and throughout the claims that follow, the meaning of "in" includes "in" and "on" unless the context clearly dictates otherwise.

The foregoing description of illustrated embodiments of the present disclosure, including what is described in the summary or in the abstract, is not intended to be exhaustive or to limit the invention to the precise forms disclosed herein. From the foregoing, it will be observed that numerous variations, modifications and substitutions are intended and may be effected without departing from the spirit and scope of the novel concept of the invention. It is to be understood that no limitation with respect to the specific methods and apparatus illustrated herein is intended or should be inferred. It is, of course, intended to cover by the appended claims all such modifications as fall within the scope of the claims.

## Claims

1. An anchoring structure for an animal carrying device comprising a base and a body disposed on the base, the anchoring structure comprising:
a connection assembly movably connected to the base and having different locking portions; and
a locking mechanism connected to the connection assembly, and configured to be engaged with the different locking portions, so that the connection assembly is locked at one of a folded position and an unfolded position.

2. The anchoring structure according to claim 1, wherein the anchoring structure further comprises:
a first reset member connected to the connection assembly and the base and configured to switch the connection assembly to the unfolded position; and
wherein when the locking mechanism is operated, the connection assembly is switched from the folded position to the unfolded position under an action of the first reset member.

3. The anchoring structure according to claim 1, wherein the connection assembly is rotatably connected to the base, and an angle between the base and a rotation axis of the connection assembly around which the connection assembly rotates relative to the base is an acute angle or a right angle.

4. The anchoring structure according to claim 3, wherein the angle between the rotation axis of the connection assembly and the base is an acute angle, and
when the connection assembly is at the unfolded position, the connection assembly is inclined downward with respect to the base.

5. The anchoring structure according to claim 1, wherein the different locking portions comprise a first locking portion and a second locking portion, and the locking mechanism comprises:
a locking component movably disposed on the base and configured to be engaged with either the first locking portion or the second locking portion; and
an operation member disposed on the base and connected to the locking component, the operation member being capable of driving the locking component to move; and
wherein when the connection assembly is locked at the folded position, the operation member is operable to move the locking component, so that the locking component is disengaged from the first locking portion and is engaged with the second locking portion of the connection assembly to lock the connection assembly at the unfolded position.

6. The anchoring structure according to claim 5, wherein the locking component is provided with a locking protrusion, the first locking portion is a first locking recess provided on the connection assembly, and when the connection assembly is at the folded position, the locking protrusion is engaged with the first locking recess to lock the connection assembly at the folded position.

7. The anchoring structure according to claim 5, wherein the second locking portion is a second locking recess provided on the connection assembly, and when the connection assembly is at the unfolded position, the locking protrusion is configured to be engaged with the second locking recess for limiting in position, and an external force applied to the connection assembly causes the locking protrusion to disengage from the second locking recess.

8. The anchoring structure according to claim 7, wherein the base has an accommodation space, a folding space, and a through hole in communication with both the accommodation space and the folding space, the locking component is movably disposed in the accommodation space, and the connection assembly is pivotally connected to the base, and
wherein when the connection assembly is at the unfolded position, the connection assembly is accommodated within the folding space, and the locking protrusion passes through the through hole and is engaged with the second locking recess, and when the connection assembly is at the folded position, the connection assembly is accommodated in the folding space, and the locking protrusion passes through the through hole and is engaged with the first locking recess.

9. The anchoring structure according to claim 5, wherein the operation member is slidably disposed in the base, and the locking mechanism further comprises:
a linkage member movably connected to the base; and
a first traction assembly;
wherein the linkage member is movably connected to the operation member and connected to the locking component via the first traction assembly; and
wherein the operation member drives the linkage member to move when the operation member moves relative to the base, and the linkage member drives the movement of the locking component through the first traction assembly.

10. The anchoring structure according to claim 9, wherein the linkage member comprises a connection arm, a traction arm, and a pivot portion located between the connection arm and the traction arm,
the pivot portion is pivotally connected to the base,
the connection arm is movably connected to the operation member,
the traction arm is connected to the first traction assembly, and
an extension direction of the connection arm is not parallel to an extension direction of the traction arm.

11. The anchoring structure according to claim 9, wherein the first traction assembly comprises a first traction member and a first sheath sleeved on the first traction member, and the first traction member has an end connected to the linkage member, and another end connected to the locking component, and
wherein the base is provided with a guide structure, and at least a portion of the first traction assembly is arranged along the guide structure to change movement directions of both ends of the first traction member.

12. The anchoring structure according to claim 5, wherein the locking component is movable between a locking position and an unlocking position, and
wherein when the locking component is at the locking position, the locking component is engaged with the first locking portion to lock the connection assembly at the folded position, or
when the locking component is at the locking position, the locking component is engaged with the second locking portion to lock the connection assembly at the unfolded position.

13. The anchoring structure according to claim 12, wherein the locking mechanism further comprises:
a second reset member abutting against the locking component to move the locking component toward the locking position; and
a third reset member connected between the operation member and the base, and providing an elastic restoring force for the operation member to allow the operation member to return to an initial position.

14. The anchoring structure according to claim 5, wherein the connection assembly is connected to the operation member via a second traction assembly and has a locked state in which the connection assembly can be locked with an anchor bar provided in a vehicle seat and an unlocked state in which the connection assembly is separable from the anchor bar, and
wherein when the connection assembly is in the locked state, the operation member can drive the connection assembly to switch from the locked state to the unlocked state through the second traction assembly.

15. The anchoring structure according to claim 14, wherein the locking mechanism further comprises a linkage member pivotally connected to the base, and the linkage member is movably connected to the operation member,
wherein the second traction assembly comprises a second traction member and a second sheath sleeved on the second traction member, and
wherein the second traction member has an end detachably connected to the linkage member, and another end connected to the connection assembly.

16. The anchoring structure according to claim 15, wherein the locking component is provided with a limiting channel for the second traction member to pass through, the limiting channel extends through the locking component in a movement direction of the locking component, and the second traction member passes through the limiting channel and the through hole of the base and extends into the folding space of the base, thereby connecting to the connection assembly.

17. An anchoring structure for an animal carrying device including a base and a body disposed on the base, the anchoring structure comprising:
a connection assembly movably connected to the base and switchable between different positions; and
a locking mechanism connected to the connection assembly and having an operation member; and
wherein when the operation member is operated, the connection assembly makes different action responses corresponding to different positions of the connection assembly.

18. The anchoring structure according to claim 17, wherein the different positions comprise a folded position and an unfolded position, and the connection assembly has a locked state in which the connection assembly can be locked with an anchor bar provided in a vehicle seat and an unlocked state in which the connection assembly is separable from the anchor bar;
wherein when the operation member is operated with the connection assembly being at the folded position, the connection assembly is switched from the folded position to the unfolded position; and
wherein when the operation member is operated with the connection assembly being at the unfolded position, the connection assembly is switched from the locked state to the unlocked state or is kept in the unlocked state.

19. An animal carrying device comprising:
a base;
a body disposed on the base and forming a carrying space together with the base; and
the anchoring structure according to any one of claims 1 to 18.

20. A support assembly for mounting on a frame, the support assembly comprising:
a support frame configured to support a carrier and provided with a connection groove, the connection groove being configured to receive an anchoring assembly of the carrier; and
an engagement member disposed on the support frame, at least partially received within the connection groove, and configured to be engaged with the anchoring assembly so as to at least partially lock the anchoring assembly within the connection groove.

21. The support assembly according to claim 20, wherein the engagement member is an engagement pin, the engagement pin passes through the support frame, and the anchoring assembly is provided with an engaging hook configured to be engaged with the engagement pin, and
wherein an extension direction of the engagement pin is perpendicular to an insertion direction in which the anchoring assembly is inserted into the connection groove.

22. The support assembly according to claim 20, wherein the support frame has a support plane, and an angle between the support plane and an insertion direction in which the anchoring assembly is inserted into the connection groove is an obtuse angle.

23. A support assembly for mounting on a frame provided with a connection base, the support assembly comprising:
a support frame provided with a mounting base configured to be engaged with the connection base; and
a locking mechanism comprising a locking member, the locking member being movably disposed on one of the mounting base and the connection base and movable relative thereto in a first direction, so as to allow the locking member to switch between a locking position and an unlocking position, wherein when the locking member is at the locking position, the locking member is engaged with the other of the mounting base and the connection base to restrict the mounting base from being separated from the connection base, and
wherein an engagement direction in which the mounting base engages with the connection base is not parallel to the first direction.

24. The support assembly according to claim 23, wherein the locking member is provided with a limiting protrusion portion,
wherein the other of the mounting base and the connection base is provided with a locking hole, when the locking member is at the locking position, the locking portion is configured to pass through a pass-through channel provided on the mounting base and at least partially extend into the locking hole, and when the locking member is at the unlocking position, the locking portion retracts from the locking hole, and
wherein the limiting protrusion portion is limited within the mounting base and is provided with a sliding groove, and the mounting base is provided with a guide protrusion that is slidably fitted with the sliding groove.

25. The support assembly according to claim 24, wherein the locking mechanism comprises a first locking mechanism and a second locking mechanism, the locking member of the first locking mechanism is movably disposed on the mounting base, and the locking member of the second locking mechanism is movably disposed on the connection base.

26. The support assembly according to claim 23, wherein the locking mechanism further comprises a release member operable, and movable relative to the mounting base in a second direction,
wherein one of the release member and the locking member is provided with a driving pin, the other of the release member and the locking member is provided with a driving inclined slot, and the driving pin passes through the driving inclined slot and is movable in an extension direction of the driving inclined slot, and
wherein the extension direction of the driving inclined slot is not parallel to both the first direction and the second direction, and the first direction is not parallel to the second direction.

27. A wheeled mobile device comprising a frame and the support assembly according to any one of claims 20 to 26.

28. The wheeled mobile device according to claim 27, further comprising a storage device mounted on the frame, the storage device comprising a first storage rack configured to be connected to the frame,
wherein the first storage rack comprises a first storage member and a cover, the first storage member being hollow for storing a to-be-taken object, and provided with a first opening and a second opening, the cover being movably disposed at the first opening, such that the cover has a first use position and a second use position,
wherein when the cover is at the first use position, the cover covers the first opening,
wherein when the cover is at the second use position, the first opening is exposed, allowing a user to place the to-be-taken object inside, and
wherein the second opening is configured for a portion of an edge of the to-be-taken object to extend therethrough, so as to facilitate being pulled by a user.

29. The wheeled mobile device according to claim 28, wherein a side wall of the first storage member is provided with a first engagement portion, and
wherein the cover comprises a pivot portion and a second engagement portion and is pivotally connected to the first storage rack via the pivot portion, and when the cover is pivoted to the first use position, the second engagement portion is engaged with the first engagement portion, restricting the cover from switching to the second use position.

30. The wheeled mobile device according to claim 28, wherein the first opening and the second opening are arranged opposite to each other, with the second opening facing ground, and/or
wherein the first storage rack further comprises a second storage member being hollow and having a third opening, an edge of a wall of the third opening being provided with a first limiting baffle.
